# EUROPEAN PATENT SPECIFICATION

(11) **EP 4 134 537 B1**
(45) Date of publication and mention of the grant of the patent: **04.06.2025**
(21) Application number: 21785657.4
(22) Date of filing: 06.04.2021
(51) Int. Cl.: F02D 45/00, F02D 41/22, F02D 41/14

(54) **VEHICLE**
FAHRZEUG
VÉHICULE

(30) Priority: 07.04.2020 WO PCT/JP2020/015733
(43) Date of publication of application: 15.02.2023
(73) Proprietor: Yamaha Hatsudoki Kabushiki Kaisha, Iwata-shi, Shizuoka 438-8501 (JP)
(72) Inventor: ABE, Katsuhisa, Iwata-shi, Shizuoka 438-8501 (JP); AOYAMA, Tatsuya, Iwata-shi, Shizuoka 438-8501 (JP)
(74) Representative: Stöckeler, Ferdinand
(86) International application number: PCT/JP2021/014639
(87) International publication number: WO 2021/206091

(56) References cited:
- JP-A- H08 177 575
- JP-A- H10 110 646
- JP-B2- 4 101 133
- US-A1- 2008 196 702
- US-A1- 2009 182 490
- US-B1- 6 539 784
- US-B2- 7 574 905
- US-B2- 9 932 938

## Description

### [Technical Field]

The present teaching relates to a vehicle including an oxygen sensor which is configured to detect the oxygen concentration in exhaust gas.

### [Background Art]

An oxygen sensor configured to detect the oxygen concentration in exhaust gas exhausted from a combustion chamber of an engine has been known. In addition to this, there has been a vehicle including such an oxygen sensor and an engine. The responsiveness of the oxygen sensor decreases due to the deterioration of the oxygen sensor. A technology for diagnosing such deterioration of an oxygen sensor has been proposed. For example, a controller recited in each of Patent Literature 1 and Patent Literature 2 is configured to diagnose the deterioration of an oxygen sensor by comparing a response time of the oxygen sensor obtained from a signal of the oxygen sensor with a threshold. The controller of Patent Literature 1 diagnoses the deterioration of the oxygen sensor by using a threshold that is varied in accordance with an engine rotation speed, while fuel cut control is being performed so that supply of fuel to a combustion chamber is temporarily stopped. The controller of Patent Literature 2 diagnoses the deterioration of the oxygen sensor by using a threshold that is varied in accordance with an engine rotation speed, while active fuel control that is different from normal fuel control is being performed for the diagnosis of deterioration of the oxygen sensor. Another oxygen sensor diagnosis using a dither signal is disclosed by US 2009/182490 A1.

### [Citation List]

### [Patent Literatures]

[Patent Literature 1] Japanese Laid-Open Patent Publication No. H04-016757
[Patent Literature 2] Japanese Laid-Open Patent Publication No. 2005-337089

### [Summary]

### [Technical Problem]

When the technology of Patent Literature 1 by which the deterioration of the oxygen sensor is diagnosed while the fuel cut control is being performed is applied to a controller of a vehicle, it is difficult to attain improvement in frequency of diagnosis of deterioration of the oxygen sensor and maintenance of drivability of the vehicle at the same time. In normal fuel control, fuel cut control is performed only under limited conditions. On this account, if the deterioration of an oxygen sensor is diagnosed while the fuel cut control of the normal fuel control is being performed, the frequency of the diagnosis is low. Meanwhile, if the deterioration of the oxygen sensor is diagnosed while the fuel cut control is being performed in active fuel control that is performed for the diagnosis of deterioration of the oxygen sensor, the frequency of the diagnosis might be improved but the drivability is influenced. Moreover, the frequency of the diagnosis is unlikely to be improved because it is difficult to do so.

When the technology of Patent Literature 2 by which the deterioration of the oxygen sensor is diagnosed while the active fuel control for the diagnosis of deterioration of the oxygen sensor is being performed is applied to a controller of a vehicle, it is difficult to attain improvement in frequency of diagnosis of deterioration of the oxygen sensor and maintenance of drivability of the vehicle at the same time, for the reason below. When the active fuel control for the diagnosis of deterioration of the oxygen sensor is fuel control by which the frequency of diagnosis is improved, the drivability is influenced. Meanwhile, when the active fuel control for the diagnosis of deterioration of the oxygen sensor is fuel control that is less likely to influence on the drivability on account of, for example, adjustment of an ignition timing, it is difficult to improve the frequency of diagnosis.

An object of the present teaching is to provide a vehicle in which improvement in frequency of diagnosis of deterioration of an oxygen sensor and maintenance of the drivability of the vehicle are achieved at the same time.

### [Solution to Problem]

A vehicle of an embodiment of the present teaching has the following features.

The vehicle comprises: an engine which includes at least one combustion chamber; an oxygen sensor which is provided at an exhaust passage member through which exhaust gas exhausted from the at least one combustion chamber passes and which is configured to detect oxygen concentration in the exhaust gas; a fuel supplier which is configured to supply fuel to the at least one combustion chamber; and a controller which is configured to perform an oxygen sensor diagnosis process of diagnosing deterioration of the oxygen sensor based on a signal of the oxygen sensor and is configured to perform fuel control of controlling a fuel amount supplied to the at least one combustion chamber by controlling the fuel supplier.

When the fuel control of controlling the fuel amount supplied to the at least one combustion chamber for diagnosing the deterioration of the oxygen sensor is termed oxygen sensor diagnosis active fuel control and the fuel control of controlling the fuel amount supplied to the at least one combustion chamber not for diagnosing the deterioration of the oxygen sensor is termed normal fuel control, the controller is configured to perform the oxygen sensor diagnosis process to satisfy at least one of relationships 1 to 4 while the normal fuel control that is not the oxygen sensor diagnosis active fuel control is performed and fuel cut control of temporarily stopping supply of the fuel to the at least one combustion chamber is not performed,
the relationship 1 being arranged so that, in at least part of a low-rotation range in which the engine rotation speed is low, the controller diagnoses that the oxygen sensor is normal when a first response time that is a time required for a change of a signal of the oxygen sensor by a unit amount is equal to a first low-rotation response time, and the controller diagnoses that the oxygen sensor is deteriorated when the first response time is equal to a second low-rotation response time that is longer than the first low-rotation response time, and in at least part of a high-rotation range in which the engine rotation speed is high, the controller diagnoses that the oxygen sensor is normal when the first response time is equal to a first high-rotation response time that is longer than the second low-rotation response time, and the controller diagnoses that the oxygen sensor is deteriorated when the first response time is equal to a second high-rotation response time that is longer than the first high-rotation response time,
the relationship 2 being arranged so that, in at least part of the high-rotation range in which the engine rotation speed is high, the controller diagnoses that the oxygen sensor is normal when a second response time that is a time required for a change of a signal of the oxygen sensor by a unit amount is equal to a third high-rotation response time, and the controller diagnoses that the oxygen sensor is deteriorated when the second response time is equal to a fourth high-rotation response time that is longer than the third high-rotation response time, and in at least part of the low-rotation range in which the engine rotation speed is low, the controller diagnoses that the oxygen sensor is normal when the second response time is equal to a third low-rotation response time that is longer than the fourth high-rotation response time, and the controller diagnoses that the oxygen sensor is deteriorated when the second response time is equal to a fourth low-rotation response time that is longer than the third low-rotation response time,
the relationship 3 being arranged so that, in at least part of a low-load range in which the engine load is low, the controller diagnoses that the oxygen sensor is normal when a third response time that is a time required for a change of a signal of the oxygen sensor by a unit amount is equal to a first low-load response time, and the controller diagnoses that the oxygen sensor is deteriorated when the third response time is equal to a second low-load response time that is longer than the first low-load response time, and in at least part of a high-load range in which the engine load is high, the controller diagnoses that the oxygen sensor is normal when the third response time is equal to a first high-load response time that is longer than the second low-load response time, and the controller diagnoses that the oxygen sensor is deteriorated when the third response time is equal to a second high-load response time that is longer than the first high-load response time, and
the relationship 4 being arranged so that, in at least part of the high-load range in which the engine load is high, the controller diagnoses that the oxygen sensor is normal when a fourth response time that is a time required for a change of a signal of the oxygen sensor by a unit amount is equal to a third high-load response time, and the controller diagnoses that the oxygen sensor is deteriorated when the fourth response time is equal to a fourth high-load response time that is longer than the third high-load response time, and in at least part of the low-load range in which the engine load is low, the controller diagnoses that the oxygen sensor is normal when the fourth response time is equal to a third low-load response time that is longer than the fourth high-load response time, and the controller diagnoses that the oxygen sensor is deteriorated when the fourth response time is equal to a fourth low-load response time that is longer than the third low-load response time.

The responsiveness of the oxygen sensor varies in accordance with the engine rotation speed and/or the engine load. In other words, the response time required for the change of the signal of the oxygen sensor by the unit amount varies in accordance with the engine rotation speed and/or the engine load. When the controller performs the oxygen sensor diagnosis process to satisfy the relationship 1 or 2, the controller performs a diagnosis of the deterioration of the oxygen sensor by a diagnosis method that is varied in accordance with the engine rotation speed. It is therefore possible to keep up with changes in the responsiveness of the oxygen sensor in accordance with the engine rotation speed. When the controller performs the oxygen sensor diagnosis process to satisfy the relationship 3 or 4, the controller performs a diagnosis of the deterioration of the oxygen sensor by a diagnosis method that is varied in accordance with the engine load. It is therefore possible to keep up with changes in the responsiveness of the oxygen sensor in accordance with the engine load.

Because the normal fuel control is fuel control which is not for the oxygen sensor diagnosis process, the driving range (rotation range and load range) in which the normal fuel control is performed is wide. In this connection, the driving range in which the normal fuel control is performed and the fuel cut control is not performed is identical with the driving range in which the normal fuel control is performed. Even when the driving range in which the normal fuel control is performed is wide, if the diagnosis method is not changed in accordance with the engine rotation speed and/or the engine load, diagnosis with secured diagnosis accuracy is possible only in a narrow range within the wide driving range in which the normal fuel control is performed. In this regard, the controller executes the oxygen sensor diagnosis process to satisfy at least one of the relationships 1 to 4 while the normal fuel control that is not the oxygen sensor diagnosis active fuel control is performed and fuel cut control is not performed. When the controller performs the oxygen sensor diagnosis process to satisfy the relationship 1 or 2, the controller performs diagnoses by a diagnosis method changed at least in accordance with the engine rotation speed, while the normal fuel control is performed and the fuel cut control is not performed. On this account, the controller is able to perform diagnosis with secured diagnosis accuracy in a wide rotation range including at least part of the high-rotation range and at least part of the low-rotation range, while the normal fuel control that is not the oxygen sensor diagnosis active fuel control is performed and fuel cut control is not performed. On this account, the frequency of the diagnosis of deterioration of the oxygen sensor can be increased. When the controller performs the oxygen sensor diagnosis process to satisfy the relationship 3 or 4, the controller performs diagnoses by a diagnosis method changed at least in accordance with the engine load, while the normal fuel control is performed and the fuel cut control is not performed. On this account, the controller is able to perform diagnosis with secured diagnosis accuracy in a wide load range including at least part of the high-load range and at least part of the low-load range, while the normal fuel control that is not the oxygen sensor diagnosis active fuel control is performed and fuel cut control is not performed. On this account, the frequency of the diagnosis of deterioration of the oxygen sensor can be increased.

The controller diagnoses the deterioration of the oxygen sensor while the normal fuel control that is not the oxygen sensor diagnosis active fuel control is performed and fuel cut control is not performed. On this account, the drivability of the vehicle is less influenced as compared to a case where the deterioration of the oxygen sensor is diagnosed while the normal fuel control that is not the oxygen sensor diagnosis active fuel control is performed and fuel cut control is not performed. Furthermore, the frequency of the diagnosis of deterioration of the oxygen sensor is increased as compared to a case where the deterioration of the oxygen sensor is diagnosed while the normal fuel control is performed and fuel cut control is performed. Furthermore, the drivability of the vehicle is less influenced as compared to a case where the deterioration of the oxygen sensor is diagnosed while the oxygen sensor diagnosis active fuel control with which the frequency of diagnosis is increased is performed. Furthermore, the frequency of the diagnosis of deterioration of the oxygen sensor is increased as compared to a case where the deterioration of the oxygen sensor is diagnosed while the oxygen sensor diagnosis active fuel control with which an influence on the drivability of the vehicle is suppressed is performed.

Consequently, in the present teaching, improvement in frequency of diagnosis of deterioration of an oxygen sensor and maintenance of the drivability of the vehicle are achieved at the same time.

A vehicle of an embodiment of the present teaching may have the following features.

The vehicle includes a catalyst which is provided in the exhaust passage member and is configured to purify the exhaust gas.

The oxygen sensor is an upstream oxygen sensor that is provided upstream of the catalyst in a flow direction of the exhaust gas in the exhaust passage member and is used for the fuel control.

Because the upstream oxygen sensor is used for the fuel control, this sensor is highly related to the drivability of the vehicle. The present teaching is suitable for the diagnosis of deterioration of the upstream oxygen sensor that is highly related to the drivability.

A vehicle of an embodiment of the present teaching may have the following features.

The vehicle includes at least one throttle valve provided for each of the at least one combustion chamber.

In an independent-throttle engine unit having at least one throttle valve for each of at least one combustion chamber, a driving range in which normal fuel control is performed is wide as compared to a collective-throttle engine unit having one surge tank and at least one throttle valve for plural combustion chambers. Because the driving range in which the normal fuel control is performed is wide, the frequency of diagnosis of deterioration of the oxygen sensor is further effectively increased as compared to a case where the diagnosis method is not changed in accordance with the engine rotation speed and/or the engine load. On this account, the frequency of the diagnosis of deterioration of the oxygen sensor can be further effectively improved as compared to the case of the collective-throttle engine unit. To put it differently, in the vehicle having the collective-throttle engine unit, the degree of increase in the frequency of diagnosis is advantageously higher than the degree of increase in the frequency of diagnosis when the method of diagnosis is changed in accordance with the engine rotation speed and/or the engine load.

A vehicle of an embodiment of the present teaching may have the following features.

The controller is configured to perform the oxygen sensor diagnosis process to satisfy at least one of relationships 5 to 12 while the normal fuel control that is not the oxygen sensor diagnosis active fuel control is performed and fuel cut control of temporarily stopping supply of the fuel to the at least one combustion chamber is not performed,
the relationship 5 being arranged so that, in at least part of the low-rotation range, the controller diagnoses that the oxygen sensor is normal when the first response time is equal to the first low-rotation response time, and the controller diagnoses that the oxygen sensor is deteriorated when the first response time is equal to the second low-rotation response time that is longer than the first low-rotation response time, in at least part of a first high-rotation range included in the high-rotation range, the controller diagnoses that the oxygen sensor is normal when the first response time is equal to the first high-rotation response time that is longer than the second low-rotation response time, and the controller diagnoses that the oxygen sensor is deteriorated when the first response time is equal to the second high-rotation response time that is longer than the first high-rotation response time, and in at least part of a second high-rotation range that is higher in engine rotation speed than the first high-rotation range and is included in the high-rotation range, the controller diagnoses that the oxygen sensor is normal when the first response time is equal to a fifth high-rotation response time that is longer than the second low-rotation response time, and the controller diagnoses that the oxygen sensor is deteriorated when the first response time is equal to a sixth high-rotation response time that is longer than the fifth high-rotation response time,
the relationship 6 being arranged so that, in at least part of a first low-rotation range included in the low-rotation range, the controller diagnoses that the oxygen sensor is normal when the first response time is equal to the first low-rotation response time, and the controller diagnoses that the oxygen sensor is deteriorated when the first response time is equal to the second low-rotation response time that is longer than the first low-rotation response time, in at least part of a second low-rotation range that is higher in engine rotation speed than the first low-rotation range and is included in the low-rotation range, the controller diagnoses that the oxygen sensor is normal when the first response time is equal to a fifth low-rotation response time that is longer than the second low-rotation response time, and the controller diagnoses that the oxygen sensor is deteriorated when the first response time is equal to a sixth low-rotation response time that is longer than the fifth low-rotation response time, and in at least part of the high-rotation range, the controller diagnoses that the oxygen sensor is normal when the first response time is equal to the first high-rotation response time that is longer than the sixth low-rotation response time, and the controller diagnoses that the oxygen sensor is deteriorated when the first response time is equal to the second high-rotation response time that is longer than the first high-rotation response time,
the relationship 7 being arranged so that, in at least part of the high-rotation range, the controller diagnoses that the oxygen sensor is normal when the second response time is equal to the third high-rotation response time, and the controller diagnoses that the oxygen sensor is deteriorated when the second response time is equal to the fourth high-rotation response time that is longer than the third high-rotation response time, in at least part of a third low-rotation range included in the low-rotation range, the controller diagnoses that the oxygen sensor is normal when the second response time is equal to the third low-rotation response time that is longer than the fourth high-rotation response time, and the controller diagnoses that the oxygen sensor is deteriorated when the second response time is equal to the fourth low-rotation response time that is longer than the third low-rotation response time, and in at least part of a fourth low-rotation range that is lower in engine rotation speed than the third low-rotation range and is included in the low-rotation range, the controller diagnoses that the oxygen sensor is normal when the second response time is equal to a seventh low-rotation response time that is longer than the fourth low-rotation response time, and the controller diagnoses that the oxygen sensor is deteriorated when the second response time is equal to an eighth low-rotation response time that is longer than the seventh low-rotation response time,
the relationship 8 being arranged so that, in at least part of a third high-rotation range included in the high-rotation range, the controller diagnoses that the oxygen sensor is normal when the second response time is equal to the third high-rotation response time, and the controller diagnoses that the oxygen sensor is deteriorated when the second response time is equal to the fourth high-rotation response time that is longer than the third high-rotation response time, in at least part of a fourth high-rotation range that is lower in engine rotation speed than the third high-rotation range and is included in the high-rotation range, the controller diagnoses that the oxygen sensor is normal when the second response time is equal to a seventh high-rotation response time that is longer than the fourth high-rotation response time, and the controller diagnoses that the oxygen sensor is deteriorated when the second response time is equal to an eighth high-rotation response time that is longer than the seventh high-rotation response time, and in at least part of the low-rotation range, the controller diagnoses that the oxygen sensor is normal when the second response time is equal to the third low-rotation response time that is longer than the eighth high-rotation response time, and the controller diagnoses that the oxygen sensor is deteriorated when the second response time is equal to the fourth low-rotation response time that is longer than the third low-rotation response time,
the relationship 9 being arranged so that, in at least part of the low-load range, the controller diagnoses that the oxygen sensor is normal when the third response time is equal to the first low-load response time, and the controller diagnoses that the oxygen sensor is deteriorated when the third response time is equal to the second low-load response time that is longer than the first low-load response time, in at least part of a first high-load range included in the high-load range, the controller diagnoses that the oxygen sensor is normal when the third response time is equal to the first high-load response time that is longer than the second low-load response time, and the controller diagnoses that the oxygen sensor is deteriorated when the third response time is equal to the second high-load response time that is longer than the first high-load response time, and in at least part of a second high-load range that is higher in engine load than the first high-load range and is included in the high-load range, the controller diagnoses that the oxygen sensor is normal when the third response time is equal to a fifth high-load response time that is longer than the second low-load response time, and the controller diagnoses that the oxygen sensor is deteriorated when the third response time is equal to a sixth high-load response time that is longer than the fifth high-load response time,
the relationship 10 being arranged so that, in at least part of a low-load range included in the low-load range, the controller diagnoses that the oxygen sensor is normal when the third response time is equal to the first low-load response time, and the controller diagnoses that the oxygen sensor is deteriorated when the third response time is equal to the second low-load response time that is longer than the first low-load response time, in at least part of a second low-load range that is higher in engine load than the first low-load range and is included in the low-load range, the controller diagnoses that the oxygen sensor is normal when the third response time is equal to a fifth low-load response time that is longer than the second low-load response time, and the controller diagnoses that the oxygen sensor is deteriorated when the third response time is equal to a sixth low-load response time that is longer than the fifth low-load response time, and in at least part of the high-load range, the controller diagnoses that the oxygen sensor is normal when the third response time is equal to the first high-load response time that is longer than the sixth low-load response time, and the controller diagnoses that the oxygen sensor is deteriorated when the third response time is equal to the second high-load response time that is longer than the first high-load response time,
the relationship **11** being arranged so that, in at least part of the high-load range, the controller diagnoses that the oxygen sensor is normal when the fourth response time is equal to the third high-load response time, and the controller diagnoses that the oxygen sensor is deteriorated when the fourth response time is equal to the fourth high-load response time that is longer than the third high-load response time, in at least part of a third low-load range included in the low-load range, the controller diagnoses that the oxygen sensor is normal when the fourth response time is equal to the third low-load response time that is longer than the fourth high-load response time, and the controller diagnoses that the oxygen sensor is deteriorated when the fourth response time is equal to the fourth low-load response time that is longer than the third low-load response time, and in at least part of a fourth low-load range which is lower in engine load than the third low-load range and included in the low-load range, the controller diagnoses that the oxygen sensor is normal when the fourth response time is equal to a seventh low-load response time that is longer than the fourth low-load response time, and the controller diagnoses that the oxygen sensor is deteriorated when the fourth response time is equal to an eighth low-load response time that is longer than the seventh low-load response time, and
the relationship 12 being arranged so that, in at least part of a third high-load range included in the high-load range, the controller diagnoses that the oxygen sensor is normal when the fourth response time is equal to the third high-load response time, and the controller diagnoses that the oxygen sensor is deteriorated when the fourth response time is equal to the fourth high-load response time that is longer than the third high-load response time, in at least part of a fourth high-load range which is lower in engine load than the third high-load range and included in the high-load range, the controller diagnoses that the oxygen sensor is normal when the fourth response time is equal to a seventh high-load response time that is longer than the fourth high-load response time, and the controller diagnoses that the oxygen sensor is deteriorated when the fourth response time is equal to an eighth high-load response time that is longer than the seventh high-load response time, and in at least part of the low-load range, the controller diagnoses that the oxygen sensor is normal when the fourth response time is equal to the third low-load response time that is longer than the eighth high-load response time, and the controller diagnoses that the oxygen sensor is deteriorated when the fourth response time is equal to a fourth low-load response time that is longer than the third low-load response time.

When the controller performs the oxygen sensor diagnosis process to satisfy at least one of the relationships 5 to 8, the diagnosis method is changed to more finely keep up with changes in the responsiveness of the oxygen sensor in accordance with the engine rotation speed. Furthermore, the controller performs the oxygen sensor diagnosis process while the normal fuel control that is not the oxygen sensor diagnosis active fuel control is performed and fuel cut control is not performed. On this account, the accuracy of the diagnosis is secured in a wider rotation range. The frequency of the diagnosis of deterioration of the oxygen sensor can therefore be further increased.

When the controller performs the oxygen sensor diagnosis process to satisfy at least one of the relationships 9 to 12, the diagnosis method is changed to more finely keep up with changes in the responsiveness of the oxygen sensor in accordance with the engine load. Furthermore, the controller performs the oxygen sensor diagnosis process while the normal fuel control that is not the oxygen sensor diagnosis active fuel control is performed and fuel cut control is not performed. On this account, the accuracy of the diagnosis is secured in a wider load range. The frequency of the diagnosis of deterioration of the oxygen sensor can therefore be further increased.

A vehicle of an embodiment of the present teaching may have the following features.

At least one of the first response time of the relationship 1, the second response time of the relationship 2, the third response time of the relationship 3, or the fourth response time of the relationship 4 is a time required for a change of the signal of the oxygen sensor by the unit amount when the signal of the oxygen sensor is on rise.

A vehicle of an embodiment of the present teaching may have the following features.

At least one of the first response time of the relationship 1, the second response time of the relationship 2, the third response time of the relationship 3, or the fourth response time of the relationship 4 is a time required for a change of the signal of the oxygen sensor by the unit amount when the signal of the oxygen sensor is on decline.

A vehicle of an embodiment of the present teaching may have the following features.

The controller is configured to perform the oxygen sensor diagnosis process to satisfy at least one of relationships 13 to 18 while the normal fuel control that is not the oxygen sensor diagnosis active fuel control is performed and fuel cut control of temporarily stopping supply of the fuel to the at least one combustion chamber is not performed,
the relationship 13 being arranged so that, in a first load range which is either at least part of the low-load range in which the engine load is low or at least part of the high-load range in which the engine load is high and in at least part of the low-rotation range, the controller diagnoses that the oxygen sensor is normal when the first response time is equal to the first low-rotation response time, and the controller diagnoses that the oxygen sensor is deteriorated when the first response time is equal to the second low-rotation response time that is longer than the first low-rotation response time, and in the first load range and at least part of the high-rotation range, the controller diagnoses that the oxygen sensor is normal when the first response time is equal to the first high-rotation response time that is longer than the second low-rotation response time, and the controller diagnoses that the oxygen sensor is deteriorated when the first response time is equal to the second high-rotation response time that is longer than the first high-rotation response time,
the relationship **14** being arranged so that, in a second load range which is either at least part of the low-load range in which the engine load is low or at least part of the high-load range in which the engine load is high and in at least part of the high-rotation range, the controller diagnoses that the oxygen sensor is normal when the second response time is equal to the third high-rotation response time, and the controller diagnoses that the oxygen sensor is deteriorated when the second response time is equal to the fourth high-rotation response time that is longer than the third high-rotation response time, and in the second load range and at least part of the low-rotation range, the controller diagnoses that the oxygen sensor is normal when the second response time is equal to the third low-rotation response time that is longer than the fourth high-rotation response time, and the controller diagnoses that the oxygen sensor is deteriorated when the second response time is equal to the fourth low-rotation response time that is longer than the third low-rotation response time,
the relationship 15 being arranged so that, in a first rotation range which is either at least part of the low-rotation range in which the engine rotation speed is low or at least part of the high-rotation range in which the engine rotation speed is high and in at least part of the low-load range, the controller diagnoses that the oxygen sensor is normal when the third response time is equal to the first low-load response time, and the controller diagnoses that the oxygen sensor is deteriorated when the third response time is equal to the second low-load response time that is longer than the first low-load response time, and
in the first rotation range and at least part of the high-load range, the controller diagnoses that the oxygen sensor is normal when the third response time is equal to the first high-load response time that is longer than the second low-load response time, and the controller diagnoses that the oxygen sensor is deteriorated when the third response time is equal to the second high-load response time that is longer than the first high-load response time,
the relationship 16 being arranged so that, in a second rotation range which is either at least part of the low-rotation range in which the engine rotation speed is low or at least part of the high-rotation range in which the engine rotation speed is high and in at least part of the high-load range, the controller diagnoses that the oxygen sensor is normal when the fourth response time is equal to the third high-load response time, and the controller diagnoses that the oxygen sensor is deteriorated when the fourth response time is equal to the fourth high-load response time that is longer than the third high-load response time, and in the second rotation range and at least part of the low-load range, the controller diagnoses that the oxygen sensor is normal when the fourth response time is equal to the third low-load response time that is longer than the fourth high-load response time, and the controller diagnoses that the oxygen sensor is deteriorated when the fourth response time is equal to the fourth low-load response time that is longer than the third low-load response time,
the relationship 17 being arranged so that, in at least part of the low-load range in which the engine load is low and at least part of the low-rotation range, the controller diagnoses that the oxygen sensor is normal when the first response time is equal to the first low-rotation response time, and the controller diagnoses that the oxygen sensor is deteriorated when the first response time is equal to the second low-rotation response time that is longer than the first low-rotation response time, and in at least part of the high-load range in which the engine load is high and at least part of the high-rotation range, the controller diagnoses that the oxygen sensor is normal when the first response time is equal to the first high-rotation response time that is longer than the second low-rotation response time, and the controller diagnoses that the oxygen sensor is deteriorated when the first response time is equal to the second high-rotation response time that is longer than the first high-rotation response time, and
the relationship 18 being arranged so that, in at least part of the high-load range in which the engine load is high and at least part of the high-rotation range, the controller diagnoses that the oxygen sensor is normal when the second response time is equal to the third high-rotation response time, and the controller diagnoses that the oxygen sensor is deteriorated when the second response time is equal to the fourth high-rotation response time that is longer than the third high-rotation response time, and in at least part of the low-load range in which the engine load is low and at least part of the low-rotation range, the controller diagnoses that the oxygen sensor is normal when the second response time is equal to the third low-rotation response time that is longer than the fourth high-rotation response time, and the controller diagnoses that the oxygen sensor is deteriorated when the second response time is equal to the fourth low-rotation response time that is longer than the third low-rotation response time.

When the controller performs the oxygen sensor diagnosis process to satisfy the relationship 17 or 18, the diagnosis method is changed to more finely keep up with changes in the responsiveness of the oxygen sensor in accordance with the engine rotation speed and the engine load. Furthermore, the controller performs the oxygen sensor diagnosis process while the normal fuel control that is not the oxygen sensor diagnosis active fuel control is performed and fuel cut control is not performed. On this account, the accuracy of the diagnosis is secured in a wider driving range (rotation range and load range). The frequency of the diagnosis of deterioration of the oxygen sensor can therefore be further increased.

When the responsiveness of the oxygen sensor greatly depends not on the engine rotation speed but on the engine load, the control device is able to perform the oxygen sensor diagnosis process so as to satisfy the relationship 13 or 14.

When the responsiveness of the oxygen sensor greatly depends not on the engine load but on the engine rotation speed, the control device is able to perform the oxygen sensor diagnosis process so as to satisfy the relationship 15 or 16.

### <Vehicle>

In the present teaching and the embodiments, a vehicle is driven by a driver. The vehicle may have an automatic driving mode with which the vehicle is automatically driven without an operation by the driver. The vehicle may run on a land surface (e.g., paved road), a snow surface, or a water surface. The vehicle of the present teaching and the embodiments encompasses automobiles such as a passenger vehicle, a bus, and a truck. The vehicle of the present teaching and the embodiments encompasses a straddled vehicle. The straddled vehicle indicates all types of vehicles on which a rider (driver) rides in a manner of straddling a saddle. The straddled vehicle may or may not include wheels. The straddled vehicle may include one or two front wheel and one or two rear wheel. The straddled vehicle encompasses a motorcycle, a scooter, an engine-equipped bicycle, a moped, a motor tricycle, a four-wheeled buggy (ATV: All Terrain Vehicle), a snowmobile, a personal watercraft, and the like.

### <Controller>

In the present teaching and the embodiments, the controller includes a processor and a storage device. The controller is, for example, an ECU (Electronic Control Unit). The processor is, for example, a CPU (Central Processing Unit), a GPU (Graphics Processing Unit), a microcontroller, a micro processor, an application specific integrated circuit (ASIC), a programmable logic circuit (PLC), or a field programmable gate array (FPGA), etc. The storage device stores sets of data and programs that are executed by the processor.

### <Engine>

In the present teaching and the embodiments, an engine is a power source (drive source) that is configured to generate power for running a vehicle. A vehicle of the present teaching and the embodiments may include both an electric motor and an engine as the power source. In the present teaching and the embodiments, fuel of the engine includes gasoline, alcohol, a mixture of gasoline and alcohol, and light oil. The engine may be a four-stroke engine or a two-stroke engine. The engine may be a single-cylinder engine having one combustion chamber or a multi-cylinder engine having plural combustion chambers. The arrangement of the cylinders (combustion chambers) in the multi-cylinder engine is not particularly limited. The multi-cylinder engine may be, for example, a V engine, a straight engine, or a horizontally opposed engine. The vehicle may or may not include a forced induction device by which air supplied to the engine is pressurized. The forced induction device may be a turbocharger or a supercharger. The combustion chamber may include a main chamber and an auxiliary chamber.

### <Exhaust Passage Member>

In the present teaching and the embodiments, an exhaust passage member indicates walls or the like which form an exhaust path. The exhaust path indicates a space through which exhaust gas passes. The exhaust passage member is connected to at least one combustion chamber. The exhaust passage member has at least one upstream end for one combustion chamber. The exhaust passage member is partially formed inside the engine. The oxygen sensor provided at the exhaust passage member may be provided inside the engine or may be provided outside the engine. The exhaust passage member may include a muffler. The oxygen sensor may be provided at the muffler. The vehicle of the present teaching and the embodiments may include a catalyst provided upstream of the muffler in the exhaust passage member, and may include a catalyst provided inside the muffler.

### <Intake Passage Member>

The vehicle of the present teaching and the embodiments include an intake passage member through which air supplied to at least one combustion chamber passes. The intake passage member indicates walls which form an intake pipe by surrounding an intake path. The intake path is a space through which air supplied to the combustion chamber passes. The intake passage member is connected to at least one combustion chamber. The intake passage member has at least one downstream end for one combustion chamber. The intake passage member is partially formed inside the engine.

### <Fuel Supplier>

In the present teaching and the embodiments, a fuel supplier is a device configured to directly or indirectly supply fuel to at least one combustion chamber. The fuel supplier may include at least one injector (fuel injector) configured to inject fuel. At least one injector is provided for one combustion chamber. The injector may inject fuel to an intake passage member or to a combustion chamber. The fuel supplier may include at least one carburetor. The carburetor utilizes the negative pressure in the combustion chamber to supply fuel into the combustion chamber. The carburetor is provided for each combustion chamber. The fuel supplier may include a fuel pump configured to supply fuel in a fuel tank to the injector or the carburetor.

### <Throttle Valve>

The vehicle of the present teaching and the embodiments include at least one throttle valve provided in an intake passage member. The at least one throttle valve is configured to adjust an amount of air supplied to at least one combustion chamber. The throttle valve may be an electronic-controlled throttle valve controlled by a controller or a mechanical throttle valve. The opening degree of the electronic-controlled throttle valve is basically controlled by the controller based on an input by the rider. The opening degree of the electronic-controlled throttle valve may be controlled by the controller without an input by the rider. The opening degree of the mechanical throttle valve is controlled by an input by the rider.

The vehicle of the present teaching and the embodiments may include an independent-throttle engine unit or a collective-throttle engine unit. The independent-throttle engine unit includes at least one throttle valve for each of at least one combustion chamber. The collective-throttle engine unit includes one surge tank and at least one throttle valve for plural combustion chambers.

### <Catalyst>

In the present teaching and the embodiments, a catalyst may be a three-way catalyst (TWC). The three-way catalyst is an oxidation-reduction catalyst that removes three substances in exhaust gas, namely hydrocarbon (HC), carbon monoxide (CO), and nitrogen oxide (NOx), by oxidation and reduction. The catalyst may not be an oxidation-reduction catalyst. The catalyst may be an oxidation catalyst that removes atmospheric pollutant only by oxidation, or a reduction catalyst that removes atmospheric pollutant only by reduction. The catalyst may be a catalyst which removes one or two of hydrocarbon, carbon monoxide, and nitrogen oxide. In the present teaching and the embodiments, examples of the catalyst include a three-way catalyst, an oxidation catalyst (DOC), an NOx selective catalytic reduction (SCR) catalyst, and a lean NOx trap (LNT) catalyst. The base of the catalyst may be metal or ceramic.

The vehicle of the present teaching and the embodiments may include plural catalysts aligned in a flow direction of exhaust gas. To put it differently, the vehicle may include plural catalysts in a single exhaust path through which exhaust gas exhausted from a single combustion chamber passes. Among the catalysts aligned in the flow direction of the exhaust gas, the catalyst that purifies the exhaust gas exhausted from the single combustion chamber most is deemed as a main catalyst, whereas each catalyst which is not the main catalyst is deemed as a sub-catalyst. The vehicle may or may not include at least one sub-catalyst. In the present teaching and the embodiments, an upstream oxygen sensor is provided upstream of a main catalyst. In the present teaching and the embodiments, an upstream oxygen sensor may be provided downstream of a sub-catalyst.

The vehicle of the present teaching and the embodiments may include plural catalysts that are not aligned in a flow direction of exhaust gas. To put it differently, the vehicle may include a first catalyst through which exhaust gas exhausted from a first combustion chamber passes and a second catalyst through which the exhaust gas exhausted from the first combustion chamber does not pass and exhaust gas exhausted from a second combustion chamber passes. The vehicle of the present teaching and the embodiments may include plural catalysts that are not aligned in a flow direction of exhaust gas and plural catalysts that are aligned in the flow direction of the exhaust gas. For example, the vehicle may include a first catalyst through which exhaust gas exhausted from a first combustion chamber passes, a second catalyst through which the exhaust gas exhausted from the first combustion chamber does not pass and exhaust gas exhausted from a second combustion chamber passes, and a third catalyst through which exhaust gas exhausted from the first combustion chamber and the second combustion chamber passes. When the vehicle includes catalysts that are not aligned in a flow direction of exhaust gas, the vehicle may include a single upstream oxygen sensor or plural upstream oxygen sensors.

### <Oxygen Sensor>

In the present teaching and the embodiments, an oxygen sensor for which diagnosis of deterioration is performed by an oxygen sensor diagnosis process may be an O2 sensor or a linear A/F sensor. In this specification, the O2 sensor is configured to only detect whether the oxygen concentration in the exhaust gas is higher than a first concentration and whether the oxygen concentration in the exhaust gas is lower than a second concentration. The first concentration is higher than or equal to the second concentration. When an upstream oxygen sensor provided upstream of a catalyst is an O2 sensor, whether the air-fuel ratio of air-fuel mixture in a combustion chamber is in a rich state or lean state is detected based on a signal of the upstream oxygen sensor. In this specification, the rich state is a state in which fuel is excessive as compared to a target air-fuel ratio. In this specification, the lean state is a state in which air is excessive as compared to the target air-fuel ratio. The target air-fuel ratio may be a value or a range encompassing the stoichiometric air-fuel ratio, or may be a value or a range slightly deviated from the stoichiometric air-fuel ratio. The linear A/F sensor is configured to continuously detect changes in the oxygen concentration in the exhaust gas. The oxygen sensor is able to detect the oxygen concentration when a sensor element of the oxygen sensor is heated to a high temperature and becomes in an activated state. The vehicle of the present teaching and the embodiments may or may not include a heater that is used for heating an oxygen sensor for which diagnosis of deterioration is performed by an oxygen sensor diagnosis process.

The vehicle of the present teaching and the embodiments may include plural oxygen sensors for which diagnosis of deterioration is performed by an oxygen sensor diagnosis process of the present teaching. The vehicle of the present teaching and the embodiments may include only one oxygen sensor for which diagnosis of deterioration is performed by an oxygen sensor diagnosis process of the present teaching. The vehicle of the present teaching and the embodiments may include at least one oxygen sensor for which diagnosis of deterioration is not performed by an oxygen sensor diagnosis process of the present teaching, in addition to at least one oxygen sensor for which diagnosis of deterioration is performed by the oxygen sensor diagnosis process of the present teaching. The vehicle of the present teaching and the embodiments may include a downstream oxygen sensor which is provided downstream of a catalyst and for which diagnosis of deterioration is performed by an oxygen sensor diagnosis process of the present teaching.

### <Fuel Control>

In the present teaching and the embodiments, fuel control encompasses fuel amount variation control with which a fuel amount supplied to at least one combustion chamber is increased and decreased and fuel cut control with which supply of fuel to at least one combustion chamber is temporarily stopped. Increase and decrease of a fuel amount supplied to at least one combustion chamber indicates that a fuel amount supplied to at least one combustion chamber is repeatedly increased and decreased.

### <Oxygen Sensor Diagnosis Active Fuel Control, Normal Fuel Control>

Claim 1 recites oxygen sensor diagnosis active fuel control in order to define normal fuel control. A controller of the present teaching and the embodiments may not perform the oxygen sensor diagnosis active fuel control. The oxygen sensor diagnosis active fuel control may be fuel amount variation control, fuel cut control, or both of these controls. The fuel amount variation control of the oxygen sensor diagnosis active fuel control may be performed based on a signal of the upstream oxygen sensor or may be performed not based on a signal of the upstream oxygen sensor. The controller of the present teaching and the embodiments may diagnose the deterioration of an oxygen sensor while the oxygen sensor diagnosis active fuel control is being performed.

In the present teaching and the embodiments, the normal fuel control is fuel control not for diagnosing the deterioration of an oxygen sensor. The normal fuel control is fuel control for normal running of a vehicle. The normal running encompasses a temporary stop. The normal fuel control is, for example, executed when the vehicle runs at a normal constant speed. The controller of the present teaching and the embodiments may perform abnormality diagnosis active fuel control by which fuel supplied to at least one combustion chamber is controlled to diagnose an abnormality in an object (e.g., a sensor, an apparatus, or a catalyst) different from the oxygen sensor. The normal fuel control does not encompass the abnormality diagnosis active fuel control by which an abnormality in an object different from the oxygen sensor is diagnosed. In addition to the period in which the normal fuel control is performed and the fuel cut control is not performed, the oxygen sensor diagnosis process of the present teaching and the embodiments may be executed in a period in which the abnormality diagnosis active fuel control by which an abnormality in an object different from the oxygen sensor is diagnosed is being performed. The normal fuel control includes fuel amount variation control and fuel cut control. The period in which the normal fuel control is performed and the fuel cut control is not performed is a period in which the fuel amount variation control of the normal fuel control is performed. In other words, the period in which the normal fuel control is performed and the fuel cut control is not performed is a period in which the fuel amount variation control that is not for the diagnosis of deterioration of the oxygen sensor is performed. The fuel amount variation control of the normal fuel control is performed based on a signal of the upstream oxygen sensor. The fuel amount variation control of the normal fuel control is, for example, control with which the air-fuel ratio of air-fuel mixture in a combustion chamber is repeatedly switched between the rich state and the lean state. In the fuel amount variation control of the oxygen sensor diagnosis active fuel control, a cycle and/or amplitude of increase and decrease of a fuel amount supplied to at least one combustion chamber is large as compared to the fuel amount variation control of the normal fuel control. Whether the fuel amount variation control is that of the normal fuel control or that of the oxygen sensor diagnosis active fuel control may be determined based on a change of a signal of an upstream oxygen sensor provided upstream of a catalyst and/or a downstream oxygen sensor provided downstream of the catalyst. Furthermore, whether the fuel amount variation control is that of the normal fuel control or that of the abnormality diagnosis active fuel control may be determined based on a change of a signal of the upstream oxygen sensor and/or the downstream oxygen sensor.

### <Rotation Range and Load Range>

In the present teaching and the embodiments, a rotation range is a range between the minimum engine rotation speed and the maximum engine rotation speed. A low-rotation range is a range that is a lower half of the rotation range. A high-rotation range is obtained by subtracting the low-rotation range from the rotation range. The engine rotation speed is rotation speed of a crankshaft of an engine.

In the present teaching and the embodiments, a load range is a range between the minimum engine load or the minimum of a value related to the engine load and the maximum engine load or the maximum of the value related to the engine load. The value related to the engine load is one of an intake air amount, an opening degree of a throttle valve, and an intake pressure. A low-load range is a range that is a lower half of the load range. In other words, the low-load range may be a range that is a lower half of a range between the minimum engine load and the maximum engine load. The low-load range may be a range that is a lower half of a range between the minimum intake air amount and the maximum intake air amount. The low-load range may be a range that is a lower half of a range between the minimum opening degree of the throttle valve and the maximum opening degree of the throttle valve. The low-load range may be a range that is a lower half of a range between the minimum intake pressure and the maximum intake pressure. The engine load may be calculated from, for example, an intake air amount and a fuel supply amount. In this specification, the fuel supply amount is a fuel amount supplied to at least one combustion chamber. In this specification, the intake air amount is an air amount supplied to at least one combustion chamber. The intake air amount may be calculated by the controller based on the opening degree of the throttle valve and/or the intake pressure, or may be detected by an air flow meter.

### <Oxygen Sensor Diagnosis Process>

In the present teaching and the embodiments, an oxygen sensor diagnosis process of diagnosing the deterioration of an oxygen sensor based on a signal of the oxygen sensor is an oxygen sensor diagnosis process of diagnosing the deterioration of responsiveness of the oxygen sensor based on a signal of the oxygen sensor. The responsiveness of the oxygen sensor indicates a temporal delay of a change of a signal output from the oxygen sensor from a change in the oxygen concentration. Specific steps of the oxygen sensor diagnosis process are not limited to those described in later-described embodiments. The controller diagnoses the deterioration of the oxygen sensor by, for example, comparing a value related to the responsiveness of the oxygen sensor calculated from, for example, a signal of the oxygen sensor with a threshold. A method of calculating this value is not limited to any particular one. The calculation and computation in this specification encompass a number sampling through mapping by using a lookup table. In the present teaching and the embodiments, the oxygen sensor diagnosis process may be performed in only part of the rotation range or in the entire rotation range. The oxygen sensor diagnosis process may be performed in only part of the load range or in the entire load range. In the present teaching and the embodiments, the oxygen sensor diagnosis process performed during the period in which the normal fuel control is performed and the fuel cut control is not performed is an oxygen sensor diagnosis process that is performed by using a signal output from the oxygen sensor while the normal fuel control is performed and the fuel cut control is not performed. The diagnostic data of the oxygen sensor diagnosis process stored in the controller is readable by using, for example, an external scanning tool. The external scanning tool is detachably attached to a controller of a vehicle. Alternatively, the external scanning tool is able to communicate with the controller of the vehicle by wireless. The external scanning tool reads, from the controller, a diagnosis result (normal or deteriorated), information used for the diagnosis, and driving conditions when the diagnosis was performed. The information used for the diagnosis is a calculated value related to the responsiveness of the oxygen sensor calculated from, for example, a signal of the oxygen sensor and a threshold which is to be compared with the calculated value. Examples of the driving conditions when the diagnosis was performed, which are obtained by the external scanning tool, include an engine rotation speed, an intake air amount, an opening degree of a throttle valve, and an intake pressure. The intake air amount obtained by the external scanning tool is a value calculated by the controller based on the opening degree of the throttle valve and/or the intake pressure, or is a value detected by an air flow meter. Furthermore, the driving conditions when the diagnosis was performed, which are obtained by the external scanning tool, include information indicating whether the fuel amount variation control based on a signal of the upstream oxygen sensor has been performed.

### <First Response Time to Fourth Response Time>

Each of a first response time to a fourth response time is a time required for a change of a signal of an oxygen sensor by a unit amount. The unit amount is a predetermined amount. The unit amount in the first response time is an amount from a first value to a second value. In other words, the first response time is a time required for a change of a signal of the oxygen sensor from the first value to the second value. The first value may be larger than or smaller than the second value. In other words, the first response time may be a time required for an increase of a signal of the oxygen sensor by the unit amount or a time required for a decrease of a signal of the oxygen sensor by the unit amount. The unit amount in the second response time is an amount from a third value to a fourth value. The third value may be larger than or smaller than the fourth value. The unit amount in the third response time is an amount from a fifth value to a sixth value. The fifth value may be larger than or smaller than the sixth value. The unit amount in the fourth response time is an amount from a seventh value to an eighth value. The seventh value may be larger than or smaller than the eighth value. When the controller performs the oxygen sensor diagnosis process so that a relationship 1 and a relationship 3 are satisfied, the first response time and the third response time may be identical with each other or different from each other. When the controller performs the oxygen sensor diagnosis process so that a relationship 2 and a relationship 4 are satisfied, the second response time and the fourth response time may be identical with each other or different from each other.

### <Relationships 1 to 4, Relationships 5 to 12, and Relationships 13 to 20>

The controller may perform the oxygen sensor diagnosis process so as to satisfy, among relationships 1 to 4, (1) only the relationship 1, (2) only the relationship 2, (3) only the relationship 3, (4) only the relationship 4, (5) a combination of the relationships 1 and 3, or (6) a combination of the relationships 2 and 4.

When the controller performs the oxygen sensor diagnosis process so as to satisfy at least one of the relationships 5 to 12, the controller may perform the oxygen sensor diagnosis process to satisfy, among relationships 5 to 12, (1) only the relationship 5, (2) only the relationship 6, (3) only the relationship 7, (4) only the relationship 8, (5) only the relationship 9, (6) only the relationship 10, (7) only the relationship 11, (8) only the relationship 12, (9) a combination of the relationships 5 and 6, (10) a combination of the relationships 7 and 8, (11) a combination of the relationships 9 and 10, (12) a combination of the relationships 11 and 12, (13) a combination of the relationships 5 and 9, (14) a combination of the relationships 5 and 10, (15) a combination of the relationships 6 and 9, (16) a combination of the relationships 6 and 10, (17) a combination of the relationships 7 and 11, (18) a combination of the relationships 7 and 12, (19) a combination of the relationships 8 and 11, (20) a combination of the relationships 8 and 12, (21) a combination of the relationships 5, 6, and 9, (22) a combination of the relationships 5, 6, and 10, (23) a combination of the relationships 5, 9, and 10, (24) a combination of the relationships 6, 9, and 10, (25) a combination of the relationships 7, 8, and 11, (26) a combination of the relationships 7, 8, and 12, (27) a combination of the relationships 7, 11, and 12, (28) a combination of the relationships 8, 11, and 12, (29) a combination of the relationships 5, 6, 9, and 10, and (30) a combination of the relationships 7, 8, 11, and 12.

Whether the controller has performed the oxygen sensor diagnosis process to satisfy the relationship 1 can be determined by, for example, the following method. To begin with, a simulator is interposed between an oxygen sensor that is a target of diagnosis and the controller. The simulator generates a simulated response delay in a signal of the oxygen sensor. In other words, the simulator increases a time constant of a primary delay of a waveform of a signal of the oxygen sensor. The signal of the oxygen sensor processed by the simulator is input to the controller. When the engine rotation speed is a constant rotation speed falling within the low-rotation range, the response delay generated by the simulator is gradually increased. For example, the response delay may be continuously increased. Alternatively, for example, the response delay may be increased stepwise, while a period in which the response delay is maintained is provided. Then the first response time of the signal when the diagnosis result is switched from normal to deteriorated is measured. This measured value is regarded as a measured value T1. In addition to this, the first response time of the signal immediately before the switching of the diagnosis result to deteriorated is measured. This measured value is regarded as a measured value T2. Subsequently, when the engine rotation speed is a constant rotation speed falling within the high-rotation range, the response delay generated by the simulator is gradually increased. Then the first response time of the signal when the diagnosis result is switched from normal to deteriorated is measured. This measured value is regarded as a measured value T3. In addition to this, the first response time of the signal immediately before the switching of the diagnosis result to deteriorated is measured. This measured value is regarded as a measured value T4. When the relationship of the measured value T2 < the measured value T1 < the measured value T4 < the measured value T3 is established, it is determined that the oxygen sensor diagnosis process has been performed by the controller to satisfy the relationship 1. Determination can be similarly done for each of the relationship 2 to the relationship 18 by using the simulator.

In the present specification, at least one of plural options encompasses all conceivable combinations of the options. At least one of plural options may be one of the options, some of the options, or all of the options. For example, at least one of A, B, or C indicates only A, only B, only C, A and B, A and C, B and C, or A, B, and C. In the present specification, A and/or B means A and B, or A or B. In other words, A and/or B means A, B, or both A and B.

In the claims, when the number of a constituent feature is not clearly specified and the constituent feature is expressed in a singular form in English, the number of the constituent feature may be more than one in the present teaching. In the present teaching, the number of the constituent features may be only one. In the claims, a constituent feature, the number of which is not specified, is an oxygen sensor, for example.

In the present teaching and the embodiments, terms "including", "comprising", "having", and derivatives thereof are used to encompass not only listed items and equivalents thereof but also additional items. In the present teaching and the embodiments, the terms "mounted", "connected", "coupled", and "supported" are used in broad sense. Specifically, not only direct attachment, connection, coupling, and support but also indirect attachment, connection, coupling, and support are included. Further, connected and coupled are not limited to physical or mechanical connections and couplings. They also include direct or indirect electrical connections and couplings.

Unless defined otherwise, all terms (including technical and scientific terms) used herein have the same meaning as commonly understood by one of ordinary skill in the art to which the present teaching belongs. Terms such as those defined in commonly used dictionaries are to be interpreted as having meaning that is consistent with their meaning in the context of the relevant art and the present disclosure, and are not to be interpreted in an idealized or excessively formal sense.

As used herein, the term "preferred" is non-exclusive. The term "preferable" means "preferable but not limited to". In this specification, an arrangement which is "preferable" exerts at least the above-described effects of the arrangement of claim 1. In this specification, the term "may" is non-exclusive. The term "may" indicate "may but not must". In the present specification, "may" implicitly encompasses "do not". In this specification, an arrangement which is explained by using the term "may" exerts at least the above-described effects of the arrangement of claim 1.

Before the embodiments of the present teaching are detailed, it is informed that the present teaching is not limited to the configurations and layout of elements described below and/or shown in drawings. The present teaching is also applicable to embodiments other than the embodiments described later. The present teaching may be implemented as an embodiment other than the below-described embodiment. The scope of protection is defined by the appended claims.

### [Advantageous Effects]

According to the present teaching, improvement in frequency of diagnosis of deterioration of an oxygen sensor and maintenance of the drivability of the vehicle are achieved at the same time.

### [Brief Description of Drawings]

FIG. 1 illustrates a vehicle of the First Embodiment of the present teaching.
FIG. 2 is a schematic diagram showing a vehicle of the Second Embodiment of the present teaching.
FIG. 3 is a schematic diagram showing part of a vehicle of the Third Embodiment of the present teaching.
FIG. 4 is a schematic diagram showing part of a vehicle of the Fourth Embodiment of the present teaching.
FIG. 5(a) is a schematic diagram showing a vehicle of the Fifth Embodiment of the present teaching. FIG. 5(b) is a schematic diagram showing a vehicle of the Sixth Embodiment of the present teaching.
FIG. 6 illustrates a control block diagram of a vehicle of the Seventh Embodiment of the present teaching.
FIG. 7(a) is a graph showing changes over time of a fuel amount while normal fuel control is performed and fuel cut control is not performed. FIG. 7(b) is a graph showing changes over time of a signal (output) of an oxygen sensor while normal fuel control is performed and fuel cut control is not performed.
FIG. 8(a) is a graph showing that the higher an engine rotation speed and an engine load are, the lower the responsiveness of an oxygen sensor is. FIG. 8(b) is a graph showing that the lower an engine rotation speed and an engine load are, the lower the responsiveness of an oxygen sensor is. FIG. 8(c) is a graph for explaining the transverse axes of the graphs in FIG. 8(a) and FIG. 8(b).
FIG. 9(a) to FIG. 9(f) show thresholds that are varied to increase as an engine rotation speed and/or an engine load increases.
FIG. 10(a) to FIG. 10(f) show thresholds that are varied to increase as an engine rotation speed and/or an engine load decreases.
FIG. 11 shows a lookup table which is used for changing a threshold or a correction value in accordance with an engine rotation speed and an engine load.
FIG. 12 shows a threshold that is constant regardless of an engine rotation speed and an engine load.
FIG. 13(a) to FIG. 13(f) show correction values that are varied to increase as an engine rotation speed and/or an engine load increases.
FIG. 14 shows an example of each of the relationships 5 to 12.
FIG. 15 shows two examples of the relationship 13 and two examples of the relationship 14.
FIG. 16 shows two examples of the relationship 15 and two examples of the relationship 16.
FIG. 17 shows an example of the relationship 17 and an example of the relationship 18.

### [Description of Embodiments]

### <First Embodiment of Present Teaching>

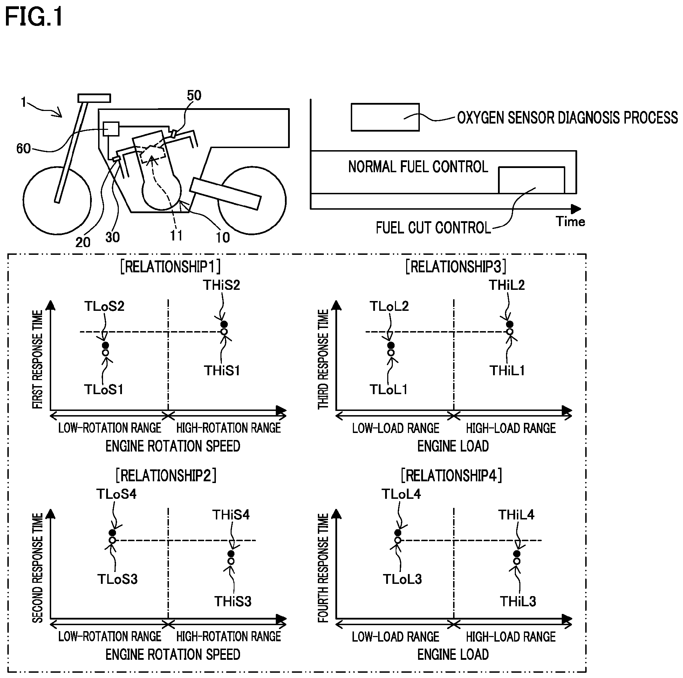

A vehicle 1 of the First Embodiment of the present teaching will be described with reference to FIG. 1. As shown in FIG. 1, the vehicle 1 of the First Embodiment includes an engine 10, an oxygen sensor 20, a fuel supplier 50, and a controller 60. While the vehicle 1 is a straddled vehicle in FIG. 1, the vehicle 1 of the First Embodiment is not limited to the straddled vehicle. The engine 10 includes at least one combustion chamber 11. The oxygen sensor 20 is provided at an exhaust passage member 30 through which exhaust gas exhausted from the at least one combustion chamber 11 passes. The oxygen sensor 20 is configured to detect the oxygen concentration in the exhaust gas. The fuel supplier 50 is configured to supply fuel to the at least one combustion chamber 11. The fuel supplier 50 and the oxygen sensor 20 are connected to the controller 60. The controller 60 is configured to execute an oxygen sensor diagnosis process of diagnosing the deterioration of the oxygen sensor 20 based on a signal of the oxygen sensor 20. The controller 60 is configured to perform fuel control of controlling a fuel amount supplied to the at least one combustion chamber 11 by controlling the fuel supplier 50.

The fuel control of controlling the fuel amount supplied to the at least one combustion chamber 11 for diagnosing the deterioration of the oxygen sensor 20 is termed oxygen sensor diagnosis active fuel control. On the other hand, the fuel control of controlling the fuel amount supplied to the at least one combustion chamber 11 not for diagnosing the deterioration of the oxygen sensor 20 is termed normal fuel control. The controller 60 executes the oxygen sensor diagnosis process to satisfy at least one of the following relationships 1 to 4 while the normal fuel control that is not the oxygen sensor diagnosis active fuel control is performed and fuel cut control is not performed. The fuel cut control is control with which supply of fuel to the at least one combustion chamber 11 is temporarily stopped. FIG. 1 shows an example of each of the relationships 1 to 4. Relationship 1: In at least part of a low-rotation range in which the engine rotation speed is low, the controller 60 diagnoses that the oxygen sensor 20 is normal when a first response time that is a time required for a change of a signal of the oxygen sensor 20 by a unit amount is equal to a first low-rotation response time TLoS1, and the controller 60 diagnoses that the oxygen sensor 20 is deteriorated when the first response time is equal to a second low-rotation response time TLoS2 that is longer than the first low-rotation response time TLoS1. In at least part of a high-rotation range in which the engine rotation speed is high, the controller 60 diagnoses that the oxygen sensor 20 is normal when the first response time is equal to a first high-rotation response time THiS1 that is longer than the second low-rotation response time TLoS2, and the controller 60 diagnoses that the oxygen sensor 20 is deteriorated when the first response time is equal to a second high-rotation response time THiS2 that is longer than the first high-rotation response time THiS1.

Relationship 2: In at least part of the high-rotation range in which the engine rotation speed is high, the controller 60 diagnoses that the oxygen sensor 20 is normal when a second response time that is a time required for a change of a signal of the oxygen sensor 20 by a unit amount is equal to a third high-rotation response time THiS3, and the controller 60 diagnoses that the oxygen sensor 20 is deteriorated when the second response time is equal to a fourth high-rotation response time THiS4 that is longer than the third high-rotation response time THiS3. In at least part of the low-rotation range in which the engine rotation speed is low, the controller 60 diagnoses that the oxygen sensor 20 is normal when the second response time is equal to a third low-rotation response time TLoS3 that is longer than the fourth high-rotation response time THiS4, and the controller 60 diagnoses that the oxygen sensor 20 is deteriorated when the second response time is equal to a fourth low-rotation response time TLoS4 that is longer than the third low-rotation response time TLoS3.

Relationship 3: In at least part of a low-load range in which the engine load is low, the controller 60 diagnoses that the oxygen sensor 20 is normal when a third response time that is a time required for a change of a signal of the oxygen sensor 20 by a unit amount is equal to a first low-load response time TLoL1, and the controller 60 diagnoses that the oxygen sensor 20 is deteriorated when the third response time is equal to a second low-load response time TLoL2 that is longer than the first low-load response time TLoL1. In at least part of a high-load range in which the engine load is high, the controller 60 diagnoses that the oxygen sensor 20 is normal when the third response time is equal to a first high-load response time THiL1 that is longer than the second low-load response time TLoL2, and the controller 60 diagnoses that the oxygen sensor 20 is deteriorated when the third response time is equal to a second high-load response time THiL2 that is longer than the first high-load response time THiL1.

Relationship 4: In at least part of the high-load range in which the engine load is high, the controller 60 diagnoses that the oxygen sensor 20 is normal when a fourth response time that is a time required for a change of a signal of the oxygen sensor 20 by a unit amount is equal to a third high-load response time THiL3, and the controller 60 diagnoses that the oxygen sensor 20 is deteriorated when the fourth response time is equal to a fourth high-load response time THiL4 that is longer than the third high-load response time THiL3. In at least part of the low-load range in which the engine load is low, the controller 60 diagnoses that the oxygen sensor 20 is normal when the fourth response time is equal to a third low-load response time TLoL3 that is longer than the fourth high-load response time THiL4, and the controller 60 diagnoses that the oxygen sensor 20 is deteriorated when the fourth response time is equal to a fourth low-load response time TLoL4 that is longer than the third low-load response time TLoL3.

The first response time may be a time required for an increase of a signal of the oxygen sensor 20 by a unit amount or a time required for a decrease of a signal of the oxygen sensor 20 by the unit amount. The second response time may be a time required for an increase of a signal of the oxygen sensor 20 by a unit amount or a time required for a decrease of a signal of the oxygen sensor 20 by the unit amount. The third response time may be a time required for an increase of a signal of the oxygen sensor 20 by a unit amount or a time required for a decrease of a signal of the oxygen sensor 20 by the unit amount. The fourth response time may be a time required for an increase of a signal of the oxygen sensor 20 by a unit amount or a time required for a decrease of a signal of the oxygen sensor 20 by the unit amount.

According to the First Embodiment, improvement in frequency of diagnosis of deterioration of the oxygen sensor 20 and maintenance of the drivability of the vehicle 1 are achieved at the same time. The improvement in frequency of diagnosis of deterioration of the oxygen sensor 20 may indicate that the deterioration of the oxygen sensor 20 is diagnosed in at least 10% of the entire driving cycle.

### <Second Embodiment of Present Teaching>

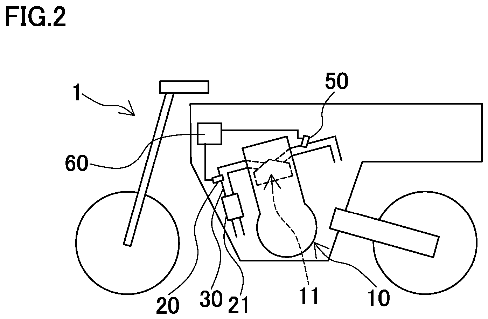

A vehicle 1 of Second Embodiment of the present teaching will be described with reference to FIG. 2. The vehicle 1 of Second Embodiment includes the following arrangements, in addition to those of the First Embodiment.

As shown in FIG. 2, the vehicle 1 of the Second Embodiment includes a catalyst 21 provided in an exhaust passage member 30. An oxygen sensor 20 is an upstream oxygen sensor 20 provided upstream of a catalyst 21 in a flow direction of exhaust gas of the exhaust passage member 30. The upstream oxygen sensor 20 is used for fuel control. The controller 60 performs the fuel control based on a signal of the upstream oxygen sensor 20. The controller 60 diagnoses the deterioration of the upstream oxygen sensor 20 in an oxygen sensor diagnosis process.

### <Third Embodiment of Present Teaching>

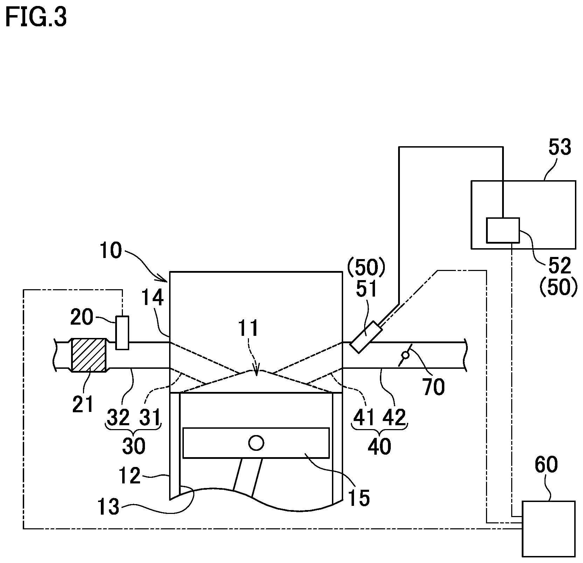

A vehicle 1 of the Third Embodiment of the present teaching will be described with reference to FIG. 3. The vehicle 1 of the Third Embodiment includes the following arrangements, in addition to those of the Second Embodiment.

An engine 10 of the vehicle 1 of the Third Embodiment is a four-stroke engine. As shown in FIG. 3, the engine 10 includes a cylinder body 12 and a cylinder head 14. At least one cylinder hole 13 is formed in the cylinder body 12. A piston 15 is slidably accommodated in the cylinder hole 13. The piston 15 is connected to a crankshaft (not illustrated) through a connecting rod. The engine 10 includes at least one combustion chamber 11. The combustion chamber 11 is formed of the cylinder hole 13 of the cylinder body 12, the piston 15, and the cylinder head 14. A leading end portion of an ignition plug (not illustrated) is provided in the combustion chamber 11. By spark discharge generated by the ignition plug, the air-fuel mixture in the combustion chamber 11 is ignited. The ignition plug is connected to an ignition coil (not illustrated).

The at least one combustion chamber 11 is connected to an intake passage member 40 and the exhaust passage member 30. The intake passage member 40 includes a cylinder head intake passage member 41 formed in the cylinder head 14 and an intake pipe member 42. In the cylinder head intake passage member 41, an intake valve (not illustrated) is provided. The intake pipe member 42 includes an air cleaner (not illustrated). The exhaust passage member 30 includes a cylinder head exhaust passage member 31 formed in the cylinder head 14 and an exhaust pipe member 32. In the cylinder head exhaust passage member 31, an exhaust valve (not illustrated) is provided. The exhaust pipe member 32 includes a muffler (not illustrated). The intake pipe member 42 and the exhaust pipe member 32 are connected to the engine 10.

The fuel supplier 50 includes at least one injector 51 and a fuel pump 52. The injector 51 is provided in the intake passage member 40. The injector 51 is configured to inject fuel. Fuel pressurized by the fuel pump 52 is supplied to the injector 51. The fuel pump 52 is disposed in a fuel tank 53.

In the intake passage member 40, at least one throttle valve 70 is provided. The throttle valve 70 is provided upstream of the injector 51 in a flow direction of air. The throttle valve 70 is an electronic-controlled throttle valve. The throttle valve 70 may be a mechanical throttle valve.

The controller 60 is connected to members such as the injector 51, the fuel pump 52, and the ignition coil (not illustrated) and controls these members. The controller 60 is configured to control a fuel amount supplied to the at least one combustion chamber 11 by controlling the injector 51 and the fuel pump 52. The controller 60 is configured to perform fuel control by controlling the injector 51 and the fuel pump 52. The controller 60 controls an ignition timing by controlling the ignition coil.

### <Fourth Embodiment of Present Teaching>

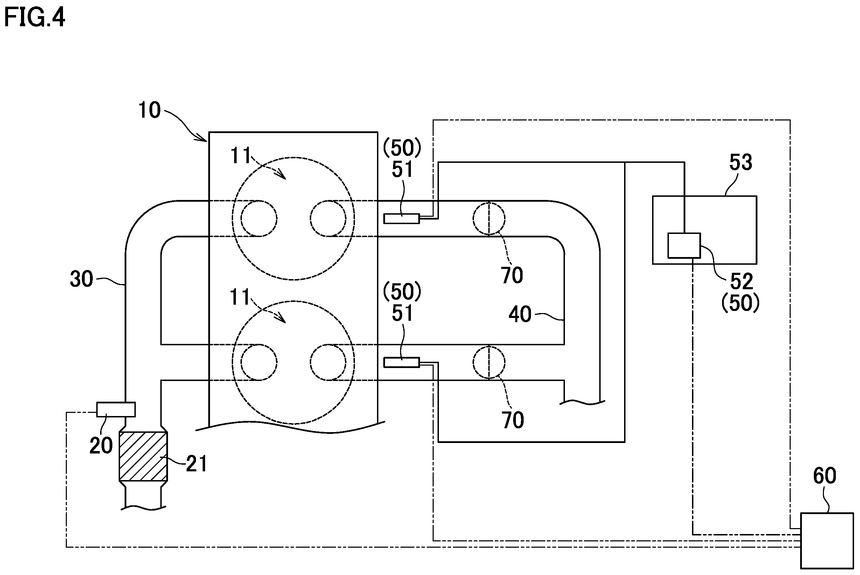

A vehicle 1 of the Fourth Embodiment of the present teaching will be described with reference to FIG. 4. The vehicle 1 of the Fourth Embodiment includes the following arrangements, in addition to those of the Third Embodiment.

As shown in FIG. 4, an engine 10 of the vehicle 1 of the Fourth Embodiment includes plural combustion chambers 11. While in FIG. 4 the engine 10 has two combustion chambers 11, the engine 10 may have three or more combustion chambers 11. The vehicle 1 includes one throttle valve 70 for each of the combustion chambers 11. The vehicle 1 includes one injector 51 for each of the combustion chambers 11. The vehicle 1 includes one oxygen sensor 20 for the combustion chambers 11. The vehicle 1 includes one catalyst 21 for the combustion chambers 11. The vehicle 1 may include one oxygen sensor 20 for each of the combustion chambers 11. The vehicle 1 may include one catalyst 21 for each of the combustion chambers 11.

### <Fifth Embodiment and Sixth Embodiment of Present Teaching>

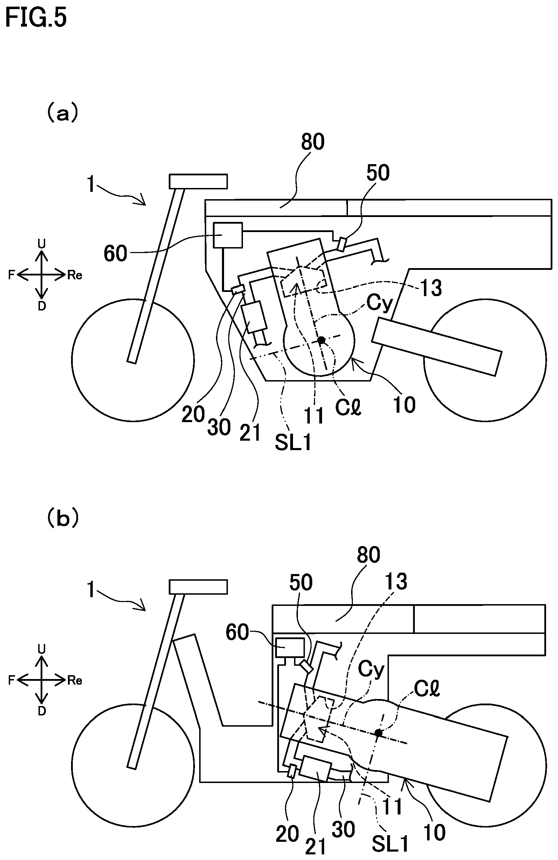

A vehicle 1 of each of the Fifth Embodiment and Sixth Embodiment of the present teaching will be described with reference to FIG. 5(a) and FIG. 5(b). FIG. 5(a) shows the vehicle 1 of the Fifth Embodiment, whereas FIG. 5(b) shows the vehicle 1 of the Sixth Embodiment. The vehicle 1 of each of the Fifth Embodiment and Sixth Embodiment may have the features of the Third Embodiment. The vehicle 1 of each of the Fifth Embodiment and Sixth Embodiment may or may not have the features of the Fourth Embodiment. The vehicle 1 of each of the Fifth Embodiment and Sixth Embodiment have the following features, in addition to the features of the Second Embodiment.

As shown in FIG. 5(a) and FIG. 5(b), the vehicle 1 of each of the Fifth Embodiment and Sixth Embodiment is a straddled vehicle. The vehicle 1 has a seat 80. Hereinafter, a vehicle front-rear direction is the front-rear direction for a rider seated on the seat 80. A vehicle left-right direction is the left-right direction for the rider seated on the seat 80. A vehicle left-right direction coincides with a vehicle width direction. A vehicle up-down direction is a direction orthogonal to both the vehicle front-rear direction and the vehicle left-right direction. An arrow F and an arrow Re in the figures indicate a vehicle forward direction and a vehicle rearward direction, respectively. An arrow U and an arrow D indicate a vehicle upward direction and a vehicle downward direction, respectively.

The engine 10 of the vehicle 1 of each of the Fifth Embodiment and Sixth Embodiment includes at least one combustion chamber 11. The engine 10 has at least one cylinder hole 13. The cylinder hole 13 constitutes part of the combustion chamber 11. The central axis of the cylinder hole 13 is referred to as a cylinder axis Cy. A piston (not illustrated) is slidably accommodated in the cylinder hole 13. The piston is connected to a crankshaft (not illustrated). The central axial line of the crankshaft is referred to as a crankshaft Cl. The crankshaft Cl is in parallel to the vehicle left-right direction. When viewed in the vehicle left-right direction, the cylinder axis Cy of the vehicle 1 of the Fifth Embodiment is in parallel to the vehicle up-down direction or is tilted by 45 degrees or less from the vehicle up-down direction. When viewed in the vehicle left-right direction, the cylinder axis Cy of the vehicle 1 of the Sixth Embodiment is in parallel to the vehicle front-rear direction or is tilted by 45 degrees or less from the vehicle front-rear direction. When viewed in the vehicle left-right direction, an oxygen sensor (upstream oxygen sensor) 20 of each of the Fifth Embodiment and Sixth Embodiment may be provided above a straight line SL1 that is orthogonal to the cylinder axis Cy and passes through the crankshaft Cl. When the oxygen sensor 20 is provided above the straight line SL1 when viewed in the vehicle left-right direction, the oxygen sensor 20 is close to the combustion chamber 11 and hence the temperature of the oxygen sensor 20 is high, as compared to a case where the oxygen sensor 20 is at least partially below the straight line SL1 when viewed in the vehicle left-right direction. When viewed in the vehicle left-right direction, the catalyst 21 may be at least partially above the straight line SL1 that is orthogonal to the cylinder axis Cy and passes through the crankshaft Cl. When viewed in the vehicle left-right direction, the catalyst 21 may be entirely above the straight line SL1 that is orthogonal to the cylinder axis Cy and passes through the crankshaft Cl.

The responsiveness of the oxygen sensor 20 varies in accordance with the engine rotation speed and/or the engine load. When the controller 60 performs the oxygen sensor diagnosis process to satisfy the relationship 1 or 2 of the First Embodiment, the controller 60 performs diagnoses by a diagnosis method changed at least in accordance with the engine rotation speed, while the normal fuel control is performed and the fuel cut control is not performed. When the controller 60 performs the oxygen sensor diagnosis process to satisfy the relationship 3 or 4 of the First Embodiment, the controller 60 performs a diagnosis by a diagnosis method changed at least in accordance with the engine load, while the normal fuel control is performed and the fuel cut control is not performed. When the vehicle 1 of each of the Fifth Embodiment and Sixth Embodiment has the features of the Fourth Embodiment or when the engine 10 of the vehicle 1 of each of the Fifth Embodiment and Sixth Embodiment is a single-cylinder engine having one combustion chamber 11, the vehicle 1 of each of the Fifth Embodiment and Sixth Embodiment has an independent-throttle engine unit.

Straddled vehicles have been required to be downsized. A straddled vehicle is smaller in size than an automobile. It is therefore difficult to downsize the straddled vehicle. Typically, when the responsiveness of an upstream oxygen sensor provided upstream of a catalyst decreases, the accuracy of fuel control based on a signal of the upstream oxygen sensor decreases. When the accuracy of the fuel control decreases, the purification performance of purifying exhaust gas by the catalyst may decrease. In order to attain a required purification performance even when the responsiveness of the upstream oxygen sensor decreases, the size of the catalyst of a known straddled vehicle is arranged to be sufficiently large to secure a margin.

When the straddled vehicle 1 of each of the Fifth Embodiment and Sixth Embodiment includes an independent-throttle engine unit, the driving range (the rotation range and the load range) of the engine 10 of each of the Fifth Embodiment and Sixth Embodiment is wider than the driving range of an engine of an automobile having a collective-throttle engine unit. When the responsiveness of the oxygen sensor 20 varies in accordance with the engine rotation speed, the wider the rotation range is, the wider the range of variation of the responsiveness of the oxygen sensor 20 in accordance with the engine rotation speed is. When the responsiveness of the oxygen sensor 20 varies in accordance with the engine load, the wider the load range is, the wider the range of variation of the responsiveness of the oxygen sensor 20 in accordance with the engine load is. On this account, in a straddled vehicle 1 having a wide driving range, the range of variation of the responsiveness of the oxygen sensor 20 in accordance with the engine rotation speed and/or the engine load is wide, as compared to an automobile having a narrow driving range. To put it differently, in an automobile having a narrow driving range, the range of variation of the responsiveness of the oxygen sensor in accordance with the engine rotation speed and/or the engine load is narrow. On this account, even when the method of diagnosing the deterioration of the oxygen sensor of the automobile remains the same irrespective of the engine rotation speed and the engine load, the accuracy of the diagnosis is secured in most of the driving range of the engine of the automobile. On this account, even if the method of diagnosing the deterioration of the oxygen sensor of the automobile is changed in accordance with the engine rotation speed and/or the engine load, the frequency of diagnosis remains more or less the same as compared to a case where the method is not changed. On the other hand, when the method of diagnosing the deterioration of the oxygen sensor of the straddled vehicle remains the same irrespective of the engine rotation speed and the engine load, the accuracy of the diagnosis is secured only in a part of the driving range of the engine of the straddled vehicle. Due to this, as the method of diagnosing the deterioration of the oxygen sensor 20 of the straddled vehicle 1 is changed in accordance with the engine rotation speed and/or the engine load, the frequency of diagnosis is significantly increased as compared to cases where the method is not changed. When the method of diagnosing the deterioration of the oxygen sensor remains the same irrespective of the engine rotation speed and the engine load, the ratio of the diagnosable range in the driving range is lower in the straddled vehicle than in the automobile. On this account, the frequency of the diagnosis of deterioration of the oxygen sensor 20 can be further effectively improved as compared to the case of the automobile. Because the frequency of diagnosis is improved while the accuracy of diagnosis is maintained or improved, it is possible to suppress the decrease of accuracy of fuel control due to decrease of responsiveness of the oxygen sensor 20. On this account, it is possible to suppress the decrease of purification performance of purifying exhaust gas of the catalyst 21 due to decrease of responsiveness of the oxygen sensor 20. It is therefore possible to reduce the margin of the catalyst 21 in size. Because the catalyst 21 can be downsized, increase in size of the straddled vehicle 1 can be suppressed.

### <Seventh Embodiment of Present Teaching>

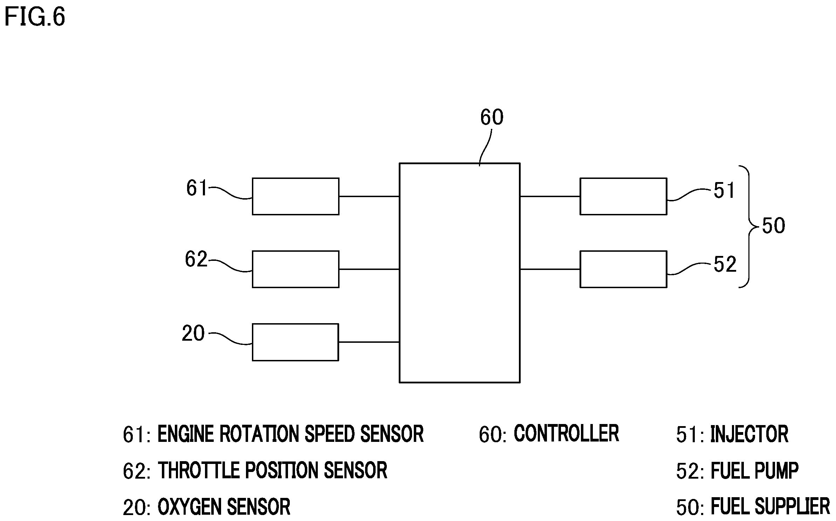

The following will describe a vehicle 1 of the Seventh Embodiment of the present teaching with reference to FIG. 6 to FIG. 17. The vehicle 1 of the Seventh Embodiment may have the features of the Fourth Embodiment. The vehicle 1 of the Seventh Embodiment may or may not have the features of the Fifth or Sixth Embodiment. The vehicle 1 of the Seventh Embodiment includes the following arrangements, in addition to those of the Third Embodiment.

As shown in FIG. 6, the vehicle 1 of the Seventh Embodiment includes members such as an engine rotation speed sensor 61 and a throttle position sensor 62, in addition to the oxygen sensor (upstream oxygen sensor) 20. The engine rotation speed sensor 61 is configured to detect the rotation speed of the crankshaft, i.e., the engine rotation speed. The throttle position sensor 62 is configured to detect the opening degree of the throttle valve 70. The controller 60 performs normal fuel control based on, for example, signals of the oxygen sensor (upstream oxygen sensor) 20, the engine rotation speed sensor 61, and the throttle position sensor 62. The normal fuel control encompasses fuel amount variation control of increasing and decreasing a fuel supply amount and fuel cut control of temporarily stopping supply of fuel to at least one combustion chamber 11. The fuel supply amount is a fuel amount supplied to the at least one combustion chamber 11. In the fuel amount variation control, the controller 60 determines the fuel supply amount by adding or subtracting a correction amount to or from a basic fuel amount. The controller 60 calculates an intake air amount based on, for example, signals of the engine rotation speed sensor 61 and the throttle position sensor 62. The intake air amount is an amount of air supplied to the at least one combustion chamber 11. The controller 60 determines a basic fuel amount based on the calculated intake air amount. The controller 60 determines the correction amount based on a signal of the oxygen sensor (upstream oxygen sensor) 20. The controller 60 performs the fuel amount variation control of the normal fuel control in order to maintain the air-fuel ratio of air-fuel mixture at a target air-fuel ratio. The controller 60 starts the fuel cut control when, for example, the normal fuel control is being performed, the opening degree of the throttle valve 70 is at the minimum, and the engine rotation speed is higher than a predetermined value. While the fuel cut control is performed, the injection of the fuel from the injector 51 is stopped and the fuel pump 52 is stopped.

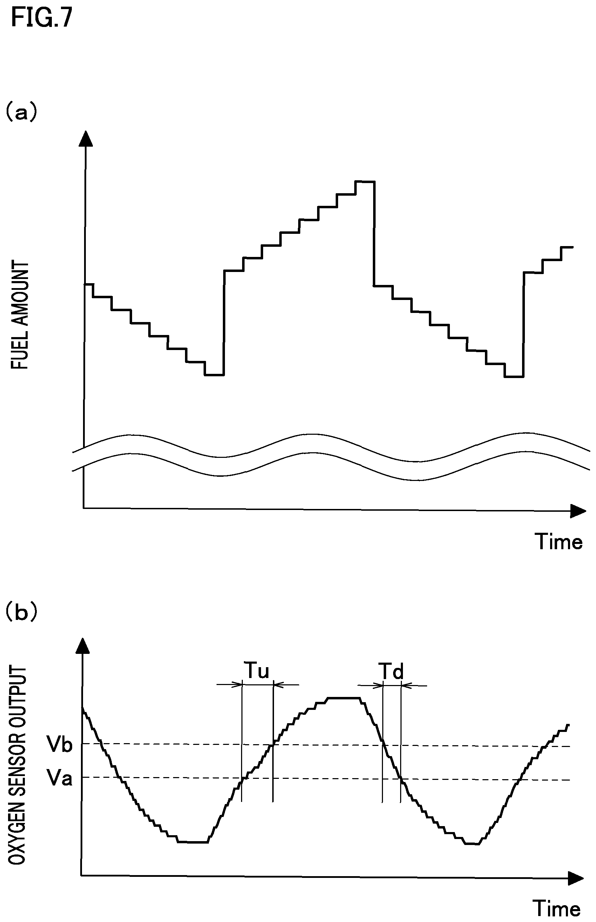

While the normal fuel control is performed and the fuel cut control is not performed, i.e., while the fuel amount variation control of the normal fuel control is performed, the fuel amount supplied to one combustion chamber 11 increases and decreases as shown in FIG. 7(a), for example. While the normal fuel control is performed and the fuel cut control is not performed, an output (signal) of the oxygen sensor (upstream oxygen sensor) 20 varies as shown in FIG. 7(b), for example. Even though the oxygen sensor 20 is normal, a change of the signal output from the oxygen sensor 20 delays from a change in the oxygen concentration. On this account, no matter whether the oxygen sensor (upstream oxygen sensor) 20 is an O2 sensor or a linear A/F sensor, the waveform of the signal of the oxygen sensor (upstream oxygen sensor) 20 is not square. It is noted that the waveform is different between the case where the oxygen sensor (upstream oxygen sensor) 20 is an O2 sensor and the case where the oxygen sensor (upstream oxygen sensor) 20 is a linear A/F sensor.

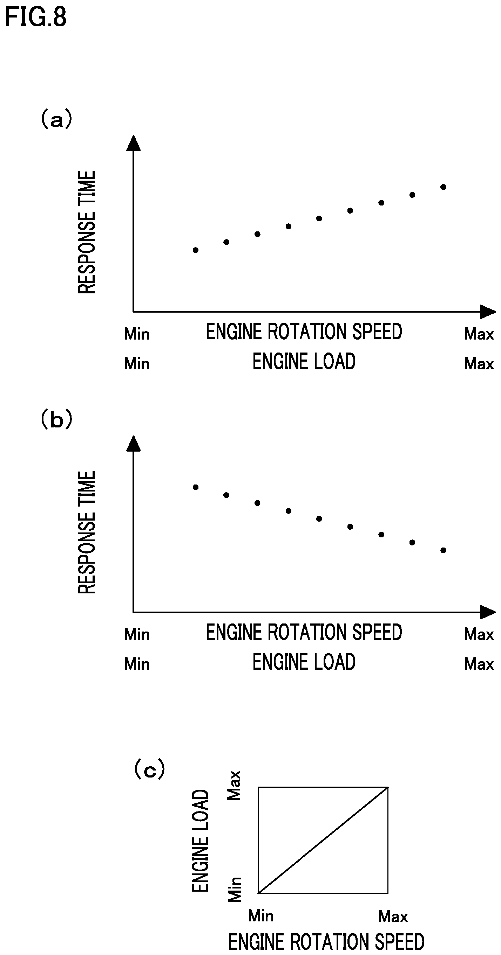

The responsiveness of the oxygen sensor 20 varies in accordance with the engine rotation speed and/or the engine load. Depending on the type of the vehicle 1, the tendency of changes in the responsiveness of the oxygen sensor 20 in accordance with the engine rotation speed and/or the engine load is different. There are a case where the responsiveness of the oxygen sensor 20 decreases as the engine rotation speed and/or the engine load increases, and a case where the responsiveness of the oxygen sensor 20 decreases as the engine rotation speed and/or the engine load decreases. A graph shown in FIG. 8(a) shows the former case, whereas a graph shown in FIG. 8(b) shows the latter case. The transverse axis of each of the graphs of FIG. 8(a) and FIG. 8(b) indicates a combination of an engine rotation speed and an engine load. In other words, the transverse axis of each of the graphs of FIG. 8(a) and FIG. 8(b) is equivalent to a diagonal line of a graph of FIG. 8(c) in which the transverse axis indicates an engine rotation speed whereas the vertical axis indicates an engine load. The vertical axis of each of the graphs of FIG. 8(a) and FIG. 8(b) indicates a response time of a signal of the oxygen sensor 20. The response time is, for example, a rise response time Tu or a fall response time Td shown in FIG. 7(b). The rise response time Tu is a time required for changing the signal of the oxygen sensor 20 by a unit amount when the signal of the oxygen sensor 20 is on the rise. The fall response time Td is a time required for changing the signal of the oxygen sensor 20 by a unit amount when the signal of the oxygen sensor 20 is on the decline. The unit amount of the rise response time Tu shown in FIG. 7(b) is an amount from an output Va to an output Vb. The unit amount of the rise response time Tu, however, is not limited to this. The unit amount of the fall response time Td shown in FIG. 7(b) is an amount from an output Vb to an output Va. The unit amount of the fall response time Td, however, is not limited to this. The longer the response time is, the lower the responsiveness of the oxygen sensor 20 is. Dots in the graph of FIG. 8(a) indicate response times of the oxygen sensor 20, with which the degree of deterioration is the same. The same applies to dots in the graph of FIG. 8(b).

The reasons why the responsiveness of the signal of the oxygen sensor 20 decreases as the engine rotation speed and/or the engine load increases as shown in FIG. 8(a) are, for example, two reasons described below. On account of the characteristic of the oxygen sensor 20, when the temperature of the oxygen sensor 20 is lower than a predetermined temperature, the response speed of the oxygen sensor 20 is low. When the response speed of the oxygen sensor 20 decreases, the responsiveness of the oxygen sensor 20 decreases. On the other hand, the maximum value of the signal (output) of the oxygen sensor 20 decreases as the temperature of the oxygen sensor 20 increases. When the maximum value of the signal of the oxygen sensor 20 decreases, the responsiveness of the oxygen sensor 20 decreases. Furthermore, when the engine rotation speed and the engine load are high, the temperature of the oxygen sensor 20 is high. Depending on the type of the vehicle 1, there is a case where, in a low-rotation low-load range, the temperature of the oxygen sensor 20 reaches a temperature with which the response speed of the oxygen sensor 20 is maximized. In this case, because the maximum value of the signal of the oxygen sensor 20 decreases as the engine rotation speed and/or the engine load increases, the responsiveness of the oxygen sensor 20 decreases as the engine rotation speed and the engine load increase. This is the first reason. The second reason is that the speed of a change in the oxygen concentration of exhaust gas hitting the oxygen sensor 20 increases as the engine rotation speed increases, and the oxygen sensor 20 is no longer able to respond.

The reason why the responsiveness of the signal of the oxygen sensor 20 decreases as the engine rotation speed and/or the engine load decreases as shown in FIG. 8(b) is, for example, a reason described below. Depending on the type of the vehicle 1, there is a case where, in a low-rotation low-load range, the temperature of the oxygen sensor 20 does not reach a temperature with which the response speed of the oxygen sensor 20 is maximized, and in a high-rotation high-load range, the temperature of the oxygen sensor 20 reaches the temperature with which the response speed of the oxygen sensor 20 is maximized. In this case, the response speed of the oxygen sensor 20 decreases as the engine rotation speed and the engine load decrease.

As compared to the case where the responsiveness of the signal of the oxygen sensor 20 decreases as the engine rotation speed and/or the engine load increases as shown in FIG. 8(a), the temperature of the oxygen sensor 20 is low in the case where the responsiveness of the signal of the oxygen sensor 20 decreases as the engine rotation speed and/or the engine load decreases as shown in FIG. 8(b). On this account, when, for example, the location of the oxygen sensor 20 is moved to the upstream, the characteristic shown in FIG. 8(b) may be changed to the characteristic shown in FIG. 8(a).

As described in the First Embodiment, the controller 60 performs the oxygen sensor diagnosis process to satisfy at least one of the following relationships 1 to 4 while the normal fuel control is performed and the fuel cut control is not performed. Due to this, the controller 60 performs a diagnosis by a diagnosis method changed in accordance with the engine rotation speed and/or the engine load, while the normal fuel control is performed and the fuel cut control is not performed. A time required for performing the oxygen sensor diagnosis process once is, for example, 300 to 600 seconds. The controller 60 performs Specific Example 1 or Specific Example 2 of the oxygen sensor diagnosis process, which are described below. In Specific Example 1 of the oxygen sensor diagnosis process, the controller 60 diagnoses the deterioration of the oxygen sensor 20 by comparing a calculated value obtained from a signal of the oxygen sensor 20, etc., and related to the responsiveness of the oxygen sensor 20 with a threshold changed in accordance with the engine rotation speed and/or the engine load. In Specific Example 2 of the oxygen sensor diagnosis process, the controller 60 corrects a calculated value obtained from a signal of the oxygen sensor 20, etc., and related to the responsiveness of the oxygen sensor 20, in accordance with the engine rotation speed and/or the engine load. Then the controller 60 diagnoses the deterioration of the oxygen sensor 20 by comparing the calculated value having been corrected with a threshold.

The following will detail Specific Example 1. In Specific Example 1, the calculated value to be compared with the threshold may be, for example, a rise response time Tu of a signal of the oxygen sensor 20, a fall response time Td of a signal of the oxygen sensor 20, a rise amount of a signal of the oxygen sensor 20, or a fall amount of a signal of the oxygen sensor 20. The rise amount is an amount of change of a signal of the oxygen sensor 20 per unit time when the signal of the oxygen sensor 20 is on the rise. The fall amount is an amount of change of a signal of the oxygen sensor 20 per unit time when the signal of the oxygen sensor 20 is on the decline. The smaller the rise amount is, the lower the responsiveness of the oxygen sensor 20 is. The smaller the fall amount is, the lower the responsiveness of the oxygen sensor 20 is. When the rise response time Tu or the fall response time Td is larger than the threshold, the controller 60 determines that the oxygen sensor 20 has been deteriorated. When the rise amount or the fall amount is smaller than the threshold, the controller 60 determines that the oxygen sensor 20 has been deteriorated. The calculated value to be compared with the threshold may be an average, a deviation value, a median, the minimum, or the maximum of the rise response time Tu, the fall response time Td, the rise amount, or the fall amount. The calculated value to be compared with the threshold may be a combination of the rise response time Tu and the fall response time Td. The calculated value to be compared with the threshold may be a combination of the rise amount and the fall amount.

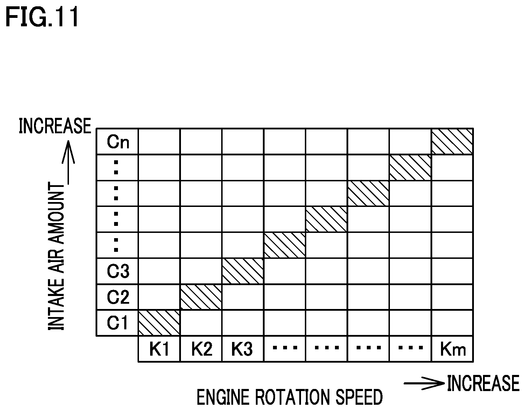

The threshold is changed in accordance with the engine rotation speed and/or the engine load. When the threshold is changed in accordance with the engine load, the controller 60 may determine the threshold based on an intake air amount or the opening degree of the throttle valve 70. The threshold may be changed in accordance with the engine rotation speed and the engine load. In this case, the controller 60 may determine the threshold by using a lookup table (see, e.g., FIG. 11) in which the engine rotation speed, the intake air amount, and the threshold are associated. The threshold may be changed in accordance with the engine rotation speed, irrespective of the engine load. When the responsiveness of the oxygen sensor 20 greatly depends not on the engine load but on the engine rotation speed, the use of this threshold improves the frequency of diagnosis without compromising on the accuracy of diagnosis. Furthermore, because the engine load is not referred to, the oxygen sensor diagnosis process is simplified. The threshold may be changed in accordance with the engine load, irrespective of the engine rotation speed. When the responsiveness of the oxygen sensor 20 greatly depends not on the engine rotation speed but on the engine load, the use of this threshold improves the frequency of diagnosis without compromising on the accuracy of diagnosis. Furthermore, because the engine rotation speed is not referred to, the oxygen sensor diagnosis process is simplified.

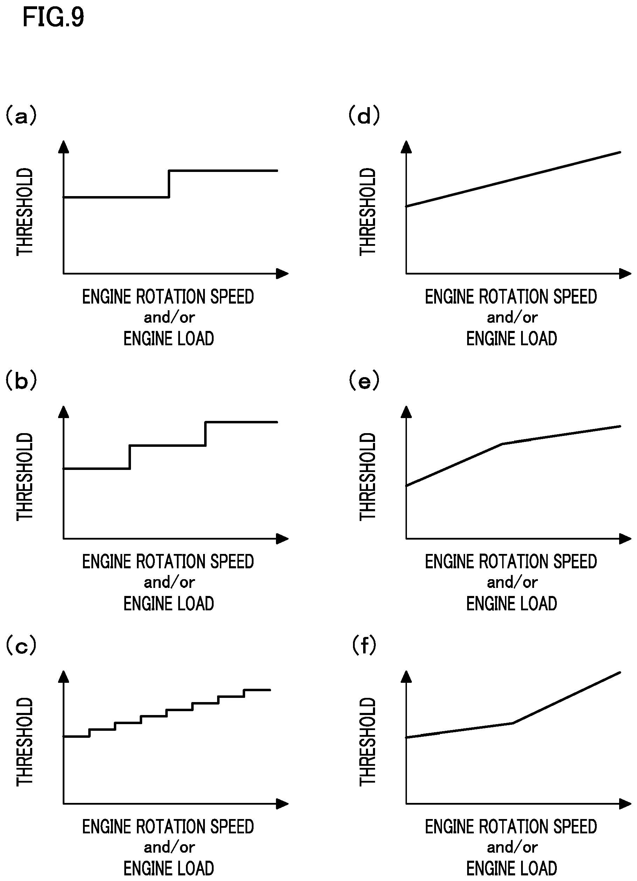

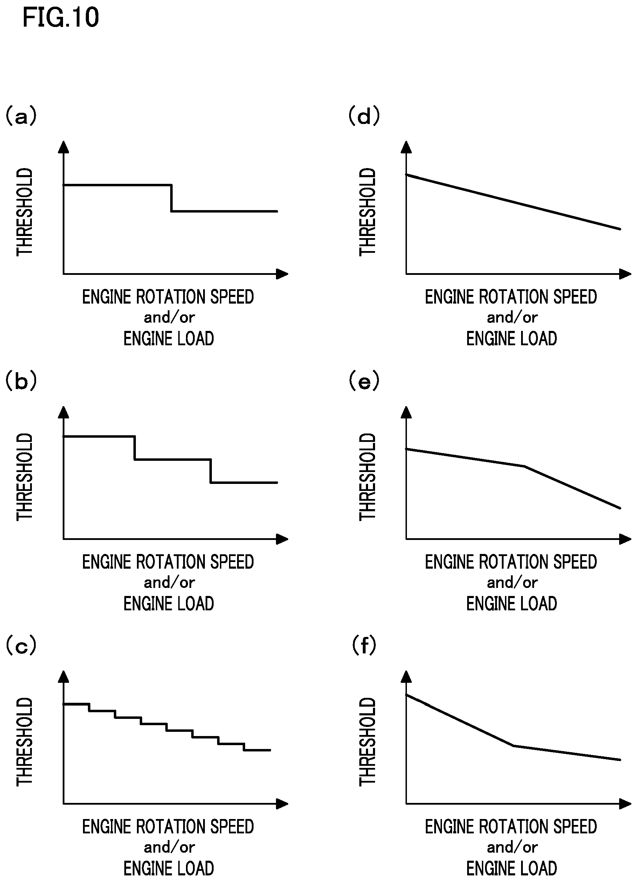

FIG. 9(a) to FIG. 9(f) and FIG. 10(a) to FIG. 10(f) show examples of the threshold that is changed in accordance with the engine rotation speed and/or the engine load. The transverse axis of the graph in each of FIG. 9(a) to FIG. 9(f) and FIG. 10(a) to FIG. 10(f) indicates the engine rotation speed, the engine load, or a combination of the engine rotation speed and the engine load. When the transverse axis indicates a combination of the engine rotation speed and the engine load, the graph in each of FIG. 9(a) to FIG. 9(f) and FIG. 10(a) to FIG. 10(f) shows only a threshold in a small part of the driving range of the engine 10. To be more specific, the graphs show thresholds in a range hutched in the lookup table shown in FIG. 11. In each of FIG. 9(a) to FIG. 9(f), the threshold increases as the engine rotation speed and/or the engine load increases. In each of FIG. 10(a) to FIG. 10(f), the threshold increases as the engine rotation speed and/or the engine load decreases. When the vehicle 1 has a characteristic that the responsiveness of the oxygen sensor 20 decreases as the engine rotation speed and/or the engine load increases, the threshold in each of FIG. 9(a) to FIG. 9(f) is, for example, a threshold to be compared with the rise response time Tu or the fall response time Td. When the vehicle 1 has a characteristic that the responsiveness of the oxygen sensor 20 decreases as the engine rotation speed and/or the engine load decreases, the threshold in each of FIG. 9(a) to FIG. 9(f) is, for example, a threshold to be compared with the rise amount or the fall amount.

For example, as shown in FIG. 9(a) to FIG. 9(c) and FIG. 10(a) to FIG. 10(c), the threshold may be changed stepwise in accordance with the engine rotation speed and/or the engine load. The threshold may be changed in two steps (as shown in, e.g., FIG. 9(a) and FIG. 10(a)) or may be changed in three or more steps (as shown in, e.g., FIG. 9(b), FIG. 9(c), FIG. 10(b), and FIG. 10(c)). For example, as shown in FIG. 9(d) to FIG. 9(f) and FIG. 10(d) to FIG. 10(f), the threshold may be changed continuously in accordance with the engine rotation speed and/or the engine load. The rate of change of the threshold relative to a change of the engine rotation speed and/or the engine load may be constant (as shown in, e.g., FIG. 9(d) and FIG. 10(d)) or may be changed in accordance with the engine rotation speed and/or the engine load (as shown in, e.g., FIG. 9(e), FIG. 9(f), FIG. 10(e), and FIG. 10(f)).

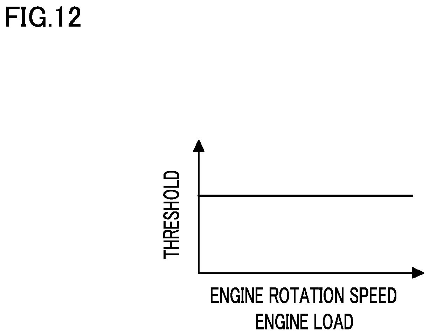

The following will detail Specific Example 2. As shown in FIG. 12, the threshold in Specific Example 2 is constant irrespective of the engine rotation speed and the engine load. Examples of the calculated value before correction are identical with the examples of the calculated value which is to be compared with the threshold in Specific Example 1. The correction may be addition, subtraction, multiplication, or division. The calculation may be a number sampling through mapping by using a lookup table. The value added to the calculated value, subtracted from the calculated value, by which the calculated value is multiplied, or by which the calculated value is divided is referred to as a correction value. In a case of the multiplication or division, the correction value is a coefficient of the multiplication or division.

The correction value is changed in accordance with the engine rotation speed and/or the engine load. When the correction value is changed in accordance with the engine load, the controller 60 may determine the correction value based on an intake air amount or the opening degree of the throttle valve 70. The correction value may be changed in accordance with the engine rotation speed and the engine load. In this case, the controller 60 may determine the correction value by using a lookup table (see, e.g., FIG. 11) in which the engine rotation speed, the intake air amount, and the correction value are associated. The correction value may be changed in accordance with the engine rotation speed, irrespective of the engine load. When the responsiveness of the oxygen sensor 20 greatly depends not on the engine load but on the engine rotation speed, the use of this correction value improves the frequency of diagnosis without compromising on the accuracy of diagnosis. Furthermore, because the engine load is not referred to, the oxygen sensor diagnosis process is simplified. The correction value may be changed in accordance with the engine load, irrespective of the engine rotation speed. When the responsiveness of the oxygen sensor 20 greatly depends not on the engine rotation speed but on the engine load, the use of this correction value improves the frequency of diagnosis without compromising on the accuracy of diagnosis. Furthermore, because the engine rotation speed is not referred to, the oxygen sensor diagnosis process is simplified.

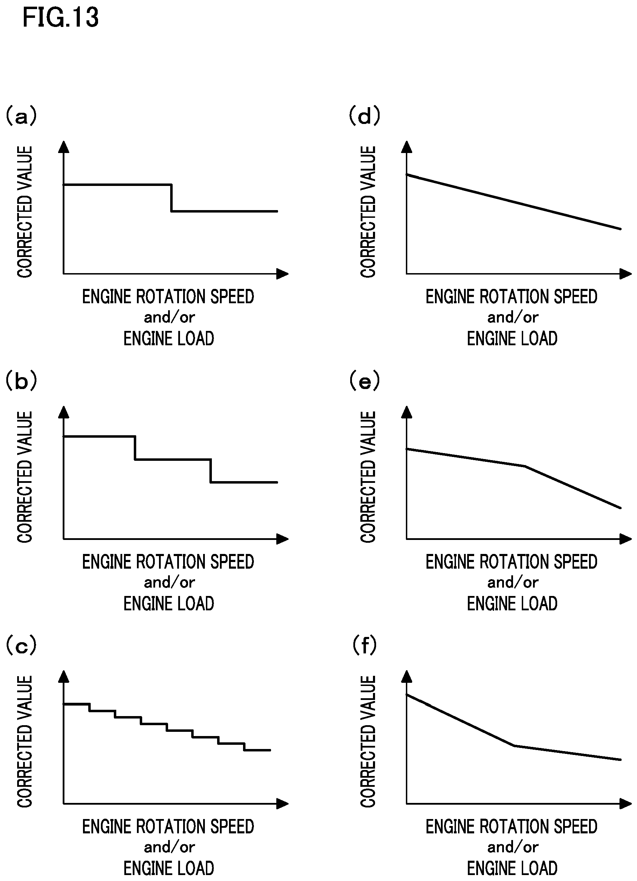

FIG. 13(a) to FIG. 13(f) show examples of the correction value that is changed in accordance with the engine rotation speed and/or the engine load. The transverse axis of the graph in each of FIG. 13(a) to FIG. 13(f) indicates the engine rotation speed, the engine load, or a combination of the engine rotation speed and the engine load. In FIG. 13(a) to FIG. 13(f), the correction value decreases as the engine rotation speed and/or the engine load increases. Although not illustrated in the figures, the correction value may decrease as the engine rotation speed and/or the engine load decreases. When the vehicle 1 has a characteristic that the responsiveness of the oxygen sensor 20 decreases as the engine rotation speed and/or the engine load increases and the correction is addition or multiplication of a positive value, the correction value in each of FIG. 13(a) to FIG. 13(f) is, for example, a value by which the rise response time Tu or the fall response time Td is corrected. When the vehicle 1 has a characteristic that the responsiveness of the oxygen sensor 20 decreases as the engine rotation speed and/or the engine load decreases and the correction is addition or multiplication of a positive value, the correction value in each of FIG. 13(a) to FIG. 13(f) is, for example, a value by which the rise amount or the fall amount is corrected.

For example, as shown in FIG. 13(a) to FIG. 13(c), the correction value may be changed stepwise in accordance with the engine rotation speed and/or the engine load. The correction value may be changed in two steps or may be changed in three or more steps. For example, as shown in FIG. 13(d) to FIG. 13(f), the correction value may be changed continuously in accordance with the engine rotation speed and/or the engine load. The rate of change of the correction value relative to a change of the engine rotation speed and/or the engine load may be constant or may be changed in accordance with the engine rotation speed and/or the engine load.

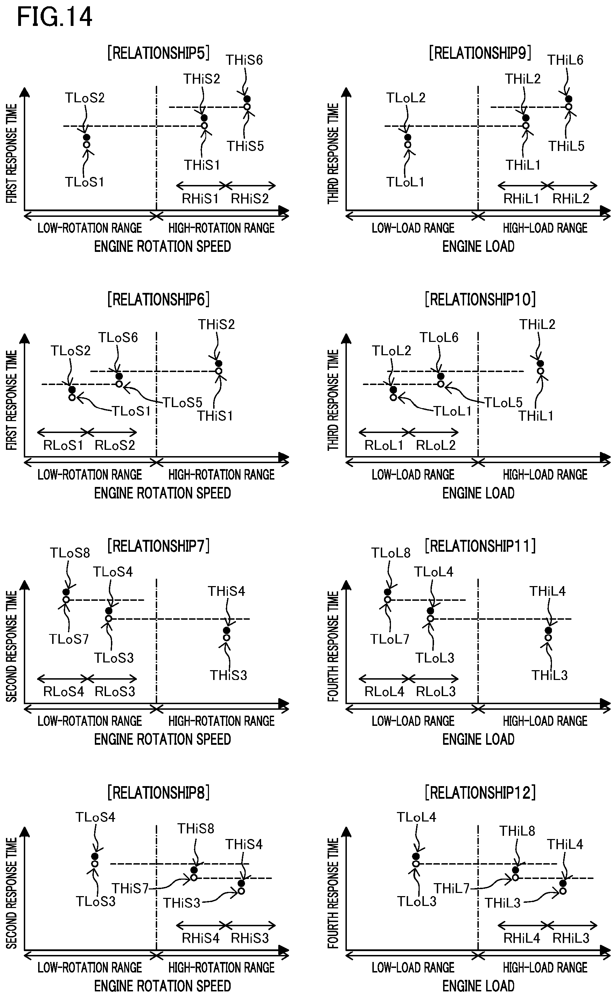

When the vehicle 1 has a characteristic that the responsiveness of the oxygen sensor 20 decreases as the engine rotation speed increases and the threshold or the correction value is continuously changed in accordance with the engine rotation speed in at least part of the high-rotation range and at least part of the low-rotation range, the controller 60 performs the oxygen sensor diagnosis process so as to satisfy the relationship 1 described in the First Embodiment and relationships 5 and 6 described below. To be more specific, for example, this case is a case where the transverse axis of each of the graphs of FIG. 9(d) to FIG. 9(f) indicates either the engine rotation speed or a combination of the engine rotation speed and the engine load and the calculated value to be compared with the threshold is either the rise response time Tu or the fall response time. In addition to this, for example, the case above is a case where the transverse axis of each of the graphs of FIG. 10(d) to FIG. 10(f) indicates either the engine rotation speed or a combination of the engine rotation speed and the engine load and the calculated value to be compared with the threshold is either the rise amount or the fall amount. In addition to this, for example, the case above is a case where the transverse axis of each of the graphs of FIG. 13(d) to FIG. 13(f) indicates either the engine rotation speed or a combination of the engine rotation speed and the engine load and the correction value is a value by which the rise response time Tu or the fall response time Td is corrected. FIG. 14 shows an example of each of the relationships 5 and 6.

Relationship 5: In at least part of the low-rotation range, the controller 60 diagnoses that the oxygen sensor 20 is normal when the first response time is equal to the first low-rotation response time TLoS1, and the controller 60 diagnoses that the oxygen sensor 20 is deteriorated when the first response time is equal to the second low-rotation response time TLoS2 that is longer than the first low-rotation response time TLoS1. In at least part of a first high-rotation range RHiS1 included in the high-rotation range, the controller 60 diagnoses that the oxygen sensor 20 is normal when the first response time is equal to a first high-rotation response time THiS1 that is longer than the second low-rotation response time TLoS2, and the controller 60 diagnoses that the oxygen sensor 20 is deteriorated when the first response time is equal to a second high-rotation response time THiS2 that is longer than the first high-rotation response time THiS1. In at least part of a second high-rotation range RHiS2 that is higher in engine rotation speed than the first high-rotation range RHiS1 and is included in the high-rotation range, the controller 60 diagnoses that the oxygen sensor 20 is normal when the first response time is equal to a fifth high-rotation response time THiS5 that is longer than the second low-rotation response time TLoS2, and the controller 60 diagnoses that the oxygen sensor 20 is deteriorated when the first response time is equal to a sixth high-rotation response time THiS6 that is longer than the fifth high-rotation response time THiS5.

Relationship 6: In at least part of a first low-rotation range RLoS1 included in the low-rotation range, the controller 60 diagnoses that the oxygen sensor 20 is normal when the first response time is equal to the first low-rotation response time TLoS1, and the controller 60 diagnoses that the oxygen sensor 20 is deteriorated when the first response time is equal to the second low-rotation response time TLoS2 that is longer than the first low-rotation response time TLoS1. In at least part of a second low-rotation range RLoS2 that is higher in engine rotation speed than the first low-rotation range RLoS1 and is included in the low-rotation range, the controller 60 diagnoses that the oxygen sensor 20 is normal when the first response time is equal to a fifth low-rotation response time TLoS5 that is longer than the second low-rotation response time TLoS2, and the controller 60 diagnoses that the oxygen sensor 20 is deteriorated when the first response time is equal to a sixth low-rotation response time TLoS6 that is longer than the fifth low-rotation response time TLoS5. In at least part of the high-rotation range, the controller 60 diagnoses that the oxygen sensor 20 is normal when the first response time is equal to the first high-rotation response time THiS1 that is longer than the sixth low-rotation response time TLoS6, and the controller 60 diagnoses that the oxygen sensor 20 is deteriorated when the first response time is equal to a second high-rotation response time THiS2 that is longer than the first high-rotation response time THiS1.

When the vehicle 1 has a characteristic that the responsiveness of the oxygen sensor 20 decreases as the engine rotation speed decreases and the threshold or the correction value is continuously changed in accordance with the engine rotation speed in at least part of the high-rotation range and at least part of the low-rotation range, the controller 60 performs the oxygen sensor diagnosis process so as to satisfy the relationship 2 described in the First Embodiment and relationships 7 and 8 described below. FIG. 14 shows an example of each of the relationships 7 and 8.

Relationship 7: In at least part of the high-rotation range, the controller 60 diagnoses that the oxygen sensor 20 is normal when the second response time is equal to the third high-rotation response time THiS3, and the controller 60 diagnoses that the oxygen sensor 20 is deteriorated when the second response time is equal to the fourth high-rotation response time THiS4 that is longer than the third high-rotation response time THiS3. In at least part of the third low-rotation range RLoS3 included in the low-rotation range, the controller 60 diagnoses that the oxygen sensor 20 is normal when the second response time is equal to a third low-rotation response time TLoS3 that is longer than the fourth high-rotation response time THiS4, and the controller 60 diagnoses that the oxygen sensor 20 is deteriorated when the second response time is equal to a fourth low-rotation response time TLoS4 that is longer than the third low-rotation response time TLoS3. In at least part of a fourth low-rotation range RLoS4 that is lower in engine rotation speed than the third low-rotation range RLoS3 and is included in the low-rotation range, the controller 60 diagnoses that the oxygen sensor 20 is normal when the second response time is equal to a seventh low-rotation response time TLoS7 that is longer than the fourth low-rotation response time TLoS4, and the controller 60 diagnoses that the oxygen sensor 20 is deteriorated when the second response time is equal to an eighth low-rotation response time TLoS8 that is longer than the seventh low-rotation response time TLoS7.

Relationship 8: In at least part of a third high-rotation range RHiS3 included in the high-rotation range, the controller 60 diagnoses that the oxygen sensor 20 is normal when the second response time is equal to the third high-rotation response time THiS3, and the controller 60 diagnoses that the oxygen sensor 20 is deteriorated when the second response time is equal to the fourth high-rotation response time THiS4 that is longer than the third high-rotation response time THiS3. In at least part of a fourth high-rotation range RHiS4 that is lower in engine rotation speed than the third high-rotation range RHiS3 and is included in the high-rotation range, the controller 60 diagnoses that the oxygen sensor 20 is normal when the second response time is equal to a seventh high-rotation response time THiS7 that is longer than the fourth high-rotation response time THiS4, and the controller 60 diagnoses that the oxygen sensor 20 is deteriorated when the second response time is equal to an eighth high-rotation response time THiS8 that is longer than the seventh high-rotation response time THiS7. In at least part of the low-rotation range, the controller 60 diagnoses that the oxygen sensor 20 is normal when the second response time is equal to the third low-rotation response time TLoS3 that is longer than the eighth high-rotation response time THiS8, and the controller 60 diagnoses that the oxygen sensor 20 is deteriorated when the second response time is equal to a fourth low-rotation response time TLoS4 that is longer than the third low-rotation response time TLoS3.

When the vehicle 1 has a characteristic that the responsiveness of the oxygen sensor 20 decreases as the engine rotation speed increases, the threshold or the correction value is changed in three or more steps in accordance with the engine rotation speed, and the threshold or the correction value is changed in two or more steps in accordance with the engine rotation speed in the high-rotation range, the controller 60 performs the oxygen sensor diagnosis process so as to satisfy the relationships 1 and 5.

When the vehicle 1 has a characteristic that the responsiveness of the oxygen sensor 20 decreases as the engine rotation speed increases, the threshold or the correction value is changed in three or more steps in accordance with the engine rotation speed, and the threshold or the correction value is changed in two or more steps in accordance with the engine rotation speed in the low-rotation range, the controller 60 performs the oxygen sensor diagnosis process so as to satisfy the relationships 1 and 6.

When the vehicle 1 has a characteristic that the responsiveness of the oxygen sensor 20 decreases as the engine rotation speed decreases, the threshold or the correction value is changed in three or more steps in accordance with the engine rotation speed, and the threshold or the correction value is changed in two or more steps in accordance with the engine rotation speed in the low-rotation range, the controller 60 performs the oxygen sensor diagnosis process so as to satisfy the relationships 2 and 7.

When the vehicle 1 has a characteristic that the responsiveness of the oxygen sensor 20 decreases as the engine rotation speed decreases, the threshold or the correction value is changed in three or more steps in accordance with the engine rotation speed, and the threshold or the correction value is changed in two or more steps in accordance with the engine rotation speed in the high-rotation range, the controller 60 performs the oxygen sensor diagnosis process so as to satisfy the relationships 2 and 8.

When the vehicle 1 has a characteristic that the responsiveness of the oxygen sensor 20 decreases as the engine load increases and the threshold or the correction value is continuously changed in accordance with the engine load in at least part of the high-load range and at least part of the low-load range, the controller 60 performs the oxygen sensor diagnosis process so as to satisfy the relationship 3 described in the First Embodiment and relationships 9 and 10 described below. FIG. 14 shows an example of each of the relationships 9 and 10.

Relationship 9: In at least part of the low-load range, the controller 60 diagnoses that the oxygen sensor 20 is normal when the third response time is equal to the first low-load response time TLoL1, and the controller 60 diagnoses that the oxygen sensor 20 is deteriorated when the third response time is equal to a second low-load response time TLoL2 that is longer than the first low-load response time TLoL1. In at least part of a first high-load range RHiL1 included in the high-load range, the controller 60 diagnoses that the oxygen sensor 20 is normal when the third response time is equal to a first high-load response time THiL1 that is longer than the second low-load response time TLoL2, and the controller 60 diagnoses that the oxygen sensor 20 is deteriorated when the third response time is equal to a second high-load response time THiL2 that is longer than the first high-load response time THiL1. In at least part of a second high-load range RHiL2 that is higher in engine load than the first high-load range RHiL1 and is included in the high-load range, the controller 60 diagnoses that the oxygen sensor 20 is normal when the third response time is equal to a fifth high-load response time THiL5 that is longer than the second low-load response time TLoL2, and the controller 60 diagnoses that the oxygen sensor 20 is deteriorated when the third response time is equal to a sixth high-load response time THiL6 that is longer than the fifth high-load response time THiL5.

Relationship 10: In at least part of a first low-load range RLoL1 included in the low-load range, the controller 60 diagnoses that the oxygen sensor 20 is normal when the third response time is equal to the first low-load response time TLoL1, and the controller 60 diagnoses that the oxygen sensor 20 is deteriorated when the third response time is equal to a second low-load response time TLoL2 that is longer than the first low-load response time TLoL1. In at least part of a second low-load range RLoL2 that is higher in engine load than the first low-load range RLoL1 and is included in the low-load range, the controller 60 diagnoses that the oxygen sensor 20 is normal when the third response time is equal to a fifth low-load response time TLoL5 that is longer than the second low-load response time TLoL2, and the controller 60 diagnoses that the oxygen sensor 20 is deteriorated when the third response time is equal to a sixth low-load response time TLoL6 that is longer than the fifth low-load response time TLoL5. In at least part of the high-load range, the controller 60 diagnoses that the oxygen sensor 20 is normal when the third response time is equal to the first high-load response time THiL1 that is longer than the sixth low-load response time TLoL6, and the controller 60 diagnoses that the oxygen sensor 20 is deteriorated when the third response time is equal to a second high-load response time THiL2 that is longer than the first high-load response time THiL1.

When the vehicle 1 has a characteristic that the responsiveness of the oxygen sensor 20 decreases as the engine load decreases and the threshold or the correction value is continuously changed in accordance with the engine load in at least part of the high-load range and at least part of the low-load range, the controller 60 performs the oxygen sensor diagnosis process so as to satisfy the relationship 4 described in the First Embodiment and relationships 11 and 12 described below. FIG. 14 shows an example of each of the relationships 11 and 12.

Relationship 11: In at least part of the high-load range, the controller 60 diagnoses that the oxygen sensor 20 is normal when the fourth response time is equal to the third high-load response time THiL3, and the controller 60 diagnoses that the oxygen sensor 20 is deteriorated when the fourth response time is equal to the fourth high-load response time THiL4 that is longer than the third high-load response time THiL3. In at least part of a third low-load range RLoL3 included in the low-load range, the controller 60 diagnoses that the oxygen sensor 20 is normal when the fourth response time is equal to a third low-load response time TLoL3 that is longer than the fourth high-load response time THiL4 and the controller 60 diagnoses that the oxygen sensor 20 is deteriorated when the fourth response time is equal to a fourth low-load response time TLoL4 that is longer than the third low-load response time TLoL3. In at least part of a fourth low-load range RLoL4 which is lower in engine load than the third low-load range RLoL3 and included in the low-load range, the controller 60 diagnoses that the oxygen sensor 20 is normal when the fourth response time is equal to a seventh low-load response time TLoL7 that is longer than the fourth low-load response time TLoL4 and the controller 60 diagnoses that the oxygen sensor 20 is deteriorated when the fourth response time is equal to an eighth low-load response time TLoL8 that is longer than the seventh low-load response time TLoL7.

Relationship 12: In at least part of a third high-load range RHiL3 included in the high-load range, the controller 60 diagnoses that the oxygen sensor 20 is normal when the fourth response time is equal to the third high-load response time THiL3, and the controller 60 diagnoses that the oxygen sensor 20 is deteriorated when the fourth response time is equal to the fourth high-load response time THiL4 that is longer than the third high-load response time THiL3. In at least part of a fourth high-load range RHiL4 which is lower in engine load than the third high-load range RHiL3 and included in the high-load range, the controller 60 diagnoses that the oxygen sensor 20 is normal when the fourth response time is equal to a seventh high-load response time THiL7 that is longer than the fourth high-load response time THiL4 and the controller 60 diagnoses that the oxygen sensor 20 is deteriorated when the fourth response time is equal to an eighth high-load response time THiL8 that is longer than the seventh high-load response time THiL7. In at least part of the low-load range, the controller 60 diagnoses that the oxygen sensor 20 is normal when the fourth response time is equal to the third low-load response time TLoL3 that is longer than the eighth high-load response time THiL8 and the controller 60 diagnoses that the oxygen sensor 20 is deteriorated when the fourth response time is equal to a fourth low-load response time TLoL4 that is longer than the third low-load response time TLoL3.

When the vehicle 1 has a characteristic that the responsiveness of the oxygen sensor 20 decreases as the engine load increases, the threshold or the correction value is changed in three or more steps in accordance with the engine load, and the threshold or the correction value is changed in two or more steps in accordance with the engine load in the high-load range, the controller 60 performs the oxygen sensor diagnosis process so as to satisfy the relationships 3 and 9.

When the vehicle 1 has a characteristic that the responsiveness of the oxygen sensor 20 decreases as the engine load increases, the threshold or the correction value is changed in three or more steps in accordance with the engine load, and the threshold or the correction value is changed in two or more steps in accordance with the engine load in the low-load range, the controller 60 performs the oxygen sensor diagnosis process so as to satisfy the relationships 3 and 10.

When the vehicle 1 has a characteristic that the responsiveness of the oxygen sensor 20 decreases as the engine load decreases, the threshold or the correction value is changed in three or more steps in accordance with the engine load, and the threshold or the correction value is changed in two or more steps in accordance with the engine load in the low-load range, the controller 60 performs the oxygen sensor diagnosis process so as to satisfy the relationships 4 and 11.

When the vehicle 1 has a characteristic that the responsiveness of the oxygen sensor 20 decreases as the engine load decreases, the threshold or the correction value is changed in three or more steps in accordance with the engine load, and the threshold or the correction value is changed in two or more steps in accordance with the engine load in the high-load range, the controller 60 performs the oxygen sensor diagnosis process so as to satisfy the relationships 4 and 12.

When the controller 60 performs the oxygen sensor diagnosis process to satisfy at least one of the relationships 5 to 12, the frequency of diagnosis of deterioration of the oxygen sensor 20 is further increased.

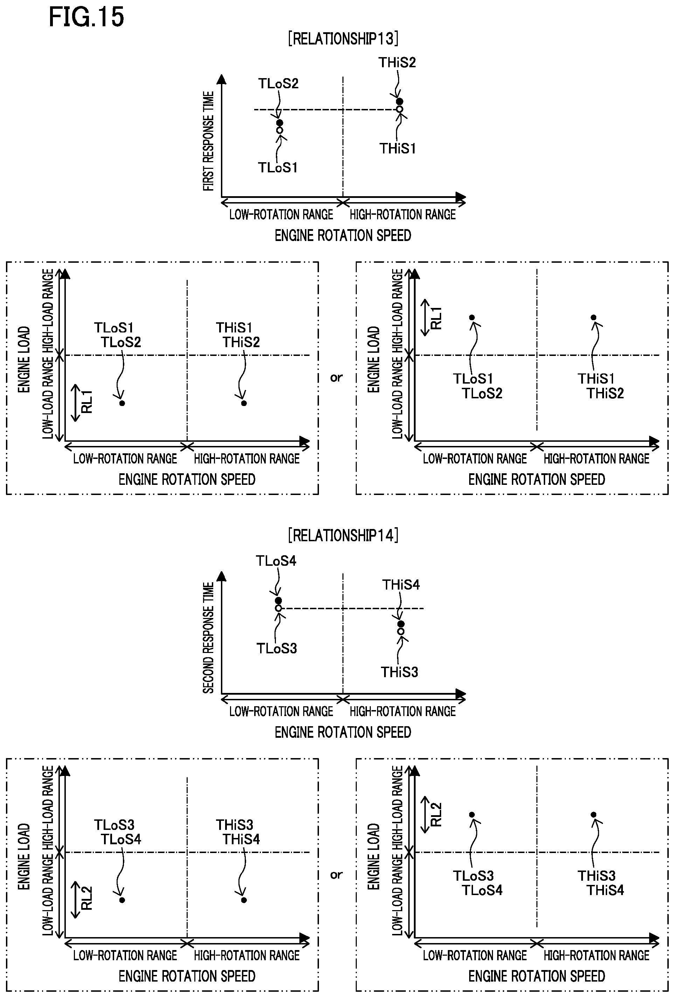

When the vehicle 1 has a characteristic that the responsiveness of the oxygen sensor 20 decreases as the engine rotation speed increases and the threshold or the correction value is changed in accordance with the engine rotation speed irrespective of the engine load, the controller 60 performs the oxygen sensor diagnosis process to satisfy the relationship 1 and a relationship 13 described below. FIG. 15 shows two examples of the relationship 13.

Relationship 13: In a first load range RL1 which is either at least part of the low-load range or at least part of the high-load range and in at least part of the low-rotation range, the controller 60 diagnoses that the oxygen sensor 20 is normal when the first response time is equal to the first low-rotation response time TLoS1, and the controller 60 diagnoses that the oxygen sensor 20 is deteriorated when the first response time is equal to the second low-rotation response time TLoS2 that is longer than the first low-rotation response time TLoS1. In the first load range RL1 and at least part of the high-rotation range, the controller 60 diagnoses that the oxygen sensor 20 is normal when the first response time is equal to the first high-rotation response time THiS1 that is longer than the second low-rotation response time TLoS2, and the controller 60 diagnoses that the oxygen sensor 20 is deteriorated when the first response time is equal to a second high-rotation response time THiS2 that is longer than the first high-rotation response time THiS1.

When the vehicle 1 has a characteristic that the responsiveness of the oxygen sensor 20 decreases as the engine rotation speed decreases and the threshold or the correction value is changed in accordance with the engine rotation speed irrespective of the engine load, the controller 60 performs the oxygen sensor diagnosis process to satisfy the relationship 2 and a relationship 14 described below. FIG. 15 shows two examples of the relationship 14.

Relationship 14: In a second load range RL2 which is either at least part of the low-load range or at least part of the high-load range and in at least part of the high-rotation range, the controller 60 diagnoses that the oxygen sensor 20 is normal when the second response time is equal to the third high-rotation response time THiS3, and the controller 60 diagnoses that the oxygen sensor 20 is deteriorated when the second response time is equal to the fourth high-rotation response time THiS4 that is longer than the third high-rotation response time THiS3. In the second load range RL2 and at least part of the low-rotation range, the controller 60 diagnoses that the oxygen sensor 20 is normal when the second response time is equal to the third low-rotation response time TLoS3 that is longer than the fourth high-rotation response time THiS4, and the controller 60 diagnoses that the oxygen sensor 20 is deteriorated when the second response time is equal to a fourth low-rotation response time TLoS4 that is longer than the third low-rotation response time TLoS3.

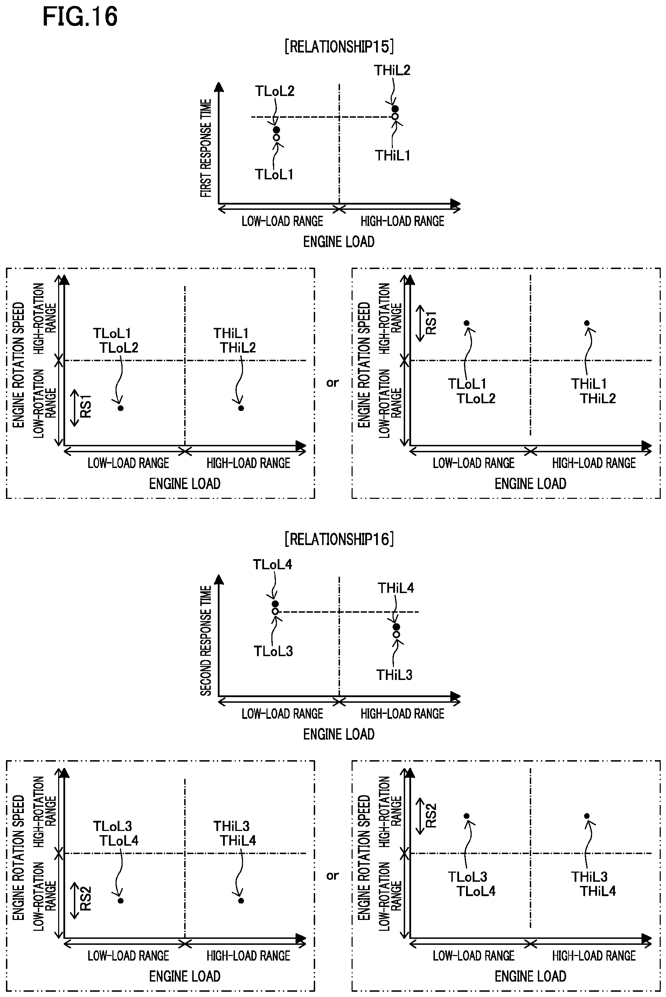

When the vehicle 1 has a characteristic that the responsiveness of the oxygen sensor 20 decreases as the engine load increases and the threshold or the correction value is changed in accordance with the engine load irrespective of the engine rotation speed, the controller 60 performs the oxygen sensor diagnosis process to satisfy the relationship 3 and a relationship 15 described below. FIG. 16 shows two examples of the relationship 15.

Relationship 15: In a first rotation range RS1 which is either at least part of the low-rotation range or at least part of the high-rotation range and in at least part of the low-load range, the controller 60 diagnoses that the oxygen sensor 20 is normal when the third response time is equal to the first low-load response time TLoL1, and the controller 60 diagnoses that the oxygen sensor 20 is deteriorated when the third response time is equal to the second low-load response time TLoL2 that is longer than the first low-load response time TLoL1. In the first rotation range RS1 and in at least part of the high-load range, the controller 60 diagnoses that the oxygen sensor 20 is normal when the third response time is equal to the first high-load response time THiL1 that is longer than the second low-load response time TLoL2 and the controller 60 diagnoses that the oxygen sensor 20 is deteriorated when the third response time is equal to a second high-load response time THiL2 that is longer than the first high-load response time THiL1.

When the vehicle 1 has a characteristic that the responsiveness of the oxygen sensor 20 decreases as the engine load decreases and the threshold or the correction value is changed in accordance with the engine load irrespective of the engine rotation speed, the controller 60 performs the oxygen sensor diagnosis process to satisfy the relationship 4 and a relationship 16 described below. FIG. 16 shows two examples of the relationship 16.

Relationship 16: In a second rotation range RS2 which is either at least part of the low-rotation range or at least part of the high-rotation range and in at least part of the high-load range, the controller 60 diagnoses that the oxygen sensor 20 is normal when the fourth response time is equal to the third high-load response time THiL3, and the controller 60 diagnoses that the oxygen sensor 20 is deteriorated when the fourth response time is equal to the fourth high-load response time THiL4 that is longer than the third high-load response time THiL3. In the second rotation range RS2 and at least part of the low-load range, the controller 60 diagnoses that the oxygen sensor 20 is normal when the fourth response time is equal to the third low-load response time TLoL3 that is longer than the fourth high-load response time THiL4 and the controller 60 diagnoses that the oxygen sensor 20 is deteriorated when the fourth response time is equal to a fourth low-load response time TLoL4 that is longer than the third low-load response time TLoL3.

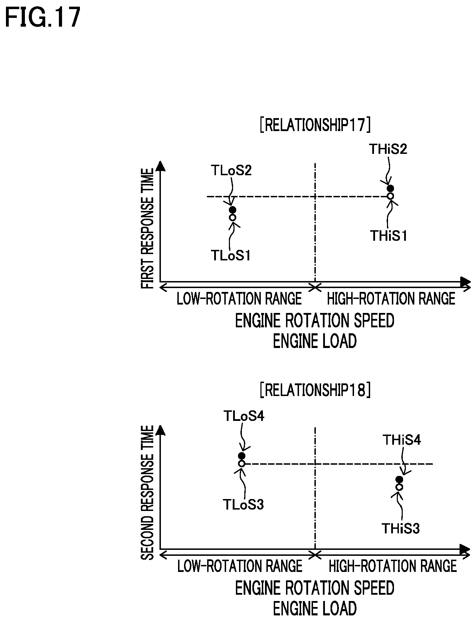

When the vehicle 1 has a characteristic that the responsiveness of the oxygen sensor 20 decreases as the engine rotation speed and the engine load increase and the threshold or the correction value is changed in accordance with the engine rotation speed and the engine load, the controller 60 performs the oxygen sensor diagnosis process to satisfy the relationship 1 and a relationship 17 described below. FIG. 17 shows an example of the relationship 17.

Relationship 17: In at least part of the low-load range and at least part of the low-rotation range, the controller 60 diagnoses that the oxygen sensor 20 is normal when the first response time is equal to the first low-rotation response time TLoS1, and the controller 60 diagnoses that the oxygen sensor 20 is deteriorated when the first response time is equal to the second low-rotation response time TLoS2 that is longer than the first low-rotation response time TLoS1. In at least part of the high-load range and at least part of the high-rotation range, the controller 60 diagnoses that the oxygen sensor 20 is normal when the first response time is equal to a first high-rotation response time THiS1 that is longer than the second low-rotation response time TLoS2, and the controller 60 diagnoses that the oxygen sensor 20 is deteriorated when the first response time is equal to a second high-rotation response time THiS2 that is longer than the first high-rotation response time THiS1.

When the controller 60 performs the oxygen sensor diagnosis process to satisfy the relationships 1 and 17, the controller 60 performs the oxygen sensor diagnosis process to satisfy the relationship 3, too. The first response time is identical with the third response time of the relationship 3, the first low-rotation response time TLoS1 is identical with the first low-load response time TLoL1 of the relationship 3, the second low-rotation response time TLoS2 is identical with the second low-load response time TLoL2 of the relationship 3, the first high-rotation response time THiS1 is identical with the first high-load response time THiL1 of the relationship 3, and the second high-rotation response time THiS2 is identical with the second high-load response time THiL2 of the relationship 3.

When the vehicle 1 has a characteristic that the responsiveness of the oxygen sensor 20 decreases as the engine rotation speed and the engine load decrease and the threshold or the correction value is changed in accordance with the engine rotation speed and the engine load, the controller 60 performs the oxygen sensor diagnosis process to satisfy the relationship 2 and a relationship 18 described below. FIG. 17 shows an example of the relationship 18.

Relationship 18: In at least part of the high-load range and at least part of the high-rotation range, the controller 60 diagnoses that the oxygen sensor 20 is normal when the second response time is equal to the third high-rotation response time THiS3, and the controller 60 diagnoses that the oxygen sensor 20 is deteriorated when the second response time is equal to the fourth high-rotation response time THiS4 that is longer than the third high-rotation response time THiS3. In at least part of the low-load range and at least part of the low-rotation range, the controller 60 diagnoses that the oxygen sensor 20 is normal when the second response time is equal to the third low-rotation response time TLoS3 that is longer than the fourth high-rotation response time THiS4, and the controller 60 diagnoses that the oxygen sensor 20 is deteriorated when the second response time is equal to a fourth low-rotation response time TLoS4 that is longer than the third low-rotation response time TLoS3.

When the controller 60 performs the oxygen sensor diagnosis process to satisfy the relationships 2 and 18, the controller 60 performs the oxygen sensor diagnosis process to satisfy the relationship 4, too. The second response time is identical with the fourth response time of the relationship 4, the third high-rotation response time THiS3 is identical with the third high-load response time THiL3 of the relationship 4, the fourth high-rotation response time THiS4 is identical with the fourth high-load response time THiL4 of the relationship 4, the third low-rotation response time TLoS3 is identical with the third low-load response time TLoL3 of the relationship 4, and the fourth low-rotation response time TLoS4 is identical with the fourth low-load response time TLoL4 of the relationship 4.

When the controller 60 performs the oxygen sensor diagnosis process to satisfy the relationship 17 or the relationship 18, the frequency of diagnosis of deterioration of the oxygen sensor 20 is further increased.

The controller 60 may perform preliminary diagnosis and main diagnosis in the oxygen sensor diagnosis process. For example, the main diagnosis may be performed only when the deterioration of the oxygen sensor 20 is found by the preliminary diagnosis. The diagnosis method may be identical or different between the preliminary diagnosis and the main diagnosis. The controller 60 may perform an oxygen sensor diagnosis process in which Specific Example 1 is combined with Specific Example 2. The controller 60 may perform below-described Specific Example 3 of the oxygen sensor diagnosis process, in place of Specific Example 1 or Specific Example 2 of the oxygen sensor diagnosis process. In Specific Example 3 of the oxygen sensor diagnosis process, the controller 60 changes the method of calculating a calculated value obtained from a signal of the oxygen sensor 20 and related to the responsiveness of the oxygen sensor 20, in accordance with the engine rotation speed and/or the engine load. Then the controller 60 diagnoses the deterioration of the oxygen sensor 20 by comparing the calculated value related to the responsiveness of the oxygen sensor 20 with a threshold. For example, a unit amount of a rise response time is changed in accordance with the engine rotation speed and/or the engine load. The controller 60 may perform an oxygen sensor diagnosis process in which at least two of Specific Example 1, Specific Example 2, or Specific Example 3 are combined.

### [Reference Signs List]

1 vehicle
10 engine
11 combustion chamber
30 exhaust passage member
20 oxygen sensor
50 fuel supplier
60 controller
70 throttle valve

## Claims

1. A vehicle (1) comprising:
an engine (10) which includes at least one combustion chamber (11);
an oxygen sensor (20) which is provided at an exhaust passage member (30) through which exhaust gas exhausted from the at least one combustion chamber (11) passes and which is configured to detect oxygen concentration in the exhaust gas;
a fuel supplier (50) which is configured to supply fuel to the at least one combustion chamber (11); and
a controller (60) which is configured to perform an oxygen sensor diagnosis process of diagnosing deterioration of the oxygen sensor (20) based on a signal of the oxygen sensor (20) and is configured to perform fuel control of controlling a fuel amount supplied to the at least one combustion chamber (11) by controlling the fuel supplier (50), and
when
the fuel control of controlling the fuel amount supplied to the at least one combustion chamber (11) not for diagnosing the deterioration of the oxygen sensor (20) is termed normal fuel control and
the fuel control of controlling the fuel amount supplied to the at least one combustion chamber for diagnosing the deterioration of the oxygen sensor, in which at least one of a cycle or amplitude of increase and decrease of the fuel amount supplied to the at least one combustion chamber is large as compared to fuel amount variation control in the normal fuel control, is termed oxygen sensor diagnosis active fuel control,
the controller (60) is configured to perform the oxygen sensor diagnosis process of diagnosing deterioration of the oxygen sensor (20) by a diagnosis method varied in accordance with at least one of an engine rotation speed or an engine load while the normal fuel control that is not the oxygen sensor diagnosis active fuel control is performed, fuel cut control of temporarily stopping supply of the fuel to the at least one combustion chamber (11) is not performed, and fuel amount variation control with which the fuel amount supplied to the at least one combustion chamber is increased and decreased is performed,
in the oxygen sensor diagnosis process, the controller (60) is configured to diagnose deterioration of the oxygen sensor (20) by comparing a calculated value related to responsiveness of the oxygen sensor (20) with a threshold changed in accordance with at least one of the engine rotation speed or the engine load, or to diagnose deterioration of the oxygen sensor (20) by comparing a value obtained by correcting a calculated value related to responsiveness of the oxygen sensor (20) in accordance with at least one of the engine rotation speed or the engine load with a threshold,
the controller (60) is configured to perform the oxygen sensor diagnosis process to satisfy at least one of relationships 1 to 4 while the normal fuel control that is not the oxygen sensor diagnosis active fuel control is performed, the fuel cut control is not performed, and the fuel amount variation control is performed,
when performing the oxygen sensor diagnosis process to satisfy the relationship 1 or 2, the controller diagnoses by the diagnosis method varied in accordance with at least the engine rotation speed, and when performing the oxygen sensor diagnosis process to satisfy the relationship 3 or 4, the controller diagnoses by the diagnosis method varied in accordance with at least the engine load,
the relationship 1 being arranged so that, in at least part of a low-rotation range in which the engine rotation speed is low, the controller (60) diagnoses that the oxygen sensor (20) is normal when a first response time that is a time required for a change of a signal of the oxygen sensor (20) by a unit amount is equal to a first low-rotation response time (TLoS 1), and the controller (60) diagnoses that the oxygen sensor (20) is deteriorated when the first response time is equal to a second low-rotation response time (TLoS2) that is longer than the first low-rotation response time (TLoS 1), and in at least part of a high-rotation range in which the engine rotation speed is high, the controller (60) diagnoses that the oxygen sensor (20) is normal when the first response time is equal to a first high-rotation response time (THiS 1) that is longer than the second low-rotation response time (TLoS2), and the controller (60) diagnoses that the oxygen sensor (20) is deteriorated when the first response time is equal to a second high-rotation response time (THiS2) that is longer than the first high-rotation response time (THiS 1),
the relationship 2 being arranged so that, in at least part of the high-rotation range in which the engine rotation speed is high, the controller (60) diagnoses that the oxygen sensor (20) is normal when a second response time that is a time required for a change of a signal of the oxygen sensor (20) by a unit amount is equal to a third high-rotation response time (THiS3), and the controller (60) diagnoses that the oxygen sensor (20) is deteriorated when the second response time is equal to a fourth high-rotation response time (THiS4) that is longer than the third high-rotation response time (THiS3), and in at least part of the low-rotation range in which the engine rotation speed is low, the controller (60) diagnoses that the oxygen sensor (20) is normal when the second response time is equal to a third low-rotation response time (TLoS3) that is longer than the fourth high-rotation response time (THiS4), and the controller (60) diagnoses that the oxygen sensor (20) is deteriorated when the second response time is equal to a fourth low-rotation response time (TLoS4) that is longer than the third low-rotation response time (TLoS3),
the relationship 3 being arranged so that, in at least part of a low-load range in which the engine load is low, the controller (60) diagnoses that the oxygen sensor (20) is normal when a third response time that is a time required for a change of a signal of the oxygen sensor (20) by a unit amount is equal to a first low-load response time (TLoL1), and the controller (60) diagnoses that the oxygen sensor (20) is deteriorated when the third response time is equal to a second low-load response time (TLoL2) that is longer than the first low-load response time (TLoL1), and in at least part of a high-load range in which the engine load is high, the controller (60) diagnoses that the oxygen sensor (20) is normal when the third response time is equal to a first high-load response time (THiL1) that is longer than the second low-load response time (TLoL2), and the controller (60) diagnoses that the oxygen sensor (20) is deteriorated when the third response time is equal to a second high-load response time (THiL2) that is longer than the first high-load response time (THiL1), and
the relationship 4 being arranged so that, in at least part of the high-load range in which the engine load is high, the controller (60) diagnoses that the oxygen sensor (20) is normal when a fourth response time that is a time required for a change of a signal of the oxygen sensor (20) by a unit amount is equal to a third high-load response time (THiL3), and the controller (60) diagnoses that the oxygen sensor (20) is deteriorated when the fourth response time is equal to a fourth high-load response time (THiL4) that is longer than the third high-load response time (THiL3), and in at least part of the low-load range in which the engine load is low, the controller (60) diagnoses that the oxygen sensor (20) is normal when the fourth response time is equal to a third low-load response time (TLoL3) that is longer than the fourth high-load response time (THiL4), and the controller (60) diagnoses that the oxygen sensor (20) is deteriorated when the fourth response time is equal to a fourth low-load response time (TLoL4) that is longer than the third low-load response time (TLoL3).

2. The vehicle (1) according to claim 1, further comprising
a catalyst (21) which is provided in the exhaust passage member (30) and is configured to purify the exhaust gas,
the oxygen sensor (20) being an upstream oxygen sensor (20) that is provided upstream of the catalyst (21) in a flow direction of the exhaust gas in the exhaust passage member (30) and is used for the fuel control.

3. The vehicle (1) according to claim 1 or 2, wherein at least one throttle valve (70) is provided for each of the at least one combustion chamber (11).

4. The vehicle (1) according to any one of claims 1 to 3, wherein the controller (60) is configured to perform the oxygen sensor diagnosis process to satisfy at least one of relationships 5 to 12 while the normal fuel control that is not the oxygen sensor diagnosis active fuel control is performed, the fuel cut control of temporarily stopping supply of the fuel to the at least one combustion chamber (11) is not performed, and the fuel amount variation control with which the fuel amount supplied to the at least one combustion chamber is increased and decreased is performed,
the relationship 5 being arranged so that, in at least part of the low-rotation range, the controller (60) diagnoses that the oxygen sensor (20) is normal when the first response time is equal to the first low-rotation response time (TLoS1), and the controller (60) diagnoses that the oxygen sensor (20) is deteriorated when the first response time is equal to the second low-rotation response time (TLoS2) that is longer than the first low-rotation response time (TLoS1), in at least part of a first high-rotation range (RHiS1) included in the high-rotation range, the controller (60) diagnoses that the oxygen sensor (20) is normal when the first response time is equal to the first high-rotation response time (THiS1) that is longer than the second low-rotation response time (TLoS2), and the controller (60) diagnoses that the oxygen sensor (20) is deteriorated when the first response time is equal to the second high-rotation response time (THiS2) that is longer than the first high-rotation response time (THiS1), and in at least part of a second high-rotation range (RHiS2) that is higher in engine rotation speed than the first high-rotation range (RHiS1) and is included in the high-rotation range, the controller (60) diagnoses that the oxygen sensor (20) is normal when the first response time is equal to a fifth high-rotation response time (THiS5) that is longer than the second low-rotation response time (TLoS2), and the controller (60) diagnoses that the oxygen sensor (20) is deteriorated when the first response time is equal to a sixth high-rotation response time (THiS6) that is longer than the fifth high-rotation response time (THiS5),
the relationship 6 being arranged so that, in at least part of a first low-rotation range (RLoS1) included in the low-rotation range, the controller (60) diagnoses that the oxygen sensor (20) is normal when the first response time is equal to the first low-rotation response time (TLoS1), and the controller (60) diagnoses that the oxygen sensor (20) is deteriorated when the first response time is equal to the second low-rotation response time (TLoS2) that is longer than the first low-rotation response time (TLoS1), in at least part of a second low-rotation range (RLoS2) that is higher in engine rotation speed than the first low-rotation range (RLoS1) and is included in the low-rotation range, the controller (60) diagnoses that the oxygen sensor (20) is normal when the first response time is equal to a fifth low-rotation response time (TLoS5) that is longer than the second low-rotation response time (TLoS2), and the controller (60) diagnoses that the oxygen sensor (20) is deteriorated when the first response time is equal to a sixth low-rotation response time (TLoS6) that is longer than the fifth low-rotation response time (TLoS5), and in at least part of the high-rotation range, the controller (60) diagnoses that the oxygen sensor (20) is normal when the first response time is equal to the first high-rotation response time (THiS 1) that is longer than the sixth low-rotation response time (TLoS6), and the controller (60) diagnoses that the oxygen sensor (20) is deteriorated when the first response time is equal to the second high-rotation response time (THiS2) that is longer than the first high-rotation response time (THiS1),
the relationship 7 being arranged so that, in at least part of the high-rotation range, the controller (60) diagnoses that the oxygen sensor (20) is normal when the second response time is equal to the third high-rotation response time (THiS3), and the controller (60) diagnoses that the oxygen sensor (20) is deteriorated when the second response time is equal to the fourth high-rotation response time (THiS4) that is longer than the third high-rotation response time (THiS3), in at least part of a third low-rotation range (RLoS3) included in the low-rotation range, the controller (60) diagnoses that the oxygen sensor (20) is normal when the second response time is equal to the third low-rotation response time (TLoS3) that is longer than the fourth high-rotation response time (THiS4), and the controller (60) diagnoses that the oxygen sensor (20) is deteriorated when the second response time is equal to the fourth low-rotation response time (TLoS4) that is longer than the third low-rotation response time (TLoS3), and in at least part of a fourth low-rotation range (RLoS4) that is lower in engine rotation speed than the third low-rotation range (RLoS3) and is included in the low-rotation range, the controller (60) diagnoses that the oxygen sensor (20) is normal when the second response time is equal to a seventh low-rotation response time (TLoS7) that is longer than the fourth low-rotation response time (TLoS4), and the controller (60) diagnoses that the oxygen sensor (20) is deteriorated when the second response time is equal to an eighth low-rotation response time (TLoS8) that is longer than the seventh low-rotation response time (TLoS7),
the relationship 8 being arranged so that, in at least part of a third high-rotation range (RHiS3) included in the high-rotation range, the controller (60) diagnoses that the oxygen sensor (20) is normal when the second response time is equal to the third high-rotation response time (THiS3), and the controller (60) diagnoses that the oxygen sensor (20) is deteriorated when the second response time is equal to the fourth high-rotation response time (THiS4) that is longer than the third high-rotation response time (THiS3), in at least part of a fourth high-rotation range (RHiS4) that is lower in engine rotation speed than the third high-rotation range (RHiS3) and is included in the high-rotation range, the controller (60) diagnoses that the oxygen sensor (20) is normal when the second response time is equal to a seventh high-rotation response time (THiS7) that is longer than the fourth high-rotation response time (THiS4), and the controller (60) diagnoses that the oxygen sensor (20) is deteriorated when the second response time is equal to an eighth high-rotation response time (THiS8) that is longer than the seventh high-rotation response time (THiS7), and in at least part of the low-rotation range, the controller (60) diagnoses that the oxygen sensor (20) is normal when the second response time is equal to the third low-rotation response time (TLoS3) that is longer than the eighth high-rotation response time (THiS8), and the controller (60) diagnoses that the oxygen sensor (20) is deteriorated when the second response time is equal to the fourth low-rotation response time (TLoS4) that is longer than the third low-rotation response time (TLoS3),
the relationship 9 being arranged so that, in at least part of the low-load range, the controller (60) diagnoses that the oxygen sensor (20) is normal when the third response time is equal to the first low-load response time (TLoL1), and the controller (60) diagnoses that the oxygen sensor (20) is deteriorated when the third response time is equal to the second low-load response time (TLoL2) that is longer than the first low-load response time (TLoL1), in at least part of a first high-load range (RHiL1) included in the high-load range, the controller (60) diagnoses that the oxygen sensor (20) is normal when the third response time is equal to the first high-load response time (THiL1) that is longer than the second low-load response time (TLoL2), and the controller (60) diagnoses that the oxygen sensor (20) is deteriorated when the third response time is equal to the second high-load response time (THiL2) that is longer than the first high-load response time (THiL1), and in at least part of a second high-load range (RHiL2) that is higher in engine load than the first high-load range (RHiL1) and is included in the high-load range, the controller (60) diagnoses that the oxygen sensor (20) is normal when the third response time is equal to a fifth high-load response time (THiL5) that is longer than the second low-load response time (TLoL2), and the controller (60) diagnoses that the oxygen sensor (20) is deteriorated when the third response time is equal to a sixth high-load response time (THiL6) that is longer than the fifth high-load response time (THiL5),
the relationship 10 being arranged so that, in at least part of a low-load range included in the low-load range, the controller (60) diagnoses that the oxygen sensor (20) is normal when the third response time is equal to the first low-load response time (TLoL1), and the controller (60) diagnoses that the oxygen sensor (20) is deteriorated when the third response time is equal to the second low-load response time (TLoL2) that is longer than the first low-load response time (TLoL1), in at least part of a second low-load range (RLoL2) that is higher in engine load than the first low-load range (RLoL1) and is included in the low-load range, the controller (60) diagnoses that the oxygen sensor (20) is normal when the third response time is equal to a fifth low-load response time (TLoL5) that is longer than the second low-load response time (TLoL2), and the controller (60) diagnoses that the oxygen sensor (20) is deteriorated when the third response time is equal to a sixth low-load response time (TLoL6) that is longer than the fifth low-load response time (TLoL5), and in at least part of the high-load range, the controller (60) diagnoses that the oxygen sensor (20) is normal when the third response time is equal to the first high-load response time (THiL1) that is longer than the sixth low-load response time (TLoL6), and the controller (60) diagnoses that the oxygen sensor (20) is deteriorated when the third response time is equal to the second high-load response time (THiL2) that is longer than the first high-load response time (THiL1),
the relationship 11 being arranged so that, in at least part of the high-load range, the controller (60) diagnoses that the oxygen sensor (20) is normal when the fourth response time is equal to the third high-load response time (THiL3), and the controller (60) diagnoses that the oxygen sensor (20) is deteriorated when the fourth response time is equal to the fourth high-load response time (THiL4) that is longer than the third high-load response time (THiL3), in at least part of a third low-load range (RLoL3) included in the low-load range, the controller (60) diagnoses that the oxygen sensor (20) is normal when the fourth response time is equal to the third low-load response time (TLoL3) that is longer than the fourth high-load response time (THiL4), and the controller (60) diagnoses that the oxygen sensor (20) is deteriorated when the fourth response time is equal to the fourth low-load response time (TLoL4) that is longer than the third low-load response time (TLoL3), and in at least part of a fourth low-load range (RLoL4) which is lower in engine load than the third low-load range (RLoL3) and included in the low-load range, the controller (60) diagnoses that the oxygen sensor (20) is normal when the fourth response time is equal to a seventh low-load response time (TLoL7) that is longer than the fourth low-load response time (TLoL4), and the controller (60) diagnoses that the oxygen sensor (20) is deteriorated when the fourth response time is equal to an eighth low-load response time (TLoL8) that is longer than the seventh low-load response time (TLoL7), and
the relationship 12 being arranged so that, in at least part of a third high-load range (RHiL3) included in the high-load range, the controller (60) diagnoses that the oxygen sensor (20) is normal when the fourth response time is equal to the third high-load response time (THiL3), and the controller (60) diagnoses that the oxygen sensor (20) is deteriorated when the fourth response time is equal to the fourth high-load response time (THiL4) that is longer than the third high-load response time (THiL3), in at least part of a fourth high-load range (RHiL4) which is lower in engine load than the third high-load range (RHiL3) and included in the high-load range, the controller (60) diagnoses that the oxygen sensor (20) is normal when the fourth response time is equal to a seventh high-load response time (THiL7) that is longer than the fourth high-load response time (THiL4), and the controller (60) diagnoses that the oxygen sensor (20) is deteriorated when the fourth response time is equal to an eighth high-load response time (THiL8) that is longer than the seventh high-load response time (THiL7), and in at least part of the low-load range, the controller (60) diagnoses that the oxygen sensor (20) is normal when the fourth response time is equal to the third low-load response time (TLoL3) that is longer than the eighth high-load response time (THiL8), and the controller (60) diagnoses that the oxygen sensor (20) is deteriorated when the fourth response time is equal to the fourth low-load response time (TLoL4) that is longer than the third low-load response time (TLoL3).

5. The vehicle (1) according to any one of claims 1 to 4, wherein at least one of the first response time of the relationship 1, the second response time of the relationship 2, the third response time of the relationship 3, or the fourth response time of the relationship 4 is a time required for a change of the signal of the oxygen sensor (20) by the unit amount when the signal of the oxygen sensor (20) is on rise.

6. The vehicle (1) according to any one of claims 1 to 5, wherein at least one of the first response time of the relationship 1, the second response time of the relationship 2, the third response time of the relationship 3, or the fourth response time of the relationship 4 is a time required for a change of the signal of the oxygen sensor (20) by the unit amount when the signal of the oxygen sensor (20) is on decline.

7. The vehicle (1) according to any one of claims 1 to 6, wherein the controller (60) is configured to perform the oxygen sensor diagnosis process to satisfy at least one of relationships 13 to 18 while the normal fuel control that is not the oxygen sensor diagnosis active fuel control is performed, the fuel cut control of temporarily stopping supply of the fuel to the at least one combustion chamber (11) is not performed, and the fuel amount variation control with which the fuel amount supplied to the at least one combustion chamber is increased and decreased is performed,
the relationship 13 being arranged so that, in a first load range which is either at least part of the low-load range in which the engine load is low or at least part of the high-load range in which the engine load is high and in at least part of the low-rotation range, the controller (60) diagnoses that the oxygen sensor (20) is normal when the first response time is equal to the first low-rotation response time (TLoS1), and the controller (60) diagnoses that the oxygen sensor (20) is deteriorated when the first response time is equal to the second low-rotation response time (TLoS2) that is longer than the first low-rotation response time (TLoS1), and in the first load range and at least part of the high-rotation range, the controller (60) diagnoses that the oxygen sensor (20) is normal when the first response time is equal to the first high-rotation response time (THiS1) that is longer than the second low-rotation response time (TLoS2), and the controller (60) diagnoses that the oxygen sensor (20) is deteriorated when the first response time is equal to the second high-rotation response time (THiS2) that is longer than the first high-rotation response time (THiS1),
the relationship 14 being arranged so that, in a second load range which is either at least part of the low-load range in which the engine load is low or at least part of the high-load range in which the engine load is high and in at least part of the high-rotation range, the controller (60) diagnoses that the oxygen sensor (20) is normal when the second response time is equal to the third high-rotation response time (THiS3), and the controller (60) diagnoses that the oxygen sensor (20) is deteriorated when the second response time is equal to the fourth high-rotation response time (THiS4) that is longer than the third high-rotation response time (THiS3), and
in the second load range and at least part of the low-rotation range, the controller (60) diagnoses that the oxygen sensor (20) is normal when the second response time is equal to the third low-rotation response time (TLoS3) that is longer than the fourth high-rotation response time (THiS4), and the controller (60) diagnoses that the oxygen sensor (20) is deteriorated when the second response time is equal to the fourth low-rotation response time (TLoS4) that is longer than the third low-rotation response time (TLoS3),
the relationship 15 being arranged so that, in a first rotation range which is either at least part of the low-rotation range in which the engine rotation speed is low or at least part of the high-rotation range in which the engine rotation speed is high and in at least part of the low-load range, the controller (60) diagnoses that the oxygen sensor (20) is normal when the third response time is equal to the first low-load response time (TLoL1), and the controller (60) diagnoses that the oxygen sensor (20) is deteriorated when the third response time is equal to the second low-load response time (TLoL2) that is longer than the first low-load response time (TLoL1), and in the first rotation range and at least part of the high-load range, the controller (60) diagnoses that the oxygen sensor (20) is normal when the third response time is equal to the first high-load response time (THiL1) that is longer than the second low-load response time (TLoL2), and the controller (60) diagnoses that the oxygen sensor (20) is deteriorated when the third response time is equal to the second high-load response time (THiL2) that is longer than the first high-load response time (THiL1),
the relationship 16 being arranged so that, in a second rotation range which is either at least part of the low-rotation range in which the engine rotation speed is low or at least part of the high-rotation range in which the engine rotation speed is high and in at least part of the high-load range, the controller (60) diagnoses that the oxygen sensor (20) is normal when the fourth response time is equal to the third high-load response time (THiL3), and the controller (60) diagnoses that the oxygen sensor (20) is deteriorated when the fourth response time is equal to the fourth high-load response time (THiL4) that is longer than the third high-load response time (THiL3), and
in the second rotation range and at least part of the low-load range, the controller (60) diagnoses that the oxygen sensor (20) is normal when the fourth response time is equal to the third low-load response time (TLoL3) that is longer than the fourth high-load response time (THiL4), and the controller (60) diagnoses that the oxygen sensor (20) is deteriorated when the fourth response time is equal to the fourth low-load response time (TLoL4) that is longer than the third low-load response time (TLoL3),
the relationship 17 being arranged so that, in at least part of the low-load range in which the engine load is low and at least part of the low-rotation range, the controller (60) diagnoses that the oxygen sensor (20) is normal when the first response time is equal to the first low-rotation response time (TLoS1), and the controller (60) diagnoses that the oxygen sensor (20) is deteriorated when the first response time is equal to the second low-rotation response time (TLoS2) that is longer than the first low-rotation response time (TLoS 1), and in at least part of the high-load range in which the engine load is high and at least part of the high-rotation range, the controller (60) diagnoses that the oxygen sensor (20) is normal when the first response time is equal to the first high-rotation response time (THiS 1) that is longer than the second low-rotation response time (TLoS2), and the controller (60) diagnoses that the oxygen sensor (20) is deteriorated when the first response time is equal to the second high-rotation response time (THiS2) that is longer than the first high-rotation response time (THiS 1), and
the relationship 18 being arranged so that, in at least part of the high-load range in which the engine load is high and at least part of the high-rotation range, the controller diagnoses that the oxygen sensor (20) is normal when the second response time is equal to the third high-rotation response time (THiS3), and the controller (60) diagnoses that the oxygen sensor (20) is deteriorated when the second response time is equal to the fourth high-rotation response time (THiS4) that is longer than the third high-rotation response time (THiS3), and in at least part of the low-load range in which the engine load is low and at least part of the low-rotation range, the controller (60) diagnoses that the oxygen sensor (20) is normal when the second response time is equal to the third low-rotation response time (TLoS3) that is longer than the fourth high-rotation response time (THiS4), and the controller (60) diagnoses that the oxygen sensor (20) is deteriorated when the second response time is equal to the fourth low-rotation response time (TLoS4) that is longer than the third low-rotation response time (TLoS3).

## Patentansprüche

1. Ein Fahrzeug (1), das folgende Merkmale aufweist:
einen Motor (10), der zumindest eine Verbrennungskammer (11) umfasst;
einen Sauerstoffsensor (20), der an einem Auslasskanalbauglied (30) vorgesehen ist, durch das Abgas, das aus der zumindest einen Verbrennungskammer (11) ausgelassen wird, verläuft, und der dazu konfiguriert ist, eine Sauerstoffkonzentration in dem Abgas zu erfassen;
eine Kraftstoffzuführeinrichtung (50), die dazu konfiguriert ist, der zumindest einen Verbrennungskammer (11) Kraftstoff zuzuführen; und
eine Steuereinrichtung (60), die dazu konfiguriert ist, einen Sauerstoffsensordiagnoseprozess zum Diagnostizieren einer Verschlechterung des Sauerstoffsensors (20) basierend auf einem Signal des Sauerstoffsensors (20) durchzuführen, und die dazu konfiguriert ist, eine Kraftstoffsteuerung zum Steuern einer Kraftstoffmenge, die der zumindest einen Verbrennungskammer (11) zugeführt wird, durch Steuern der Kraftstoffzuführeinrichtung (50) durchzuführen, und
wenn
die Kraftstoffsteuerung zum Steuern der Kraftstoffmenge, die der zumindest einen Verbrennungskammer (11) nicht zum Diagnostizieren der Verschlechterung des Sauerstoffsensors (20) zugeführt wird, als normale Kraftstoffsteuerung bezeichnet wird, und
die Kraftstoffsteuerung zum Steuern der Kraftstoffmenge, die der zumindest einen Verbrennungskammer zum Diagnostizieren der Verschlechterung des Sauerstoffsensors zugeführt wird, in der zumindest eines von einem Zyklus oder einer Amplitude einer Erhöhung und einer Verringerung der Kraftstoffmenge, die der zumindest einen Verbrennungskammer zugeführt wird, im Vergleich zu einer Kraftstoffmengenvariationssteuerung in der normalen Kraftstoffsteuerung groß ist, als aktive Kraftstoffsteuerung zur Sauerstoffsensordiagnose bezeichnet wird,
die Steuereinrichtung (60) dazu konfiguriert ist, den Sauerstoffsensordiagnoseprozess zum Diagnostizieren einer Verschlechterung des Sauerstoffsensors (20) durch ein Diagnoseverfahren durchzuführen, das gemäß zumindest einem von einer Motordrehzahl oder einer Motorlast variiert wird, während die normale Kraftstoffsteuerung, die nicht die aktive Kraftstoffsteuerung zur Sauerstoffsensordiagnose ist, durchgeführt wird, eine Kraftstoffabschaltsteuerung zum vorübergehenden Stoppen der Zufuhr des Kraftstoffs zu der zumindest einen Verbrennungskammer (11) nicht durchgeführt wird, und eine Kraftstoffmengenvariationssteuerung, mit der die Kraftstoffmenge, die der zumindest einen Verbrennungskammer zugeführt wird, erhöht und verringert wird, durchgeführt wird,
in dem Sauerstoffsensordiagnoseprozess die Steuereinrichtung (60) dazu konfiguriert ist, eine Verschlechterung des Sauerstoffsensors (20) zu diagnostizieren durch Vergleichen eines berechneten Werts, der sich auf eine Ansprechempfindlichkeit des Sauerstoffsensors (20) bezieht, mit einem Schwellenwert, der gemäß zumindest einem von der Motordrehzahl oder der Motorlast geändert wird, oder eine Verschlechterung des Sauerstoffsensors (20) zu diagnostizieren durch Vergleichen eines Werts, der durch Korrigieren eines berechneten Werts, der sich auf eine Ansprechempfindlichkeit des Sauerstoffsensors (20) bezieht, gemäß zumindest einem von der Motordrehzahl oder der Motorlast erhalten wird, mit einem Schwellenwert,
die Steuereinrichtung (60) dazu konfiguriert ist, den Sauerstoffsensordiagnoseprozess durchzuführen, um zumindest eine der Beziehungen 1 bis 4 zu erfüllen, während die normale Kraftstoffsteuerung, die nicht die aktive Kraftstoffsteuerung zur Sauerstoffsensordiagnose ist, durchgeführt wird, die Kraftstoffabschaltsteuerung nicht durchgeführt wird, und die Kraftstoffmengenvariationssteuerung durchgeführt wird,
wenn der Sauerstoffsensordiagnoseprozess durchgeführt wird, um die Beziehung 1 oder 2 zu erfüllen, die Steuereinrichtung durch das Diagnoseverfahren diagnostiziert, das gemäß zumindest der Motordrehzahl variiert wird, und wenn der Sauerstoffsensordiagnoseprozess durchgeführt wird, um die Beziehung 3 oder 4 zu erfüllen, die Steuereinrichtung durch das Diagnoseverfahren diagnostiziert, das gemäß zumindest der Motorlast variiert wird,
wobei die Beziehung 1 so angeordnet ist, dass in zumindest einem Teil eines Niedrigdrehzahlbereichs, in dem die Motordrehzahl niedrig ist, die Steuereinrichtung (60) diagnostiziert, dass der Sauerstoffsensor (20) normal ist, wenn eine erste Ansprechzeit, die eine Zeit ist, die für eine Änderung eines Signals des Sauerstoffsensors (20) um einen Einheitsbetrag erforderlich ist, gleich einer ersten Niedrigdrehzahl-Ansprechzeit (TLoS1) ist, und die Steuereinrichtung (60) diagnostiziert, dass der Sauerstoffsensor (20) verschlechtert ist, wenn die erste Ansprechzeit gleich einer zweiten Niedrigdrehzahl-Ansprechzeit (TLoS2) ist, die länger als die erste Niedrigdrehzahl-Ansprechzeit (TLoS1) ist, und in zumindest einem Teil eines Hochdrehzahlbereichs, in dem die Motordrehzahl hoch ist, die Steuereinrichtung (60) diagnostiziert, dass der Sauerstoffsensor (20) normal ist, wenn die erste Ansprechzeit gleich einer ersten Hochdrehzahl-Ansprechzeit (THiS1) ist, die länger als die zweite Niedrigdrehzahl-Ansprechzeit (TLoS2) ist, und die Steuereinrichtung (60) diagnostiziert, dass der Sauerstoffsensor (20) verschlechtert ist, wenn die erste Ansprechzeit gleich einer zweiten Hochdrehzahl-Ansprechzeit (THiS2) ist, die länger als die erste Hochdrehzahl-Ansprechzeit (THiS1) ist,
wobei die Beziehung 2 so angeordnet ist, dass in zumindest einem Teil des Hochdrehzahlbereichs, in dem die Motordrehzahl hoch ist, die Steuereinrichtung (60) diagnostiziert, dass der Sauerstoffsensor (20) normal ist, wenn eine zweite Ansprechzeit, die eine Zeit ist, die für eine Änderung eines Signals des Sauerstoffsensors (20) um einen Einheitsbetrag erforderlich ist, gleich einer dritten Hochdrehzahl-Ansprechzeit (THiS3) ist, und die Steuereinrichtung (60) diagnostiziert, dass der Sauerstoffsensor (20) verschlechtert ist, wenn die zweite Ansprechzeit gleich einer vierten Hochdrehzahl-Ansprechzeit (THiS4) ist, die länger als die dritte Hochdrehzahl-Ansprechzeit (THiS3) ist, und in zumindest einem Teil des Niedrigdrehzahlbereichs, in dem die Motordrehzahl niedrig ist, die Steuereinrichtung (60) diagnostiziert, dass der Sauerstoffsensor (20) normal ist, wenn die zweite Ansprechzeit gleich einer dritten Niedrigdrehzahl-Ansprechzeit (TLoS3) ist, die länger als die vierte Hochdrehzahl-Ansprechzeit (THiS4) ist, und die Steuereinrichtung (60) diagnostiziert, dass der Sauerstoffsensor (20) verschlechtert ist, wenn die zweite Ansprechzeit gleich einer vierten Niedrigdrehzahl-Ansprechzeit (TLoS4) ist, die länger als die dritte Niedrigdrehzahl-Ansprechzeit (TLoS3) ist,
wobei die Beziehung 3 so angeordnet ist, dass in zumindest einem Teil eines Niedriglastbereichs, in dem die Motorlast niedrig ist, die Steuereinrichtung (60) diagnostiziert, dass der Sauerstoffsensor (20) normal ist, wenn eine dritte Ansprechzeit, die eine Zeit ist, die für eine Änderung eines Signals des Sauerstoffsensors (20) um einen Einheitsbetrag erforderlich ist, gleich einer ersten Niedriglast-Ansprechzeit (TLoL1) ist, und die Steuereinrichtung (60) diagnostiziert, dass der Sauerstoffsensor (20) verschlechtert ist, wenn die dritte Ansprechzeit gleich einer zweiten Niedriglast-Ansprechzeit (TLoL2) ist, die länger als die erste Niedriglast-Ansprechzeit (TLoL1) ist, und in zumindest einem Teil eines Hochlastbereichs, in dem die Motorlast hoch ist, die Steuereinrichtung (60) diagnostiziert, dass der Sauerstoffsensor (20) normal ist, wenn die dritte Ansprechzeit gleich einer ersten Hochlast-Ansprechzeit (THiL1) ist, die länger als die zweite Niedriglast-Ansprechzeit (TLoL2) ist, und die Steuereinrichtung (60) diagnostiziert, dass der Sauerstoffsensor (20) verschlechtert ist, wenn die dritte Ansprechzeit gleich einer zweiten Hochlast-Ansprechzeit (THiL2) ist, die länger als die erste Hochlast-Ansprechzeit (THiL1) ist, und
wobei die Beziehung 4 so angeordnet ist, dass in zumindest einem Teil des Hochlastbereichs, in dem die Motorlast hoch ist, die Steuereinrichtung (60) diagnostiziert, dass der Sauerstoffsensor (20) normal ist, wenn eine vierte Ansprechzeit, die eine Zeit ist, die für eine Änderung eines Signals des Sauerstoffsensors (20) um einen Einheitsbetrag erforderlich ist, gleich einer dritten Hochlast-Ansprechzeit (THiL3) ist, und die Steuereinrichtung (60) diagnostiziert, dass der Sauerstoffsensor (20) verschlechtert ist, wenn die vierte Ansprechzeit gleich einer vierten Hochlast-Ansprechzeit (THiL4) ist, die länger als die dritte Hochlast-Ansprechzeit (THiL3) ist, und in zumindest einem Teil des Niedriglastbereichs, in dem die Motorlast niedrig ist, die Steuereinrichtung (60) diagnostiziert, dass der Sauerstoffsensor (20) normal ist, wenn die vierte Ansprechzeit gleich einer dritten Niedriglast-Ansprechzeit (TLoL3) ist, die länger als die vierte Hochlast-Ansprechzeit (THiL4) ist, und die Steuereinrichtung (60) diagnostiziert, dass der Sauerstoffsensor (20) verschlechtert ist, wenn die vierte Ansprechzeit gleich einer vierten Niedriglast-Ansprechzeit (TLoL4) ist, die länger als die dritte Niedriglast-Ansprechzeit (TLoL3) ist.

2. Das Fahrzeug (1) gemäß Anspruch 1, das ferner folgende Merkmale aufweist:
einen Katalysator (21), der in dem Auslasskanalbauglied (30) vorgesehen ist und dazu konfiguriert ist, das Abgas zu reinigen,
wobei der Sauerstoffsensor (20) ein stromaufwärtiger Sauerstoffsensor (20) ist, der stromaufwärts von dem Katalysator (21) in einer Flussrichtung des Abgases in dem Auslasskanalbauglied (30) vorgesehen ist und für die Kraftstoffsteuerung verwendet wird.

3. Das Fahrzeug (1) gemäß Anspruch 1 oder 2, bei dem zumindest ein Drosselventil (70) für jede der zumindest einen Verbrennungskammer (11) vorgesehen ist.

4. Das Fahrzeug (1) gemäß einem der Ansprüche 1 bis 3, bei dem die Steuereinrichtung (60) dazu konfiguriert ist, den Sauerstoffsensordiagnoseprozess durchzuführen, um zumindest eine der Beziehungen 5 bis 12 zu erfüllen, während die normale Kraftstoffsteuerung, die nicht die aktive Kraftstoffsteuerung zur Sauerstoffsensordiagnose ist, durchgeführt wird, die Kraftstoffabschaltsteuerung zum vorübergehenden Stoppen der Zufuhr des Kraftstoffs zu der zumindest einen Verbrennungskammer (11) nicht durchgeführt wird, und die Kraftstoffmengenvariationssteuerung, mit der die Kraftstoffmenge, die der zumindest einen Verbrennungskammer zugeführt wird, erhöht und verringert wird, durchgeführt wird,
wobei die Beziehung 5 so angeordnet ist, dass in zumindest einem Teil des Niedrigdrehzahlbereichs die Steuereinrichtung (60) diagnostiziert, dass der Sauerstoffsensor (20) normal ist, wenn die erste Ansprechzeit gleich der ersten Niedrigdrehzahl-Ansprechzeit (TLoS1) ist, und die Steuereinrichtung (60) diagnostiziert, dass der Sauerstoffsensor (20) verschlechtert ist, wenn die erste Ansprechzeit gleich der zweiten Niedrigdrehzahl-Ansprechzeit (TLoS2) ist, die länger als die erste Niedrigdrehzahl-Ansprechzeit (TLoS1) ist, in zumindest einem Teil eines ersten Hochdrehzahlbereichs (RHiS1), der in dem Hochdrehzahlbereich enthalten ist, die Steuereinrichtung (60) diagnostiziert, dass der Sauerstoffsensor (20) normal ist, wenn die erste Ansprechzeit gleich der ersten Hochdrehzahl-Ansprechzeit (THiS1) ist, die länger als die zweite Niedrigdrehzahl-Ansprechzeit (TLoS2) ist, und die Steuereinrichtung (60) diagnostiziert, dass der Sauerstoffsensor (20) verschlechtert ist, wenn die erste Ansprechzeit gleich der zweiten Hochdrehzahl-Ansprechzeit (THiS2) ist, die länger als die erste Hochdrehzahl-Ansprechzeit (THiS1) ist, und in zumindest einem Teil eines zweiten Hochdrehzahlbereichs (RHiS2), der in der Motordrehzahl höher als der erste Hochdrehzahlbereich (RHiS1) ist und in dem Hochdrehzahlbereich enthalten ist, die Steuereinrichtung (60) diagnostiziert, dass der Sauerstoffsensor (20) normal ist, wenn die erste Ansprechzeit gleich einer fünften Hochdrehzahl-Ansprechzeit (THiS5) ist, die länger als die zweite Niedrigdrehzahl-Ansprechzeit (TLoS2) ist, und die Steuereinrichtung (60) diagnostiziert, dass der Sauerstoffsensor (20) verschlechtert ist, wenn die erste Ansprechzeit gleich einer sechsten Hochdrehzahl-Ansprechzeit (THiS6) ist, die länger als die fünfte Hochdrehzahl-Ansprechzeit (THiS5) ist,
wobei die Beziehung 6 so angeordnet ist, dass in zumindest einem Teil eines ersten Niedrigdrehzahlbereichs (RLoS1), der in dem Niedrigdrehzahlbereich enthalten ist, die Steuereinrichtung (60) diagnostiziert, dass der Sauerstoffsensor (20) normal ist, wenn die erste Ansprechzeit gleich der ersten Niedrigdrehzahl-Ansprechzeit (TLoS1) ist, und die Steuereinrichtung (60) diagnostiziert, dass der Sauerstoffsensor (20) verschlechtert ist, wenn die erste Ansprechzeit gleich der zweiten Niedrigdrehzahl-Ansprechzeit (TLoS2) ist, die länger als die erste Niedrigdrehzahl-Ansprechzeit (TLoS1) ist, in zumindest einem Teil eines zweiten Niedrigdrehzahlbereichs (RLoS2), der in der Motordrehzahl höher als der erste Niedrigdrehzahlbereich (RLoS1) ist und in dem Niedrigdrehzahlbereich enthalten ist, die Steuereinrichtung (60) diagnostiziert, dass der Sauerstoffsensor (20) normal ist, wenn die erste Ansprechzeit gleich einer fünften Niedrigdrehzahl-Ansprechzeit (TLoS5) ist, die länger als die zweite Niedrigdrehzahl-Ansprechzeit (TLoS2) ist, und die Steuereinrichtung (60) diagnostiziert, dass der Sauerstoffsensor (20) verschlechtert ist, wenn die erste Ansprechzeit gleich einer sechsten Niedrigdrehzahl-Ansprechzeit (TLoS6) ist, die länger als die fünfte Niedrigdrehzahl-Ansprechzeit (TLoS5) ist, und in zumindest einem Teil des Hochdrehzahlbereichs die Steuereinrichtung (60) diagnostiziert, dass der Sauerstoffsensor (20) normal ist, wenn die erste Ansprechzeit gleich der ersten Hochdrehzahl-Ansprechzeit (THiS1) ist, die länger als die sechste Niedrigdrehzahl-Ansprechzeit (TLoS6) ist, und die Steuereinrichtung (60) diagnostiziert, dass der Sauerstoffsensor (20) verschlechtert ist, wenn die erste Ansprechzeit gleich der zweiten Hochdrehzahl-Ansprechzeit (THiS2) ist, die länger als die erste Hochdrehzahl-Ansprechzeit (THiS1) ist,
wobei die Beziehung 7 so angeordnet ist, dass in zumindest einem Teil des Hochdrehzahlbereichs die Steuereinrichtung (60) diagnostiziert, dass der Sauerstoffsensor (20) normal ist, wenn die zweite Ansprechzeit gleich der dritten Hochdrehzahl-Ansprechzeit (THiS3) ist, und die Steuereinrichtung (60) diagnostiziert, dass der Sauerstoffsensor (20) verschlechtert ist, wenn die zweite Ansprechzeit gleich der vierten Hochdrehzahl-Ansprechzeit (THiS4) ist, die länger als die dritte Hochdrehzahl-Ansprechzeit (THiS3) ist, in zumindest einem Teil eines dritten Niedrigdrehzahlbereichs (RLoS3), der in dem Niedrigdrehzahlbereich enthalten ist, die Steuereinrichtung (60) diagnostiziert, dass der Sauerstoffsensor (20) normal ist, wenn die zweite Ansprechzeit gleich der dritten Niedrigdrehzahl-Ansprechzeit (TLoS3) ist, die länger als die vierte Hochdrehzahl-Ansprechzeit (THiS4) ist, und die Steuereinrichtung (60) diagnostiziert, dass der Sauerstoffsensor (20) verschlechtert ist, wenn die zweite Ansprechzeit gleich der vierten Niedrigdrehzahl-Ansprechzeit (TLoS4) ist, die länger als die dritte Niedrigdrehzahl-Ansprechzeit (TLoS3) ist, und in zumindest einem Teil eines vierten Niedrigdrehzahlbereichs (RLoS4), der in der Motordrehzahl niedriger als der dritte Niedrigdrehzahlbereich (RLoS3) ist und in dem Niedrigdrehzahlbereich enthalten ist, die Steuereinrichtung (60) diagnostiziert, dass der Sauerstoffsensor (20) normal ist, wenn die zweite Ansprechzeit gleich einer siebenten Niedrigdrehzahl-Ansprechzeit (TLoS7) ist, die länger als die vierte Niedrigdrehzahl-Ansprechzeit (TLoS4) ist, und die Steuereinrichtung (60) diagnostiziert, dass der Sauerstoffsensor (20) verschlechtert ist, wenn die zweite Ansprechzeit gleich einer achten Niedrigdrehzahl-Ansprechzeit (TLoS8) ist, die länger als die siebente Niedrigdrehzahl-Ansprechzeit (TLoS7) ist,
wobei die Beziehung 8 so angeordnet ist, dass in zumindest einem Teil eines dritten Hochdrehzahlbereichs (RHiS3), der in dem Hochdrehzahlbereich enthalten ist, die Steuereinrichtung (60) diagnostiziert, dass der Sauerstoffsensor (20) normal ist, wenn die zweite Ansprechzeit gleich der dritten Hochdrehzahl-Ansprechzeit (THiS3) ist, und die Steuereinrichtung (60) diagnostiziert, dass der Sauerstoffsensor (20) verschlechtert ist, wenn die zweite Ansprechzeit gleich der vierten Hochdrehzahl-Ansprechzeit (THiS4) ist, die länger als die dritte Hochdrehzahl-Ansprechzeit (THiS3) ist, in zumindest einem Teil eines vierten Hochdrehzahlbereichs (RHiS4), der in der Motordrehzahl niedriger als der dritte Hochdrehzahlbereich (RHiS3) ist und in dem Hochdrehzahlbereich enthalten ist, die Steuereinrichtung (60) diagnostiziert, dass der Sauerstoffsensor (20) normal ist, wenn die zweite Ansprechzeit gleich einer siebenten Hochdrehzahl-Ansprechzeit (THiS7) ist, die länger als die vierte Hochdrehzahl-Ansprechzeit (THiS4) ist, und die Steuereinrichtung (60) diagnostiziert, dass der Sauerstoffsensor (20) verschlechtert ist, wenn die zweite Ansprechzeit gleich einer achten Hochdrehzahl-Ansprechzeit (THiS8) ist, die länger als die siebente Hochdrehzahl-Ansprechzeit (THiS7) ist, und in zumindest einem Teil des Niedrigdrehzahlbereichs die Steuereinrichtung (60) diagnostiziert, dass der Sauerstoffsensor (20) normal ist, wenn die zweite Ansprechzeit gleich der dritten Niedrigdrehzahl-Ansprechzeit (TLoS3) ist, die länger als die achte Hochdrehzahl-Ansprechzeit (THiS8) ist, und die Steuereinrichtung (60) diagnostiziert, dass der Sauerstoffsensor (20) verschlechtert ist, wenn die zweite Ansprechzeit gleich der vierten Niedrigdrehzahl-Ansprechzeit (TLoS4) ist, die länger als die dritte Niedrigdrehzahl-Ansprechzeit (TLoS3) ist,
wobei die Beziehung 9 so angeordnet ist, dass in zumindest einem Teil des Niedriglastbereichs die Steuereinrichtung (60) diagnostiziert, dass der Sauerstoffsensor (20) normal ist, wenn die dritte Ansprechzeit gleich der ersten Niedriglast-Ansprechzeit (TLoL1) ist, und die Steuereinrichtung (60) diagnostiziert, dass der Sauerstoffsensor (20) verschlechtert ist, wenn die dritte Ansprechzeit gleich der zweiten Niedriglast-Ansprechzeit (TLoL2) ist, die länger als die erste Niedriglast-Ansprechzeit (TLoL1) ist, in zumindest einem Teil eines ersten Hochlastbereichs (RHiL1), der in dem Hochlastbereich enthalten ist, die Steuereinrichtung (60) diagnostiziert, dass der Sauerstoffsensor (20) normal ist, wenn die dritte Ansprechzeit gleich der ersten Hochlast-Ansprechzeit (THiL1) ist, die länger als die zweite Niedriglast-Ansprechzeit (TLoL2) ist, und die Steuereinrichtung (60) diagnostiziert, dass der Sauerstoffsensor (20) verschlechtert ist, wenn die dritte Ansprechzeit gleich der zweiten Hochlast-Ansprechzeit (THiL2) ist, die länger als die erste Hochlast-Ansprechzeit (THiL1) ist, und in zumindest einem Teil eines zweiten Hochlastbereichs (RHiL2), der in der Motorlast höher als der erste Hochlastbereich (RHiL1) ist und in dem Hochlastbereich enthalten ist, die Steuereinrichtung (60) diagnostiziert, dass der Sauerstoffsensor (20) normal ist, wenn die dritte Ansprechzeit gleich einer fünften Hochlast-Ansprechzeit (THiL5) ist, die länger als die zweite Niedriglast-Ansprechzeit (TLoL2) ist, und die Steuereinrichtung (60) diagnostiziert, dass der Sauerstoffsensor (20) verschlechtert ist, wenn die dritte Ansprechzeit gleich einer sechsten Hochlast-Ansprechzeit (THiL6) ist, die länger als die fünfte Hochlast-Ansprechzeit (THiL5) ist,
wobei die Beziehung 10 so angeordnet ist, dass in zumindest einem Teil eines Niedriglastbereichs, der in dem Niedriglastbereich enthalten ist, die Steuereinrichtung (60) diagnostiziert, dass der Sauerstoffsensor (20) normal ist, wenn die dritte Ansprechzeit gleich der ersten Niedriglast-Ansprechzeit (TLoL1) ist, und die Steuereinrichtung (60) diagnostiziert, dass der Sauerstoffsensor (20) verschlechtert ist, wenn die dritte Ansprechzeit gleich der zweiten Niedriglast-Ansprechzeit (TLoL2) ist, die länger als die erste Niedriglast-Ansprechzeit (TLoL1) ist, in zumindest einem Teil eines zweiten Niedriglastbereichs (RLoL2), der in der Motorlast höher als der erste Niedriglastbereich (RLoL1) ist und in dem Niedriglastbereich enthalten ist, die Steuereinrichtung (60) diagnostiziert, dass der Sauerstoffsensor (20) normal ist, wenn die dritte Ansprechzeit gleich einer fünften Niedriglast-Ansprechzeit (TLoL5) ist, die länger als die zweite Niedriglast-Ansprechzeit (TLoL2) ist, und die Steuereinrichtung (60) diagnostiziert, dass der Sauerstoffsensor (20) verschlechtert ist, wenn die dritte Ansprechzeit gleich einer sechsten Niedriglast-Ansprechzeit (TLoL6) ist, die länger als die fünfte Niedriglast-Ansprechzeit (TLoL5) ist, und in zumindest einem Teil des Hochlastbereichs die Steuereinrichtung (60) diagnostiziert, dass der Sauerstoffsensor (20) normal ist, wenn die dritte Ansprechzeit gleich der ersten Hochlast-Ansprechzeit (THiL1) ist, die länger als die sechste Niedriglast-Ansprechzeit (TLoL6) ist, und die Steuereinrichtung (60) diagnostiziert, dass der Sauerstoffsensor (20) verschlechtert ist, wenn die dritte Ansprechzeit gleich der zweiten Hochlast-Ansprechzeit (THiL2) ist, die länger als die erste Hochlast-Ansprechzeit (THiL1) ist,
wobei die Beziehung 11 so angeordnet ist, dass in zumindest einem Teil des Hochlastbereichs die Steuereinrichtung (60) diagnostiziert, dass der Sauerstoffsensor (20) normal ist, wenn die vierte Ansprechzeit gleich der dritten Hochlast-Ansprechzeit (THiL3) ist, und die Steuereinrichtung (60) diagnostiziert, dass der Sauerstoffsensor (20) verschlechtert ist, wenn die vierte Ansprechzeit gleich der vierten Hochlast-Ansprechzeit (THiL4) ist, die länger als die dritte Hochlast-Ansprechzeit (THiL3) ist, in zumindest einem Teil eines dritten Niedriglastbereichs (RLoL3), der in dem Niedriglastbereich enthalten ist, die Steuereinrichtung (60) diagnostiziert, dass der Sauerstoffsensor (20) normal ist, wenn die vierte Ansprechzeit gleich der dritten Niedriglast-Ansprechzeit (TLoL3) ist, die länger als die vierte Hochlast-Ansprechzeit (THiL4) ist, und die Steuereinrichtung (60) diagnostiziert, dass der Sauerstoffsensor (20) verschlechtert ist, wenn die vierte Ansprechzeit gleich der vierten Niedriglast-Ansprechzeit (TLoL4) ist, die länger als die dritte Niedriglast-Ansprechzeit (TLoL3) ist, und in zumindest einem Teil eines vierten Niedriglastbereichs (RLoL4), der in der Motorlast niedriger als der dritte Niedriglastbereich (RLoL3) ist und in dem Niedriglastbereich enthalten ist, die Steuereinrichtung (60) diagnostiziert, dass der Sauerstoffsensor (20) normal ist, wenn die vierte Ansprechzeit gleich einer siebenten Niedriglast-Ansprechzeit (TLoL7) ist, die länger als die vierte Niedriglast-Ansprechzeit (TLoL4) ist, und die Steuereinrichtung (60) diagnostiziert, dass der Sauerstoffsensor (20) verschlechtert ist, wenn die vierte Ansprechzeit gleich einer achten Niedriglast-Ansprechzeit (TLoL8) ist, die länger als die siebente Niedriglast-Ansprechzeit (TLoL7) ist, und
wobei die Beziehung 12 so angeordnet ist, dass in zumindest einem Teil eines dritten Hochlastbereichs (RHiL3), der in dem Hochlastbereich enthalten ist, die Steuereinrichtung (60) diagnostiziert, dass der Sauerstoffsensor (20) normal ist, wenn die vierte Ansprechzeit gleich der dritten Hochlast-Ansprechzeit (THiL3) ist, und die Steuereinrichtung (60) diagnostiziert, dass der Sauerstoffsensor (20) verschlechtert ist, wenn die vierte Ansprechzeit gleich der vierten Hochlast-Ansprechzeit (THiL4) ist, die länger als die dritte Hochlast-Ansprechzeit (THiL3) ist, in zumindest einem Teil eines vierten Hochlastbereichs (RHiL4), der in der Motorlast niedriger als der dritte Hochlastbereich (RHiL3) ist und in dem Hochlastbereich enthalten ist, die Steuereinrichtung (60) diagnostiziert, dass der Sauerstoffsensor (20) normal ist, wenn die vierte Ansprechzeit gleich einer siebenten Hochlast-Ansprechzeit (THiL7) ist, die länger als die vierte Hochlast-Ansprechzeit (THiL4) ist, und die Steuereinrichtung (60) diagnostiziert, dass der Sauerstoffsensor (20) verschlechtert ist, wenn die vierte Ansprechzeit gleich einer achten Hochlast-Ansprechzeit (THiL8) ist, die länger als die siebente Hochlast-Ansprechzeit (THiL7) ist, und in zumindest einem Teil des Niedriglastbereichs die Steuereinrichtung (60) diagnostiziert, dass der Sauerstoffsensor (20) normal ist, wenn die vierte Ansprechzeit gleich der dritten Niedriglast-Ansprechzeit (TLoL3) ist, die länger als die achte Hochlast-Ansprechzeit (THiL8) ist, und die Steuereinrichtung (60) diagnostiziert, dass der Sauerstoffsensor (20) verschlechtert ist, wenn die vierte Ansprechzeit gleich der vierten Niedriglast-Ansprechzeit (TLoL4) ist, die länger als die dritte Niedriglast-Ansprechzeit (TLoL3) ist.

5. Das Fahrzeug (1) gemäß einem der Ansprüche 1 bis 4, bei dem zumindest eine der ersten Ansprechzeit der Beziehung 1, der zweiten Ansprechzeit der Beziehung 2, der dritten Ansprechzeit der Beziehung 3 oder der vierten Ansprechzeit der Beziehung 4 eine Zeit ist, die für eine Änderung des Signals des Sauerstoffsensors (20) um den Einheitsbetrag erforderlich ist, wenn das Signal des Sauerstoffsensors (20) ansteigt.

6. Das Fahrzeug (1) gemäß einem der Ansprüche 1 bis 5, bei dem zumindest eine der ersten Ansprechzeit der Beziehung 1, der zweiten Ansprechzeit der Beziehung 2, der dritten Ansprechzeit der Beziehung 3 oder der vierten Ansprechzeit der Beziehung 4 eine Zeit ist, die für eine Änderung des Signals des Sauerstoffsensors (20) um den Einheitsbetrag erforderlich ist, wenn das Signal des Sauerstoffsensors (20) abfällt.

7. Das Fahrzeug (1) gemäß einem der Ansprüche 1 bis 6, bei dem die Steuereinrichtung (60) dazu konfiguriert ist, den Sauerstoffsensordiagnoseprozess durchzuführen, um zumindest eine der Beziehungen 13 bis 18 zu erfüllen, während die normale Kraftstoffsteuerung, die nicht die aktive Kraftstoffsteuerung zur Sauerstoffsensordiagnose ist, durchgeführt wird, die Kraftstoffabschaltsteuerung zum vorübergehenden Stoppen der Zufuhr des Kraftstoffs zu der zumindest einen Verbrennungskammer (11) nicht durchgeführt wird, und die Kraftstoffmengenvariationssteuerung, mit der die Kraftstoffmenge, die der zumindest einen Verbrennungskammer zugeführt wird, erhöht und verringert wird, durchgeführt wird,
wobei die Beziehung 13 so angeordnet ist, dass in einem ersten Lastbereich, der entweder zumindest ein Teil des Niedriglastbereichs ist, in dem die Motorlast niedrig ist, oder zumindest ein Teil des Hochlastbereichs ist, in dem die Motorlast hoch ist, und in zumindest einem Teil des Niedrigdrehzahlbereichs die Steuereinrichtung (60) diagnostiziert, dass der Sauerstoffsensor (20) normal ist, wenn die erste Ansprechzeit gleich der ersten Niedrigdrehzahl-Ansprechzeit (TLoS1) ist, und die Steuereinrichtung (60) diagnostiziert, dass der Sauerstoffsensor (20) verschlechtert ist, wenn die erste Ansprechzeit gleich der zweiten Niedrigdrehzahl-Ansprechzeit (TLoS2) ist, die länger als die erste Niedrigdrehzahl-Ansprechzeit (TLoS1) ist, und in dem ersten Lastbereich und zumindest einem Teil des Hochdrehzahlbereichs die Steuereinrichtung (60) diagnostiziert, dass der Sauerstoffsensor (20) normal ist, wenn die erste Ansprechzeit gleich der ersten Hochdrehzahl-Ansprechzeit (THiS1) ist, die länger als die zweite Niedrigdrehzahl-Ansprechzeit (TLoS2) ist, und die Steuereinrichtung (60) diagnostiziert, dass der Sauerstoffsensor (20) verschlechtert ist, wenn die erste Ansprechzeit gleich der zweiten Hochdrehzahl-Ansprechzeit (THiS2) ist, die länger als die erste Hochdrehzahl-Ansprechzeit (THiS1) ist,
wobei die Beziehung 14 so angeordnet ist, dass in einem zweiten Lastbereich, der entweder zumindest ein Teil des Niedriglastbereichs ist, in dem die Motorlast niedrig ist, oder zumindest ein Teil des Hochlastbereichs ist, in dem die Motorlast hoch ist, und in zumindest einem Teil des Hochdrehzahlbereichs die Steuereinrichtung (60) diagnostiziert, dass der Sauerstoffsensor (20) normal ist, wenn die zweite Ansprechzeit gleich der dritten Hochdrehzahl-Ansprechzeit (THiS3) ist, und die Steuereinrichtung (60) diagnostiziert, dass der Sauerstoffsensor (20) verschlechtert ist, wenn die zweite Ansprechzeit gleich der vierten Hochdrehzahl-Ansprechzeit (THiS4) ist, die länger als die dritte Hochdrehzahl-Ansprechzeit (THiS3) ist, und
in dem zweiten Lastbereich und zumindest einem Teil des Niedrigdrehzahlbereichs die Steuereinrichtung (60) diagnostiziert, dass der Sauerstoffsensor (20) normal ist, wenn die zweite Ansprechzeit gleich der dritten Niedrigdrehzahl-Ansprechzeit (TLoS3) ist, die länger als die vierte Hochdrehzahl-Ansprechzeit (THiS4) ist, und die Steuereinrichtung (60) diagnostiziert, dass der Sauerstoffsensor (20) verschlechtert ist, wenn die zweite Ansprechzeit gleich der vierten Niedrigdrehzahl-Ansprechzeit (TLoS4) ist, die länger als die dritte Niedrigdrehzahl-Ansprechzeit (TLoS3) ist,
wobei die Beziehung 15 so angeordnet ist, dass in einem ersten Drehzahlbereich, der entweder zumindest ein Teil des Niedrigdrehzahlbereichs ist, in dem die Motordrehzahl niedrig ist, oder zumindest ein Teil des Hochdrehzahlbereichs ist, in dem die Motordrehzahl hoch ist, und in zumindest einem Teil des Niedriglastbereichs die Steuereinrichtung (60) diagnostiziert, dass der Sauerstoffsensor (20) normal ist, wenn die dritte Ansprechzeit gleich der ersten Niedriglast-Ansprechzeit (TLoL1) ist, und die Steuereinrichtung (60) diagnostiziert, dass der Sauerstoffsensor (20) verschlechtert ist, wenn die dritte Ansprechzeit gleich der zweiten Niedriglast-Ansprechzeit (TLoL2) ist, die länger als die erste Niedriglast-Ansprechzeit (TLoL1) ist, und in dem ersten Drehzahlbereich und zumindest einem Teil des Hochlastbereichs die Steuereinrichtung (60) diagnostiziert, dass der Sauerstoffsensor (20) normal ist, wenn die dritte Ansprechzeit gleich der ersten Hochlast-Ansprechzeit (THiL1) ist, die länger als die zweite Niedriglast-Ansprechzeit (TLoL2) ist, und die Steuereinrichtung (60) diagnostiziert, dass der Sauerstoffsensor (20) verschlechtert ist, wenn die dritte Ansprechzeit gleich der zweiten Hochlast-Ansprechzeit (THiL2) ist, die länger als die erste Hochlast-Ansprechzeit (THiL1) ist,
wobei die Beziehung 16 so angeordnet ist, dass in einem zweiten Drehzahlbereich, der entweder zumindest ein Teil des Niedrigdrehzahlbereichs ist, in dem die Motordrehzahl niedrig ist, oder zumindest ein Teil des Hochdrehzahlbereichs ist, in dem die Motordrehzahl hoch ist, und in zumindest einem Teil des Hochlastbereichs die Steuereinrichtung (60) diagnostiziert, dass der Sauerstoffsensor (20) normal ist, wenn die vierte Ansprechzeit gleich der dritten Hochlast-Ansprechzeit (THiL3) ist, und die Steuereinrichtung (60) diagnostiziert, dass der Sauerstoffsensor (20) verschlechtert ist, wenn die vierte Ansprechzeit gleich der vierten Hochlast-Ansprechzeit (THiL4) ist, die länger als die dritte Hochlast-Ansprechzeit (THiL3) ist, und
in dem zweiten Drehzahlbereich und zumindest einem Teil des Niedriglastbereichs die Steuereinrichtung (60) diagnostiziert, dass der Sauerstoffsensor (20) normal ist, wenn die vierte Ansprechzeit gleich der dritten Niedriglast-Ansprechzeit (TLoL3) ist, die länger als die vierte Hochlast-Ansprechzeit (THiL4) ist, und die Steuereinrichtung (60) diagnostiziert, dass der Sauerstoffsensor (20) verschlechtert ist, wenn die vierte Ansprechzeit gleich der vierten Niedriglast-Ansprechzeit (TLoL4) ist, die länger als die dritte Niedriglast-Ansprechzeit (TLoL3) ist,
wobei die Beziehung 17 so angeordnet ist, dass in zumindest einem Teil des Niedriglastbereichs, in dem die Motorlast niedrig ist, und zumindest einem Teil des Niedrigdrehzahlbereichs die Steuereinrichtung (60) diagnostiziert, dass der Sauerstoffsensor (20) normal ist, wenn die erste Ansprechzeit gleich der ersten Niedrigdrehzahl-Ansprechzeit (TLoS1) ist, und die Steuereinrichtung (60) diagnostiziert, dass der Sauerstoffsensor (20) verschlechtert ist, wenn die erste Ansprechzeit gleich der zweiten Niedrigdrehzahl-Ansprechzeit (TLoS2) ist, die länger als die erste Niedrigdrehzahl-Ansprechzeit (TLoS1) ist, und in zumindest einem Teil des Hochlastbereichs, in dem die Motorlast hoch ist, und zumindest einem Teil des Hochdrehzahlbereichs die Steuereinrichtung (60) diagnostiziert, dass der Sauerstoffsensor (20) normal ist, wenn die erste Ansprechzeit gleich der ersten Hochdrehzahl-Ansprechzeit (THiS1) ist, die länger als die zweite Niedrigdrehzahl-Ansprechzeit (TLoS2) ist, und die Steuereinrichtung (60) diagnostiziert, dass der Sauerstoffsensor (20) verschlechtert ist, wenn die erste Ansprechzeit gleich der zweiten Hochdrehzahl-Ansprechzeit (THiS2) ist, die länger als die erste Hochdrehzahl-Ansprechzeit (THiS1) ist, und
wobei die Beziehung 18 so angeordnet ist, dass in zumindest einem Teil des Hochlastbereichs, in dem die Motorlast hoch ist, und zumindest einem Teil des Hochdrehzahlbereichs die Steuereinrichtung diagnostiziert, dass der Sauerstoffsensor (20) normal ist, wenn die zweite Ansprechzeit gleich der dritten Hochdrehzahl-Ansprechzeit (THiS3) ist, und die Steuereinrichtung (60) diagnostiziert, dass der Sauerstoffsensor (20) verschlechtert ist, wenn die zweite Ansprechzeit gleich der vierten Hochdrehzahl-Ansprechzeit (THiS4) ist, die länger als die dritte Hochdrehzahl-Ansprechzeit (THiS3) ist, und in zumindest einem Teil des Niedriglastbereichs, in dem die Motorlast niedrig ist, und zumindest einem Teil des Niedrigdrehzahlbereichs die Steuereinrichtung (60) diagnostiziert, dass der Sauerstoffsensor (20) normal ist, wenn die zweite Ansprechzeit gleich der dritten Niedrigdrehzahl-Ansprechzeit (TLoS3) ist, die länger als die vierte Hochdrehzahl-Ansprechzeit (THiS4) ist, und die Steuereinrichtung (60) diagnostiziert, dass der Sauerstoffsensor (20) verschlechtert ist, wenn die zweite Ansprechzeit gleich der vierten Niedrigdrehzahl-Ansprechzeit (TLoS4) ist, die länger als die dritte Niedrigdrehzahl-Ansprechzeit (TLoS3) ist.

## Revendications

1. Véhicule (1) comprenant :
un moteur (10) qui inclut au moins une chambre de combustion (11) ;
un capteur d'oxygène (20) qui est disposé au niveau d'un élément de passage d'échappement (30) par lequel passent les gaz d'échappement s'échappant de la au moins une chambre de combustion (11) et qui est configuré pour détecter la concentration en oxygène dans les gaz d'échappement ;
un dispositif d'alimentation en carburant (50) qui est configuré pour apporter du carburant à la au moins une chambre de combustion (11) ; et
un dispositif de commande (60) qui est configuré pour effectuer un processus de diagnostic de capteur d'oxygène consistant à diagnostiquer une détérioration du capteur d'oxygène (20) sur la base d'un signal du capteur d'oxygène (20) et est configuré pour effectuer une commande de carburant consistant à commander une quantité de carburant apportée à la au moins une chambre de combustion (11) en commandant le dispositif d'alimentation en carburant (50), et
lorsque
la commande de carburant consistant à commander la quantité de carburant apportée à la au moins une chambre de combustion (11) non pas pour diagnostiquer la détérioration du capteur d'oxygène (20) est appelée commande de carburant normale et
la commande de carburant consistant à commander la quantité de carburant apportée à la au moins une chambre de combustion pour diagnostiquer la détérioration du capteur d'oxygène, dans lequel au moins l'un parmi un cycle ou une amplitude d'augmentation et de diminution de la quantité de carburant apportée à la au moins une chambre de combustion est important par rapport à une commande de variation de quantité de carburant dans la commande de carburant normale, est appelée commande de carburant active de diagnostic de capteur d'oxygène,
le dispositif de commande (60) est configuré pour effectuer le processus de diagnostic de capteur d'oxygène consistant à diagnostiquer une détérioration du capteur d'oxygène (20) par un procédé de diagnostic variant conformément à au moins l'une parmi une vitesse de rotation de moteur ou une charge de moteur tandis que la commande de carburant normale qui n'est pas la commande de carburant active de diagnostic de capteur d'oxygène est effectuée, une commande de coupure de carburant consistant à arrêter temporairement l'apport du carburant à la au moins une chambre de combustion (11) n'est pas effectuée, et une commande de variation de quantité de carburant avec laquelle la quantité de carburant apportée à la au moins une chambre de combustion est augmentée et diminuée est effectuée,
dans le processus de diagnostic de capteur d'oxygène, le dispositif de commande (60) est configuré pour diagnostiquer une détérioration du capteur d'oxygène (20) en comparant une valeur calculée liée à la réactivité du capteur d'oxygène (20) à un seuil changé conformément à au moins l'une parmi la vitesse de rotation de moteur ou la charge de moteur, ou pour diagnostiquer une détérioration du capteur d'oxygène (20) en comparant, à un seuil, une valeur obtenue en corrigeant une valeur calculée liée à la réactivité du capteur d'oxygène (20) conformément à au moins l'une parmi la vitesse de rotation de moteur ou la charge de moteur,
le dispositif de commande (60) est configuré pour effectuer le processus de diagnostic de capteur d'oxygène pour satisfaire au moins l'une des relations 1 à 4 tandis que la commande de carburant normale qui n'est pas la commande de carburant active de diagnostic de capteur d'oxygène est effectuée, la commande de coupure de carburant n'est pas effectuée et la commande de variation de quantité de carburant est effectuée,
lors de la réalisation du processus de diagnostic de capteur d'oxygène pour satisfaire la relation 1 ou 2, le dispositif de commande diagnostique par le procédé de diagnostic variant conformément au moins à la vitesse de rotation de moteur, et lors de la réalisation du processus de diagnostic de capteur d'oxygène pour satisfaire la relation 3 ou 4, le dispositif de commande diagnostique par le procédé de diagnostic variant conformément au moins à la charge de moteur,
la relation 1 étant conçue de telle sorte que, dans au moins une partie d'une plage à faible rotation dans laquelle la vitesse de rotation de moteur est faible, le dispositif de commande (60) diagnostique que le capteur d'oxygène (20) est normal lorsqu'un premier temps de réponse qui est un temps requis pour un changement d'un signal du capteur d'oxygène (20) d'une quantité unitaire est égal à un premier temps de réponse à faible rotation (TLoS1), et le dispositif de commande (60) diagnostique que le capteur d'oxygène (20) est détérioré lorsque le premier temps de réponse est égal à un deuxième temps de réponse à faible rotation (TLoS2) qui est plus long que le premier temps de réponse à faible rotation (TLoS1), et dans au moins une partie d'une plage à rotation élevée dans laquelle la vitesse de rotation de moteur est élevée, le dispositif de commande (60) diagnostique que le capteur d'oxygène (20) est normal lorsque le premier temps de réponse est égal à un premier temps de réponse à rotation élevée (THiS1) qui est plus long que le deuxième temps de réponse à faible rotation (TLoS2), et le dispositif de commande (60) diagnostique que le capteur d'oxygène (20) est détérioré lorsque le premier temps de réponse est égal à un deuxième temps de réponse à rotation élevée (THiS2) qui est plus long que le premier temps de réponse à rotation élevée (THiS1),
la relation 2 étant conçue de telle sorte que, dans au moins une partie de la plage à rotation élevée dans laquelle la vitesse de rotation de moteur est élevée, le dispositif de commande (60) diagnostique que le capteur d'oxygène (20) est normal lorsqu'un deuxième temps de réponse qui est un temps requis pour un changement d'un signal du capteur d'oxygène (20) d'une quantité unitaire est égal à un troisième temps de réponse à rotation élevée (THiS3), et le dispositif de commande (60) diagnostique que le capteur d'oxygène (20) est détérioré lorsque le deuxième temps de réponse est égal à un quatrième temps de réponse à rotation élevée (THiS4) qui est plus long que le troisième temps de réponse à rotation élevée (THiS3), et dans au moins une partie d'une plage à faible rotation dans laquelle la vitesse de rotation de moteur est faible, le dispositif de commande (60) diagnostique que le capteur d'oxygène (20) est normal lorsque le deuxième temps de réponse est égal à un troisième temps de réponse à faible rotation (TLoS3) qui est plus long que le quatrième temps de réponse à rotation élevée (THiS4), et le dispositif de commande (60) diagnostique que le capteur d'oxygène (20) est détérioré lorsque le deuxième temps de réponse est égal à un quatrième temps de réponse à faible rotation (TLoS4) qui est plus long que le troisième temps de réponse à faible rotation (TLoS3),
la relation 3 étant conçue de telle sorte que, dans au moins une partie d'une plage à faible charge dans laquelle la charge de moteur est faible, le dispositif de commande (60) diagnostique que le capteur d'oxygène (20) est normal lorsqu'un troisième temps de réponse qui est un temps requis pour un changement d'un signal du capteur d'oxygène (20) d'une quantité unitaire est égal à un premier temps de réponse à faible charge (TLoL1), et le dispositif de commande (60) diagnostique que le capteur d'oxygène (20) est détérioré lorsque le troisième temps de réponse est égal à un deuxième temps de réponse à faible charge (TLoL2) qui est plus long que le premier temps de réponse à faible charge (TLoL1), et dans au moins une partie d'une plage à charge élevée dans laquelle la charge de moteur est élevée, le dispositif de commande (60) diagnostique que le capteur d'oxygène (20) est normal lorsque le troisième temps de réponse est égal à un premier temps de réponse à charge élevée (THiL1) qui est plus long que le deuxième temps de réponse à faible charge (TLoL2), et le dispositif de commande (60) diagnostique que le capteur d'oxygène (20) est détérioré lorsque le troisième temps de réponse est égal à un deuxième temps de réponse à charge élevée (THiL2) qui est plus long que le premier temps de réponse à charge élevée (THiL1), et
la relation 4 étant conçue de telle sorte que, dans au moins une partie de la plage à charge élevée dans laquelle la charge de moteur est élevée, le dispositif de commande (60) diagnostique que le capteur d'oxygène (20) est normal lorsqu'un quatrième temps de réponse qui est un temps requis pour un changement d'un signal du capteur d'oxygène (20) d'une quantité unitaire est égal à un troisième temps de réponse à charge élevée (THiL3), et le dispositif de commande (60) diagnostique que le capteur d'oxygène (20) est détérioré lorsque le quatrième temps de réponse est égal à un quatrième temps de réponse à charge élevée (THiL4) qui est plus long que le troisième temps de réponse à charge élevée (THiL3), et dans au moins une partie d'une plage à faible charge dans laquelle la charge de moteur est faible, le dispositif de commande (60) diagnostique que le capteur d'oxygène (20) est normal lorsque le quatrième temps de réponse est égal à un troisième temps de réponse à faible charge (TLoL3) qui est plus long que le quatrième temps de réponse à charge élevée (THiL4), et le dispositif de commande (60) diagnostique que le capteur d'oxygène (20) est détérioré lorsque le quatrième temps de réponse est égal à un quatrième temps de réponse à faible charge (TLoL4) qui est plus long que le troisième temps de réponse à faible charge (TLoL3).

2. Véhicule (1) selon la revendication 1, comprenant en outre
un catalyseur (21) qui est disposé dans l'élément de passage d'échappement (30) et est configuré pour purifier les gaz d'échappement,
le capteur d'oxygène (20) étant un capteur d'oxygène amont (20) qui est disposé en amont du catalyseur (21) dans une direction d'écoulement des gaz d'échappement dans l'élément de passage d'échappement (30) et est utilisé pour la commande de carburant.

3. Véhicule (1) selon la revendication 1 ou 2, dans lequel au moins un papillon des gaz (70) est prévu pour chacune de la au moins une chambre de combustion (11).

4. Véhicule (1) selon l'une quelconque des revendications 1 à 3, dans lequel le dispositif de commande (60) est configuré pour effectuer le processus de diagnostic de capteur d'oxygène pour satisfaire au moins l'une des relations 5 à 12 tandis que la commande de carburant normale qui n'est pas la commande de carburant active de diagnostic de capteur d'oxygène est effectuée, la commande de coupure de carburant consistant à arrêter temporairement l'apport de carburant à la au moins une chambre de combustion (11) n'est pas effectuée et la commande de variation de quantité de carburant avec laquelle la quantité de carburant apportée à la au moins une chambre de combustion est augmentée et diminuée est effectuée,
la relation 5 étant conçue de telle sorte que, dans au moins une partie de la plage à faible rotation, le dispositif de commande (60) diagnostique que le capteur d'oxygène (20) est normal lorsque le premier temps de réponse est égal au premier temps de réponse à faible rotation (TLoS1), et le dispositif de commande (60) diagnostique que le capteur d'oxygène (20) est détérioré lorsque le premier temps de réponse est égal au deuxième temps de réponse à faible rotation (TLoS2) qui est plus long que le premier temps de réponse à faible rotation (TLoS1), dans au moins une partie d'une première plage à rotation élevée (RHiS1) incluse dans la plage à rotation élevée, le dispositif de commande (60) diagnostique que le capteur d'oxygène (20) est normal lorsque le premier temps de réponse est égal au premier temps de réponse à rotation élevée (THiS1) qui est plus long que le deuxième temps de réponse à faible rotation (TLoS2), et le dispositif de commande (60) diagnostique que le capteur d'oxygène (20) est détérioré lorsque le premier temps de réponse est égal au deuxième temps de réponse à rotation élevée (THiS2) qui est plus long que le premier temps de réponse à rotation élevée (THiS1), et dans au moins une partie d'une deuxième plage à rotation élevée (RHiS2) qui est plus élevée en vitesse de rotation de moteur que la première plage à rotation élevée (RHiS1) et est incluse dans la plage à rotation élevée, le dispositif de commande (60) diagnostique que le capteur d'oxygène (20) est normal lorsque le premier temps de réponse est égal à un cinquième temps de réponse à rotation élevée (THiS5) qui est plus long que le deuxième temps de réponse à faible rotation (TLoS2), et le dispositif de commande (60) diagnostique que le capteur d'oxygène (20) est détérioré lorsque le premier temps de réponse est égal à un sixième temps de réponse à rotation élevée (THiS6) qui est plus long que le cinquième temps de réponse à rotation élevée (THiS5),
la relation 6 étant conçue de telle sorte que, dans au moins une partie d'une première plage à faible rotation (RLoS1) incluse dans la plage à faible rotation, le dispositif de commande (60) diagnostique que le capteur d'oxygène (20) est normal lorsque le premier temps de réponse est égal au premier temps de réponse à faible rotation (TLoS1), et le dispositif de commande (60) diagnostique que le capteur d'oxygène (20) est détérioré lorsque le premier temps de réponse est égal au deuxième temps de réponse à faible rotation (TLoS2) qui est plus long que le premier temps de réponse à faible rotation (TLoS1), dans au moins une partie d'une deuxième plage à faible rotation (RLoS2) qui est plus élevée en vitesse de rotation de moteur que la première plage à faible rotation (RLoS1) et est incluse dans la plage à faible rotation, le dispositif de commande (60) diagnostique que le capteur d'oxygène (20) est normal lorsque le premier temps de réponse est égal à un cinquième temps de réponse à faible rotation (TLoS5) qui est plus long que le deuxième temps de réponse à faible rotation (TLoS2), et le dispositif de commande (60) diagnostique que le capteur d'oxygène (20) est détérioré lorsque le premier temps de réponse est égal à un sixième temps de réponse à faible rotation (TLoS6) qui est plus long que le cinquième temps de réponse à faible rotation (TLoS5), et dans au moins une partie de la plage à rotation élevée, le dispositif de commande (60) diagnostique que le capteur d'oxygène (20) est normal lorsque le premier temps de réponse est égal au premier temps de réponse à rotation élevée (THiS1) qui est plus long que le sixième temps de réponse à faible rotation (TLoS6), et le dispositif de commande (60) diagnostique que le capteur d'oxygène (20) est détérioré lorsque le premier temps de réponse est égal au deuxième temps de réponse à rotation élevée (THiS2) qui est plus long que le premier temps de réponse à rotation élevée (THiS1),
la relation 7 étant conçue de telle sorte que, dans au moins une partie de la plage à rotation élevée, le dispositif de commande (60) diagnostique que le capteur d'oxygène (20) est normal lorsque le deuxième temps de réponse est égal au troisième temps de réponse à rotation élevée (THiS3), et le dispositif de commande (60) diagnostique que le capteur d'oxygène (20) est détérioré lorsque le deuxième temps de réponse est égal au quatrième temps de réponse à rotation élevée (THiS4) qui est plus long que le troisième temps de réponse à rotation élevée (THiS3), dans au moins une partie d'une troisième plage à faible rotation (RLoS3) incluse dans la plage à faible rotation, le dispositif de commande (60) diagnostique que le capteur d'oxygène (20) est normal lorsque le deuxième temps de réponse est égal au troisième temps de réponse à faible rotation (TLoS3) qui est plus long que le quatrième temps de réponse à rotation élevée (THiS4), et le dispositif de commande (60) diagnostique que le capteur d'oxygène (20) est détérioré lorsque le deuxième temps de réponse est égal au quatrième temps de réponse à faible rotation (TLoS4) qui est plus long que le troisième temps de réponse à faible rotation (TLoS3), et dans au moins une partie d'une quatrième plage à faible rotation (RLoS4) qui est plus faible en vitesse de rotation de moteur que la troisième plage à faible rotation (RLoS3) et est incluse dans la plage à faible rotation, le dispositif de commande (60) diagnostique que le capteur d'oxygène (20) est normal lorsque le deuxième temps de réponse est égal à un septième temps de réponse à faible rotation (TLoS7) qui est plus long que le quatrième temps de réponse à faible rotation (TLoS4), et le dispositif de commande (60) diagnostique que le capteur d'oxygène (20) est détérioré lorsque le deuxième temps de réponse est égal à un huitième temps de réponse à faible rotation (TLoS8) qui est plus long que le septième temps de réponse à faible rotation (TLoS7),
la relation 8 étant conçue de telle sorte que, dans au moins une partie d'une troisième plage à rotation élevée (RHiS3) incluse dans la plage à rotation élevée, le dispositif de commande (60) diagnostique que le capteur d'oxygène (20) est normal lorsque le deuxième temps de réponse est égal au troisième temps de réponse à rotation élevée (THiS3), et le dispositif de commande (60) diagnostique que le capteur d'oxygène (20) est détérioré lorsque le deuxième temps de réponse est égal au quatrième temps de réponse à rotation élevée (THiS4) qui est plus long que le troisième temps de réponse à rotation élevée (THiS3), dans au moins une partie d'une quatrième plage à rotation élevée (RHiS4) qui est plus faible en vitesse de rotation de moteur que la troisième plage à rotation élevée (RHiS3) et est incluse dans la plage à rotation élevée, le dispositif de commande (60) diagnostique que le capteur d'oxygène (20) est normal lorsque le deuxième temps de réponse est égal à un septième temps de réponse à rotation élevée (THiS7) qui est plus long que le quatrième temps de réponse à rotation élevée (THiS4), et le dispositif de commande (60) diagnostique que le capteur d'oxygène (20) est détérioré lorsque le deuxième temps de réponse est égal à un huitième temps de réponse à rotation élevée (THiS8) qui est plus long que le septième temps de réponse à rotation élevée (THiS7), et dans au moins une partie de la plage à faible rotation, le dispositif de commande (60) diagnostique que le capteur d'oxygène (20) est normal lorsque le deuxième temps de réponse est égal au troisième temps de réponse à rotation élevée (TLoS3) qui est plus long que le huitième temps de réponse à rotation élevée (THiS8), et le dispositif de commande (60) diagnostique que le capteur d'oxygène (20) est détérioré lorsque le deuxième temps de réponse est égal au quatrième temps de réponse à faible rotation (TLoS4) qui est plus long que le troisième temps de réponse à faible rotation (TLoS3),
la relation 9 étant conçue de telle sorte que, dans au moins une partie de la plage à faible charge, le dispositif de commande (60) diagnostique que le capteur d'oxygène (20) est normal lorsque le troisième temps de réponse est égal au premier temps de réponse à faible charge (TLoL1), et le dispositif de commande (60) diagnostique que le capteur d'oxygène (20) est détérioré lorsque le troisième temps de réponse est égal au deuxième temps de réponse à faible charge (TLoL2) qui est plus long que le premier temps de réponse à faible charge (TLoL1), dans au moins une partie d'une première plage à charge élevée (RHiL1) incluse dans la plage à charge élevée, le dispositif de commande (60) diagnostique que le capteur d'oxygène (20) est normal lorsque le troisième temps de réponse est égal au premier temps de réponse à charge élevée (THiL1) qui est plus long que le deuxième temps de réponse à faible charge (TLoL2), et le dispositif de commande (60) diagnostique que le capteur d'oxygène (20) est détérioré lorsque le troisième temps de réponse est égal au deuxième temps de réponse à charge élevée (THiL2) qui est plus long que le premier temps de réponse à charge élevée (THiL1), et dans au moins une partie d'une deuxième plage à charge élevée (RHiL2) qui est plus élevée en charge de moteur que la première plage à charge élevée (RHiL1) et est incluse dans la plage à charge élevée, le dispositif de commande (60) diagnostique que le capteur d'oxygène (20) est normal lorsque le troisième temps de réponse est égal à un cinquième temps de réponse à charge élevée (THiL5) qui est plus long que le troisième temps de réponse à faible charge (TLoL2), et le dispositif de commande (60) diagnostique que le capteur d'oxygène (20) est détérioré lorsque le troisième temps de réponse est égal à un sixième temps de réponse à charge élevée (THiL6) qui est plus long que le cinquième temps de réponse à charge élevée (THiL5),
la relation 10 étant conçue de telle sorte que, dans au moins une partie d'une plage à faible charge incluse dans la plage à faible charge, le dispositif de commande (60) diagnostique que le capteur d'oxygène (20) est normal lorsque le troisième temps de réponse est égal au premier temps de réponse à faible charge (TLoL1), et le dispositif de commande (60) diagnostique que le capteur d'oxygène (20) est détérioré lorsque le troisième temps de réponse est égal au deuxième temps de réponse à faible charge (TLoL2) qui est plus long que le premier temps de réponse à faible charge (TLoL1), dans au moins une partie d'une deuxième plage à faible charge (RLoL2) qui est plus élevée en charge de moteur que la première plage à faible charge (RLoL1) et est incluse dans la plage à faible charge, le dispositif de commande (60) diagnostique que le capteur d'oxygène (20) est normal lorsque le troisième temps de réponse est égal à un cinquième premier temps de réponse à faible charge (TLoL5) qui est plus long que le deuxième temps de réponse à faible charge (TLoL2), et le dispositif de commande (60) diagnostique que le capteur d'oxygène (20) est détérioré lorsque le troisième temps de réponse est égal à un sixième temps de réponse à faible charge (TLoL6) qui est plus long que le cinquième temps de réponse à faible charge (TLoL5), et dans au moins une partie de la plage à charge élevée, le dispositif de commande (60) diagnostique que le capteur d'oxygène (20) est normal lorsque le troisième temps de réponse est égal au premier temps de réponse à charge élevée (THiL1) qui est plus long que le sixième temps de réponse à faible charge (TLoL6), et le dispositif de commande (60) diagnostique que le capteur d'oxygène (20) est détérioré lorsque le troisième temps de réponse est égal au deuxième temps de réponse à charge élevée (THiL2) qui est plus long que le premier temps de réponse à charge élevée (THiL1),
la relation 11 étant conçue de telle sorte que, dans au moins une partie de la plage à charge élevée, le dispositif de commande (60) diagnostique que le capteur d'oxygène (20) est normal lorsque le quatrième temps de réponse est égal au troisième temps de réponse à charge élevée (THiL3), et le dispositif de commande (60) diagnostique que le capteur d'oxygène (20) est détérioré lorsque le quatrième temps de réponse est égal au quatrième temps de réponse à charge élevée (THiL4) qui est plus long que le troisième temps de réponse à charge élevée (THiL3), dans au moins une partie d'une troisième plage à faible charge (RLoL3) incluse dans la plage à faible charge, le dispositif de commande (60) diagnostique que le capteur d'oxygène (20) est normal lorsque le quatrième temps de réponse est égal au troisième temps de réponse à faible charge (TLoL3) qui est plus long que le quatrième temps de réponse à charge élevée (THiL4), et le dispositif de commande (60) diagnostique que le capteur d'oxygène (20) est détérioré lorsque le quatrième temps de réponse est égal au quatrième temps de réponse à faible charge (TLoL4) qui est plus long que le troisième temps de réponse à faible charge (TLoL3), et dans au moins une partie d'une quatrième plage à faible charge (RLoL4) qui est plus faible en charge de moteur que la troisième plage à faible charge (RLoL3) et incluse dans la plage à faible charge, le dispositif de commande (60) diagnostique que le capteur d'oxygène (20) est normal lorsque le quatrième temps de réponse est égal à un septième temps de réponse à faible charge (TLoL7) qui est plus long que le quatrième temps de réponse à faible charge (TLoL4), et le dispositif de commande (60) diagnostique que le capteur d'oxygène (20) est détérioré lorsque le quatrième temps de réponse est égal à un huitième temps de réponse à faible charge (TLoL8) qui est plus long que le septième temps de réponse à faible charge (TLoL7), et
la relation 12 étant conçue de telle sorte que, dans au moins une partie d'une troisième plage à charge élevée (RHiL3) incluse dans la plage à charge élevée, le dispositif de commande (60) diagnostique que le capteur d'oxygène (20) est normal lorsque le quatrième temps de réponse est égal au troisième temps de réponse à charge élevée (THiL3), et le dispositif de commande (60) diagnostique que le capteur d'oxygène (20) est détérioré lorsque le quatrième temps de réponse est égal au quatrième temps de réponse à charge élevée (THiL4) qui est plus long que le troisième temps de réponse à charge élevée (THiL3), dans au moins une partie d'une quatrième plage à charge élevée (RHiL4) qui est plus faible en charge de moteur que la troisième plage à charge élevée (RHiL3) et incluse dans la plage à charge élevée, le dispositif de commande (60) diagnostique que le capteur d'oxygène (20) est normal lorsque le quatrième temps de réponse est égal à un septième temps de réponse à charge élevée (THiL7) qui est plus long que le quatrième temps de réponse à charge élevée (THiL4), et le dispositif de commande (60) diagnostique que le capteur d'oxygène (20) est détérioré lorsque le quatrième temps de réponse est égal à un huitième temps de réponse à charge élevée (THiL8) qui est plus long que le septième temps de réponse à charge élevée (THiL7), et dans au moins une partie de la plage à faible charge, le dispositif de commande (60) diagnostique que le capteur d'oxygène (20) est normal lorsque le quatrième temps de réponse est égal au troisième temps de réponse à faible charge (TLoL3) qui est plus long que le huitième temps de réponse à charge élevée (THiL8), et le dispositif de commande (60) diagnostique que le capteur d'oxygène (20) est détérioré lorsque le quatrième temps de réponse est égal au quatrième temps de réponse à faible charge (TLoL4) qui est plus long que le troisième temps de réponse à faible charge (TLoL3).

5. Véhicule (1) selon l'une quelconque des revendications 1 à 4, dans lequel au moins l'un parmi le premier temps de réponse de la relation 1, le deuxième temps de réponse de la relation 2, le troisième temps de réponse de la relation 3 ou le quatrième temps de réponse de la relation 4 est un temps requis pour un changement du signal du capteur d'oxygène (20) de la quantité unitaire lorsque le signal du capteur d'oxygène (20) est à la hausse.

6. Véhicule (1) selon l'une quelconque des revendications 1 à 5, dans lequel au moins l'un parmi le premier temps de réponse de la relation 1, le deuxième temps de réponse de la relation 2, le troisième temps de réponse de la relation 3 ou le quatrième temps de réponse de la relation 4 est un temps requis pour un changement du signal du capteur d'oxygène (20) de la quantité unitaire lorsque le signal du capteur d'oxygène (20) est à la baisse.

7. Véhicule (1) selon l'une quelconque des revendications 1 à 6, dans lequel le dispositif de commande (60) est configuré pour effectuer le processus de diagnostic de capteur d'oxygène pour satisfaire au moins l'une des relations 13 à 18 tandis que la commande de carburant normale qui n'est pas la commande de carburant active de diagnostic de capteur d'oxygène est effectuée, la commande de coupure de carburant consistant à arrêter temporairement l'apport de carburant à la au moins une chambre de combustion (11) n'est pas effectuée et la commande de variation de quantité de carburant avec laquelle la quantité de carburant apportée à la au moins une chambre de combustion est augmentée et diminuée est effectuée,
la relation 13 étant conçue de telle sorte que, dans une première plage de charge qui est au moins une partie de la plage à faible charge dans laquelle la charge de moteur est faible ou au moins une partie de la plage à charge élevée dans laquelle la charge de moteur est élevée et dans au moins une partie de la plage à faible rotation, le dispositif de commande (60) diagnostique que le capteur d'oxygène (20) est normal lorsque le premier temps de réponse est égal au premier temps de réponse à faible rotation (TLoS1), et le dispositif de commande (60) diagnostique que le capteur d'oxygène (20) est détérioré lorsque le premier temps de réponse est égal au deuxième temps de réponse à faible rotation (TLoS2) qui est plus long que le premier temps de réponse à faible rotation (TLoS1), et dans la première plage de charge et au moins une partie de la plage à rotation élevée, le dispositif de commande (60) diagnostique que le capteur d'oxygène (20) est normal lorsque le premier temps de réponse est égal au premier temps de réponse à rotation élevée (THiS1) qui est plus long que le deuxième temps de réponse à faible rotation (TLoS2), et le dispositif de commande (60) diagnostique que le capteur d'oxygène (20) est détérioré lorsque le premier temps de réponse est égal au deuxième temps de réponse à rotation élevée (THiS2) qui est plus long que le premier temps de réponse à rotation élevée (THiS1),
la relation 14 étant conçue de telle sorte que, dans une deuxième plage de charge qui est au moins une partie de la plage à faible charge dans laquelle la charge de moteur est faible ou au moins une partie de la plage à charge élevée dans laquelle la charge de moteur est élevée et dans au moins une partie de la plage à rotation élevée, le dispositif de commande (60) diagnostique que le capteur d'oxygène (20) est normal lorsque le deuxième temps de réponse est égal au troisième temps de réponse à rotation élevée (THiS3), et le dispositif de commande (60) diagnostique que le capteur d'oxygène (20) est détérioré lorsque le deuxième temps de réponse est égal au quatrième temps de réponse à rotation élevée (THiS4) qui est plus long que le troisième temps de réponse à rotation élevée (THiS3), et
dans la deuxième plage de charge et au moins une partie de la plage à faible rotation, le dispositif de commande (60) diagnostique que le capteur d'oxygène (20) est normal lorsque le deuxième temps de réponse est égal au troisième temps de réponse à faible rotation (TLoS3) qui est plus long que le quatrième temps de réponse à rotation élevée (THiS4), et le dispositif de commande (60) diagnostique que le capteur d'oxygène (20) est détérioré lorsque le deuxième temps de réponse est égal au quatrième temps de réponse à faible rotation (TLoS4) qui est plus long que le troisième temps de réponse à faible rotation (TLoS3),
la relation 15 étant conçue de telle sorte que, dans une première plage de rotation qui est au moins une partie de la plage à faible rotation dans laquelle la vitesse de rotation de moteur est faible ou au moins une partie de la plage à rotation élevée dans laquelle la vitesse de rotation de moteur est élevée et dans au moins une partie de la plage à faible charge, le dispositif de commande (60) diagnostique que le capteur d'oxygène (20) est normal lorsque le troisième temps de réponse est égal au premier temps de réponse à faible charge (TLoL1), et le dispositif de commande (60) diagnostique que le capteur d'oxygène (20) est détérioré lorsque le troisième temps de réponse est égal au deuxième temps de réponse à faible charge (TLoL2) qui est plus long que le premier temps de réponse à faible charge (TLoL1), et dans la première plage de rotation et au moins une partie de la plage à charge élevée, le dispositif de commande (60) diagnostique que le capteur d'oxygène (20) est normal lorsque le troisième temps de réponse est égal au premier temps de réponse à charge élevée (THiL1) qui est plus long que le deuxième temps de réponse à faible charge (TLoL2), et le dispositif de commande (60) diagnostique que le capteur d'oxygène (20) est détérioré lorsque le troisième temps de réponse est égal au deuxième temps de réponse à charge élevée (THiL2) qui est plus long que le premier temps de réponse à charge élevée (THiL1),
la relation 16 étant conçue de telle sorte que, dans une deuxième plage de rotation qui est au moins une partie de la plage à faible rotation dans laquelle la vitesse de rotation de moteur est faible ou au moins une partie de la plage à rotation élevée dans laquelle la vitesse de rotation de moteur est élevée et dans au moins une partie de la plage à rotation élevée, le dispositif de commande (60) diagnostique que le capteur d'oxygène (20) est normal lorsque le quatrième temps de réponse est égal au troisième temps de réponse à charge élevée (THiL3), et le dispositif de commande (60) diagnostique que le capteur d'oxygène (20) est détérioré lorsque le quatrième temps de réponse est égal au quatrième temps de réponse à charge élevée (THiL4) qui est plus long que le troisième temps de réponse à charge élevée (THiL3), et
dans la deuxième plage de rotation et au moins une partie de la plage à faible charge, le dispositif de commande (60) diagnostique que le capteur d'oxygène (20) est normal lorsque le quatrième temps de réponse est égal au troisième temps de réponse à faible charge (TLoL3) qui est plus long que le quatrième temps de réponse à charge élevée (THiL4), et le dispositif de commande (60) diagnostique que le capteur d'oxygène (20) est détérioré lorsque le quatrième temps de réponse est égal au quatrième temps de réponse à faible charge (TLoL4) qui est plus long que le troisième temps de réponse à faible charge (TLoL3),
la relation 17 étant conçue de telle sorte que, dans au moins une partie de la plage à faible charge dans laquelle la charge de moteur est faible et au moins une partie de la plage à faible rotation, le dispositif de commande (60) diagnostique que le capteur d'oxygène (20) est normal lorsque le premier temps de réponse est égal au premier temps de réponse à faible rotation (TLoS1), et le dispositif de commande (60) diagnostique que le capteur d'oxygène (20) est détérioré lorsque le premier temps de réponse est égal au deuxième temps de réponse à faible rotation (TLoS2) qui est plus long que le premier temps de réponse à faible rotation (TLoS1), et dans au moins une partie de la plage à charge élevée dans laquelle la charge de moteur est élevée et au moins une partie de la plage à rotation élevée, le dispositif de commande (60) diagnostique que le capteur d'oxygène (20) est normal lorsque le premier temps de réponse est égal au premier temps de réponse à rotation élevée (THiS1) qui est plus long que le deuxième temps de réponse à faible rotation (TLoS2), et le dispositif de commande (60) diagnostique que le capteur d'oxygène (20) est détérioré lorsque le premier temps de réponse est égal au deuxième temps de réponse à rotation élevée (THiS2) qui est plus long que le premier temps de réponse à rotation élevée (THiS1), et
la relation 18 étant conçue de telle sorte que, dans au moins une partie de la plage à charge élevée dans laquelle la charge de moteur est élevée et au moins une partie de la plage à rotation élevée, le dispositif de commande diagnostique que le capteur d'oxygène (20) est normal lorsque le deuxième temps de réponse est égal au troisième temps de réponse à rotation élevée (THiS3), et le dispositif de commande (60) diagnostique que le capteur d'oxygène (20) est détérioré lorsque le deuxième temps de réponse est égal au quatrième temps de réponse à rotation élevée (THiS4) qui est plus long que le troisième temps de réponse à rotation élevée (THiS3), et dans au moins une partie de la plage à faible charge dans laquelle la charge de moteur est faible et au moins une partie de la plage à faible rotation, le dispositif de commande (60) diagnostique que le capteur d'oxygène (20) est normal lorsque le deuxième temps de réponse est égal au troisième temps de réponse à faible rotation (TLoS3) qui est plus long que le quatrième temps de réponse à rotation élevée (THiS4), et le dispositif de commande (60) diagnostique que le capteur d'oxygène (20) est détérioré lorsque le deuxième temps de réponse est égal au quatrième temps de réponse à faible rotation (TLoS4) qui est plus long que le troisième temps de réponse à faible rotation (TLoS3).
